# EUROPÄISCHE PATENTSCHRIFT

(11) **EP 1 560 895 B1**
(45) Veröffentlichungstag und Bekanntmachung des Hinweises auf die Patenterteilung: **05.07.2006**
(21) Anmeldenummer: 03779850.1
(22) Anmeldetag: 05.11.2003
(51) Int. Cl.: C09K 19/46

(54) **ELEKTROOPTISCHES LICHTSTEUERELEMENT, ELEKTROOPTISCHE ANZEIGE UND STEUERMEDIUM**
ELECTROOPTIC LIGHT CONTROL ELEMENT, ELECTROOPTIC DISPLAY AND CONTROL MEDIUM
ELEMENT DE COMMANDE DE LUMIERE ELECTRO-OPTIQUE, AFFICHAGE ELECTRO-OPTIQUE ET SUBSTANCE DE COMMANDE

(30) Priorität: 14.11.2002 DE 10253325
(43) Veröffentlichungstag der Anmeldung: 10.08.2005
(73) Patentinhaber: Merck Patent GmbH, 64293 Darmstadt (DE)
(72) Erfinder: HECKMEIER, Michael, 69502 Hemsbach (DE); CZANTA, Markus, 55116 Mainz (DE); GOETZ, Achim, 64665 Alsbach-Hähnlein (DE)
(86) Internationale Anmeldenummer: PCT/EP2003/012327
(87) Internationale Veröffentlichungsnummer: WO 2004/044093

(56) Entgegenhaltungen:
- EP-A- 1 142 977
- WO-A-01/58858
- WO-A-01/64814
- WO-A-02/44304
- WO-A-02/093244
- DE-A- 10 151 492
- US-A- 5 725 799
- US-A1- 2002 017 634

## Beschreibung

### Gebiet der Erfindung

Die vorliegende Erfindung betrifft Lichtsteuerelemente, diese enthaltende Anzeigen, sowie Lichtsteuermedien. Die Lichtsteuerelemente verwenden bevorzugt Steuermedien die bei bestimmten Temperaturen anisotrope Eigenschaften aufweisen, wie z. B. Flüssigkristalle. Die Lichtsteuerelemente werden bei einer Temperatur betrieben, bei der die Steuermedien in einer optisch isotropen Phase, bevorzugt in der Blauen Phase oder in der isotropen Phase vorliegen. In einer bevorzugten Ausführungsform werden die Lichtsteuerelemente bei einer Temperatur betrieben, bei der die Steuermedien in der Blauen Phase vorliegen. Lichtsteuerelemente die bei einer Temperatur betrieben werden, bei denen die Steuermedien in der isotropen Phase vorliegen, sind in DE 102 17 273.0 und DE 102 41 301.0 vom 04.09.2002 (einer weiteren bislang unveröffentlichten Patentanmeldungen der Anmelderin der vorliegenden Anmeldung) beschrieben.

Die vorliegende Erfindung betrifft ein elektrooptisches Lichtsteuerelement sowie solche Elemente enthaltende elektrooptische Anzeigen und Anzeigesysteme wie beispielsweise Fernsehbildschirme und Computermonitore, sowie die in den Lichtsteuerelementen verwendeten Steuermedien. Die erfindungsgemäßen Lichtsteuerelemente enthalten ein mesogenes Steuermedium, das beim Betrieb der Lichtsteuerelemente in einer optisch isotropen Phase vorliegt. Sie sind neben einem guten Kontrast und einer geringen Blickwinkelabhängigkeit des Kontrasts besonders durch sehr kurze Schaltzeiten bei gleichzeitig niedriger Betriebsspannung ausgezeichnet.

Insbesondere betrifft die vorliegende Erfindung mesogene Medien und deren Verwendung als Steuermedien in derartigen Lichtsteuerelementen.

### Aufgabe und Stand der Technik

Konventionelle elektrooptischen Flüssigkristallanzeigen sind allgemein bekannt. Sie werden bei einer Temperatur betrieben, bei der sich das Steuermedium in einer in der Regel anisotropen Mesophase befindet. Bei den meisten Anzeigetypen werden die Steuermedien in der nematischen Phase verwendet. In der anisotropen Mesophase haben die Steuermedien bereits anisotrope Eigenschaften, wie zum Beispiel eine Doppelbrechung (Δn). Diese wird nicht erst durch ein elektrisches Feld induziert. Am weitesten verbreitet sind TN- (Englisch: "twisted nematic") und STN-(Englisch: "super twisted nematic") Anzeigen. Die Flüssigkristallzellen dieser Anzeigen haben Elektroden auf den Substraten auf den beiden einander gegenüberliegenden Seiten des Flüssigkristallmediums. Somit ist das elektrische Feld im wesentlichen vertikal zur Flüssigkristallschicht. Insbesondere die zuerst genannten Anzeigen werden in Kombination mit einer TFT (Englisch: "thin film transistor") Ansteuerung für Anzeigen mit großem Informationsgehalt und großer Auflösung verwendet. So zum Beispiel in "lap-top" und "note-book" Computern. Insbesondere bei "desktop" Computermonitoren werden in neuerer Zeit zunehmend Flüssigkristallanzeigen des IPS- (Englisch: in-plane switching", z. B. DE 40 00 451 und EP 0 588 568) oder alternativ des VAN- (Englisch: "vertically aligned nematic") Typs verwendet. VAN-Anzeigen sind eine Variante der ECB- (Englisch:" electrically controlled birefringence") Anzeigen. In einer modernen Variante, den MVA-Anzeigen (Englisch: "multi domain vertically aligned"), werden pro angesteuerter Elektrode mehrere Domänen stabilisiert und zusätzlich wird eine spezielle optische Kompensationsschicht verwendet. Diese Anzeigen verwenden, wie die bereits erwähnten TN-Anzeigen, ein zur Flüssigkristallschicht vertikales elektrisches Feld. Im Gegensatz hierzu verwenden IPS-Anzeigen in der Regel Elektroden auf nur einem Substrat, also an einer Seite der Flüssigkristallschicht; sind also durch eine wesentliche Komponente des elektrischen Felds parallel zur Flüssigkristallschicht gekennzeichnet.

Allen diesen konventionellen Anzeigen ist ein relativ langsames Schatten gemein, insbesondere ist dieses für die immer stärkere Verbreitung findenden TV- und Multi-Media-Anwendungen nicht ausreichend. Dieses fällt insbesondere im Vergleich mit den nahezu ubiquitären Kathodenstrahlröhren auf. Ein weiterer Nachteil der bekannten, in Flüssigkristall= anzeigen eingesetzten elektro-optischen Effekte ist die deutliche Blickwinkelabhängigkeit des erzielten Kontrasts. Diese ist in den meisten Fällen so groß, dass für Anzeigen im Direktsichtbetrieb Kompensationsschichten, typischerweise anisotrope Filme, mit zum Teil kompliziertem Aufbau, verwendet werden müssen.

In DE 102 17 273.0 werden Lichtsteuerelemente beschrieben, bei denen das mesogene Steuermedium bei der Betriebstemperatur in der isotropen Phase vorliegt. Diese Lichtsteuerelemente schalten besonders schnell und haben eine gute Blickwinkelabhängigkeit des Kontrasts. Allerdings sind die Ansteuerspannungen für viele Anwendungen zu hoch. Außerdem ist die, Temperaturabhängigkeit der Ansteuerspannungen sehr groß. Somit besteht der Bedarf nach verbesserten Lichtsteueretementen insbesondere mit verringerter Ansteuerspannung.

In der unveröffentlichten Anmeldung DE 102 41 301.0 werden spezielle Elektrodenstrukturen vorgeschlagen, die zu einer signifikanten Verringerung der Betriebsspannungen führen. Allerdings bedingen diese Elektrodenstrukturen einen deutlich größeren Aufwand bei der Herstellung der Lichtsteuerelemente.

Eine Verringerung der zur Ansteuerung der elektrooptischen Schaltelemente benötigten Spannungen durch entsprechend optimierte Steuermedien erfordert jedoch, im Gegensatz zu den in DE 102 41 301.0 vorgeschlagenen Elektrodenstrukturen, keinen größeren Aufwand bei der Herstellung der Lichtsteuereiemente.

DE 10151492 A1 offenbart Difluoracrylsäurederivate, die Verwendung von solchen Verbindungen als Komponenten flüssigkristalliner Medien, ein flüssigkristalliner Medium enthaltend diese Verbindungen, ein Flüssigkristall Anzeigeelement enthlaltend das flüssigkristalline Medium und ein elekrooptisches Anzeigeelement enthaltend als Dielektrikum das flüssigkristalline Medium.

Der vorliegenden Erfindung lag somit die Aufgabe zugrunde, besonders schnell schaltende Lichtsteuerelemente mit guter Blickwinkelabhängigkeit und insbesondere mit niedrigen Ansteuerspannungen und einer geringen Temperaturabhängigkeit der Ansteuerspannung zu realisieren und die dafür nötigen Steuermedien bereitzustellen. Diese Lichtsteuerelemente sollen eine möglichst geringe Schichtdicke der Steuermedien aufweisen um als Elemente von FPDs (Englisch: flat panel displays, also flachen Anzeigen), wie zum Beispiel Flachbildschirmen für Computer, eingesetzt werden zu können. Ferner sollen sie mittels einer möglichst einfachen Elektroitenkonfiguration ansteuerbar sein und eine niedrige Betriebsspannung mit einer geringen Temperaturabhängigkeit aufweisen. Darüber hinaus sollen sie für die Anwendung in elektrooptischen Anzeigen einen guten Kontrast mit einer geringen Blickwinkelabhängigkeit haben.

### Vorliegende Erfindung

Überraschender Weise wurde gefunden, dass, wie im Folgenden beschrieben, Lichtsteuerelemente die Steuermedien in einer optisch isotropen Phase verwenden, deutlich verbessert werden können und, dass insbesondere Lichtsteuerelemente mit deutlich verringerten charakteristischen Spannungen realisiert werden können.

Die elektrooptischen Lichtsteuerelemente gemäß der vorliegenden Erfindung umfassen
- ein Substrat oder mehrere Substrate,
- eine Elektrodenanordnung,
- mindestens ein Element oder mehrere Elemente zur Polarisation des Lichts und
- ein Steuermedium,
und sind dadurch gekennzeichnet, dass
- das Lichtsteuerelement bei einer Temperatur betrieben wird, bei der das Steuermedium im nicht angesteuerten Zustand in einer optisch isotropen Phase vorliegt und dass
- die Elektrodenanordnung ein elektrisches Feld mit einer signifikanten Komponente parallel zur Fläche des mesogenen Steuermediums erzeugen kann und, dass
- das mesogene Steuermedium mindestens eine der folgenden Bedingungen (a) und (f) und im Fall, dass es nur die Bedingung (a) erfüllt, mindestens eine der folgenden Bedingungen (b) und (c) und im -Fall, dass es von den Bedingungen (b) und (c) nur die Bedingung (c) erfüllt, mindestens eine der beiden weiteren folgenden Bedingungen (d) und (e) erfüllt, sowie im Fall, dass es die Bedingung (f) erfüllt, optional auch die Bedingung (g) erfüllt
- (a) das Steuermedium weist bei steigender Temperatur einen Übergang von der nematischen Phase oder von der cholesterischen Phase (Ch, hier chirale nematische Phase N* genannt) in die isotrope Phase (T(N,I) bzw. T(N*,I)), also einen typischen Klärpunkt, auf und die dielektrische Suszeptibilität des Steuermediums bei einer Temperatur von 4 Grad oberhalb des Klärpunkts beträgt 25 oder mehr,
- (b) die Klärenthalpie des Steuermediums beträgt 0,78 J/g oder weniger oder
- (c) die Klärenthalpie des Steuermediums beträgt 1,50 J/g oder weniger und
- (d) die dielektrische Suszeptibilität des Steuermediums bei einer Temperatur von 4 Grad oberhalb des Klärpunkts beträgt 27 oder mehr, mit der Maßgabe, dass Lichtsteuerelemente enthaltend Steuermedien, die 8%, 10% oder 12% der Verbindung UVZG-3-N enthalten ausgeschlossen sind oder
- (e) die dielektrische Suszeptibilität des Steuermediums bei einer Temperatur von 4 Grad oberhalb des Klärpunkts beträgt 35,5 oder mehr mit der Maßgabe, dass Lichtsteuerelemente enthaltend Steuermedien mit einer der beiden folgenden Zusammensetzungen 1 und 2 (der Vergleichsbeispiele 3 und 4)

| Zusammensetzung 1 | | | Zusammensetzung 2 | | |
|---|---|---|---|---|---|
| Verbindung | | Konz. / % | Verbindung | | Konz. / % |
| # | Abkürzung | | # | Abkürzung | |
| 1 | UZU-3A-N | 12,0 | 1 | UM-3-N | 10,0 |
| 2 | UZU-5A-N | 12,0 | 2 | PYP-3N.F.F | 15,0 |
| 3 | GZU-3A-N | 12,0 | 3 | UZU-3A-N | 12,0 |
| 4 | GZU-4A-N | 11,0 | 4 | GZU-3A-N | 12,0 |
| 5 | GZU-4O-N | 10,0 | 5 | GZU-4-N | 1,0 |
| 6 | UVZG-3-N | 10,0 | 6 | GZU-40-N | 10,0 |
| 7 | CUZU-2-N | 10,0 | 7 | UVZG-3-N | 10,0 |
| 8 | CUZU-3-N | 10,0 | 8 | CUZU-2-N | 10,0 |
| 9 | CUZU-4-N | 10,0 | 9 | CUZU-3-N | 10,0 |
| 10 | HP-5N.F | 3,0 | 10 | HP-3N.F | 10,0 |

, worin die Abkürzungen für die Verbindungen die unten gegebene Bedeutung haben, ausgeschlossen sind,
- (f) das Steuermedium weist bei steigender Temperatur bei einer Temperatur T(N*,BP) einen Übergang von der cholesterischen Phase in eine Blaue Phase (BP) auf und
- (g) die dielektrische Suszeptibilität des Steuermediums bei einer Temperatur von 4 Grad oberhalb dieser Übergangstemperatur (T(N*,BP)) beträgt 25 oder mehr, bevorzugt 27 oder mehr, besonders bevorzugt 35,5 oder mehr.

Im Folgenden wird die vorliegende Erfindung näher erläutert.

Neben der niedrigen Ansteuerspannung ist insbesondere der Kontrast dieser Anzeigen und seine Blickwinkelabhängigkeit hervorragend und die Schaltzeiten sind sehr kurz.

Die erfindungsgemäßen Lichtsteuerelemente enthalten bevorzugt ein mesogenes Medium, das bei Betriebstemperatur in einer optisch isotropen Phase vorliegt. Dieses Medium befindet sich zweckmäßiger Weise auf bzw. unter einem Substrat. Die optisch isotrope Phase kann die isotrope Phase oder eine homogene optisch isotrope Phase sein, wie eine Blaue Phase oder eine inhomogene optisch isotrope Phase sein. Die inhomogene optisch isotrope Phase kann aus einem System aus mesogenem Medium und einem Polymer bestehen. Dabei kann das mesogenen Medium in dem Polymer in Form von Tröpfchen dispergiert sein (PDLC von Englisch "poymer disparsed liquid crystals") oder in zusammenhängender Form vorliegen (PN von Englisch "polymer network"). Dabei ist die Grüße der Abmessungen der charakteristischen Strukturen (Tröpchendurchmesser bzw. Durchmesser der Netzfasern bzw. der Maschen) in der Größenordnung der Wellenlänge der verwendeten Lichts und bevorzugt kleiner als diese. Bevorzugt weist das Steuermedium bei der Ansteuertemperatur oder mindestens bei einer der Ansteuer temperaturen eine Blaue Phase auf. In einer bevorzugten Ausführungsform ist diese Blaue Phase eine homogene Phase, enthält also kein festes (z.B. polymeres). Material.

Bevorzugt wird ein Steuermedium mit einer homogenen Phase verwendet.

In einer bevorzugten Ausführungsform der vorliegenden Erfindung liegt das Steuermedium des Lichtsteuerelements bei der Betriebstemperatur, bzw. bei mindestens einer der Betriebstemperaturen in der isotropen Phase vor.

In einer weiteren bevorzugten Ausführungsform der vorliegenden Erfindung liegt das Steuermedium des Lichtsteuerelements bei der Betriebstemperatur, bzw. bei mindestens einer der Betriebstemperaturen in einer Blauen Phase vor. In dieser Ausführungsform kann sich der Betriebstemperaturbereich über die Blaue Phase und darüber hinaus oder beim Auftreten mehrerer Blauer Phasen über deren Bereich und darüber hinaus bis in die isotrope Phase erstrecken.

Flüssigkristalle mit entsprechend starker chiraler Verdrillung können eine oder mehrere optisch isotrope Mesophasen aufweisen. Diese Phasen erscheinen bei entsprechendem cholesterischen Pitch, in einer ausreichend großen Schichtdicke leicht bläulich. Aus diesem Grund werden sie als Blaue Phasen bezeichnet (Gray and Goodby, "Smectic Liquid Crystals, Textures and Structures", Leonhard Hill, USA, Canada (1984)).

Die Effekte elektrischer Felder auf Flüssigkristalle, die in einer Blauen Phase vorliegen, werden beispielsweise in H.S. Kitzerow, "The Effect of Electric Fields on Blue Phases", Mol. Cryst. Liq. Cryst, (1991), Bd. 202, S. 51-83 beschrieben. Dort werden auch die bislang identifizierten drei Arten Blauer Phasen (BP I bis BP III) erwähnt, die in feldfreien Flüssigkristallen beobachtet werden können. Es werden jedoch keine elektrooptischen Anzeigen, die eine feldinduzierte Doppelbrechung ausnutzen, beschrieben. Unter dem Einfluss eines elektrischen Feldes können weitere Blaue Phasen oder andere Phasen auftreten, die von den Blauen Phasen I, II und III verschieden sind.

Bevorzugt wird als Steuermedium des Lichtsteuerelements ein mesogenes Medium verwendet. Als mesogene Medien werden in der vorliegenden Anmeldung Medien bezeichnet, die eine Mesophase aufweisen, die in einer Mesophase löslich sind oder eine Mesophase induzieren. Die Mesophase ist eine smektische oder eine nematische Phase, bevorzugt eine nematische Phase.

In einer besonders bevorzugten Ausführungsform weist das Ansteuermedium eine Blaue Phase oder mehrere Blaue Phasen auf. Bevorzugt erstreckt sich die Blaue Phase bzw. erstrecken sich die Blauen Phasen über eine Temperaturbereich (ΔT(BP)) mit einer Breite von 5° oder mehr, bevorzugt von 10°, besonders bevorzugt von 20° oder mehr und ganz besonders bevorzugt von 30° oder mehr.

Bei Steuermedien die einen typischen Klärpunkt, also einen Übergang von der nematischen Phase oder der cholesterischen Phase in die isotrope Phase (T(N,I) bzw. T(N*,I)) aufweisen beträgt die optische Anisotropie des Steuermediums bei einer Temperatur von 4 Grad unterhalb des Klärpunkts bevorzugt 0,080 oder mehr und das Steuermedium weist bevorzugt einen Klärpunkt im Bereich von -30°C bis 80°C, bevorzugt bis 55°C, auf.

Als bevorzugtes Medium zur Untersuchung der mesogenen Eigenschaften der Materialien die keine Mesophase aufweisen wird die nematische Mischung ZLI-4792 der Merck KGaA, Darmstadt, Deutschland verwendet. Bevorzugt haben die mesogenen Materialien einen aus 10%-iger Lösung in dieser Mischung extrapolierten Klärpunkt (T(N,I) bzw. T(N*,I)) von -100°C oder mehr, besonders bevorzugt von -50°C oder mehr und ganz besonders bevorzugt von -20°C oder mehr.

In der Regel befindet sich das Steuermedium zwischen zwei Substraten. Diese Ausführungsform ist bevorzugt. Wenn sich das Steuermedium zwischen zwei Substraten befindet ist mindestens eines dieser Substrate lichtdurchlässig. Das lichtdurchlässige Substrat, bzw. die lichtdurchlässigen Substrate können z. B. aus Glas, Quarz oder Kunststoff bestehen. Wird ein Substrat verwendet, das nicht lichtdurchlässig ist, so kann dies unter anderem aus einem Metall oder einem Halbleiter bestehen. Diese Medien können als solche verwendet werden oder auf einem Träger, z.B. einer Keramik, vorliegen. Ist das Steuermedium ein polymeres Medium, so kann gegebenenfalls auf die Verwendung eines zweiten Substrats verzichtet werden. Polymere Steuermedium können sogar selbsttragend ausgeführt werden. In diesem Fall wird gar kein Substrat benötigt.

Die Betriebstemperatur des Lichtsteuerelements liegt bevorzugt oberhalb der Übergangstemperatur des Steuermediums zur optisch isotropen Phase, in der Regel im Bereich von 0,1° bis 50° oberhalb dieser Übergangstemperatur, bevorzugt im Bereich von 0,1° bis 10° oberhalb dieser Übergangstemperatur und besonders bevorzugt im Bereich von 0,1° bis 5° oberhalb dieser Übergangstemperatur.

Bei Anlegen einer Spannung wird in dem mesogenen Medium in der optisch isotropen Phase eine Orientierung induziert welche zu einer optischen Verzögerung führt, die auf bekannte Weise visualisiert werden kann. Bevorzugt wird ein inhomogenes elektrisches Feld angewendet.

Die erfindungsgemäßen Lichtsteuerelemente enthalten mindestens ein Element zur Polarisation des Lichts. Zusätzlich enthalten sie bevorzugt ein weiteres optisches Element. Dieses weitere optische Element ist entweder ein zweites Element zur Polarisation des Lichts, ein Reflektor oder ein Transflektor.

Die optischen Elemente sind so angeordnet, dass das Licht beim Durchgang durch das mesogene Medium des Lichtsteuerelements sowohl vor dem Eintritt in das mesogene Medium, als auch nach dem Austritt aus dem mesogenen Medium mindestens einmal mindestens ein polarisierendes Element durchläuft.

In einer bevorzugten Ausführungsform des Lichtsteuerelements gemäß der vorliegenden Erfindung befindet sich das mesogene Medium zwischen zwei Polarisatoren, also einem Polarisator und einem Analysator.
Bevorzugt werden zwei Linearpolarisatoren verwendet. In dieser Ausführungsform sind die Absorptionsachsen der Polarisatoren bevorzugt gekreuzt und bilden bevorzugt einen Winkel von 90°.

Optional enthält das erfindungsgemäße Lichtsteuerelement eine oder mehrere doppelbrechende Schichten. Bevorzugt enthält es eine λ/4-Schicht oder mehrere λ/4-Schichten, bevorzugt eine λ/4-Schicht. Die optische Verzögerung der λ/4-Schicht beträgt bevorzugt ca. 140 nm.

Die Schichtdicke (d) des mesogenen Steuermediums beträgt bevorzugt 0,1 µm bis 5.000 µm (i.e. 5 mm), besonders bevorzugt 0,5 µm bis 1.000 µm (i.e. 1 mm), besonders bevorzugt 1,0 µm bis 100 µm und ganz besonders bevorzugt 3,0 µm bis 30 µm und insbesondere 3,5 µm bis 20 µm. In einer bevorzugten Ausführungsform beträgt die Schichtdicke des mesogenen Steuermediums bevorzugt 0,5 µm bis 50 µm, besonders bevorzugt 1,0 µm bis 20 µm und ganz besonders bevorzugt 1,0 µm bis 8,0 µm.

Gegenstand der vorliegenden Erfindung sind auch elektrooptische Anzeigen, die ein oder mehrere erfindungsgemäße Lichtsteuerelemente enthalten. Bevorzugt werden diese elektrooptischen Anzeigen mittels einer aktiven Matrix angesteuert.

Gegenstand der vorliegenden Erfindung sind des weiteren elektrooptische Anzeigesysteme enthaltend eine oder mehrere erfindungsgemäße elektrooptische Anzeigen. Diese elektrooptische Anzeigesysteme werden bevorzugt zur Darstellung von Information, unter anderem, bevorzugt als Fernsehbildschirm oder als Computermonitor verwendet. Bei der darzustellenden Information handelt es sich bevorzugt um digitale Signale oder um Videosignale.

Das erfindungsgemäße Lichtsteuerelement kann zusätzlich ein oder mehrere weitere übliche optische Elemente wie doppelbrechende Schichten (z.B. Kompensationsschichten), Diffusorschichten, und Elemente zur Erhöhung der Helligkeit und/oder der Lichtausbeute und/oder der Blickwinkelabhängigkeit enthalten, wobei diese Aufzählung nicht abschließend ist.

Die erfindungsgemäßen Lichtsteuerelemente sind durch einen guten Kontrast gekennzeichnet, der stark und nahezu überwiegend von den Eigenschaften der verwendeten Polarisatoren abhängt. Zum Vergleich mit herkömmlichen TN-Zellen werden hier TN-Zellen mit einer optischen Verzögerung von 0,50 µm, positivem Kontrast und der Absorptionsachse der Polarisatoren senkrecht zu der Vorzugsorientierung der nematischen Flüssigkristalle am benachbarten Substrat, die nicht chirale Flüssigkristalle enthalten, herangezogen. Werden bei den erfindungsgemäßen Lichtsteuerelementen und bei diesen herkömmlichen TN-Zellen die gleichen Polarisatoren verwendet, ist der Kontrast der erfindungsgemäßen Lichtsteuerelemente um 40% oder mehr größer als der der TN-Zellen.

Die Blickwinkelabhängigkeit des Kontrasts der erfindungsgemäßen Licht steuerelemente ist sehr gut. Sie ist deutlich besser als die der bekannten ECB-Zellen. Sie ist eher vergleichbar mit der bei den kommerziell verfügbaren IPS-Anzeigen (z.B. von Hitachi und NEC, beide Japan) und MVA-Anzeigen (z.B. von Fujitsu, Japan) beobachteten Blickwinkelabhängigkeit. Sie ist viel geringer als die der konventionellen TN-Anzeigen. So schließt eine Isokontrastkurve eines gegebenen Kontrastverhältnisses bei den erfindungsgemäßen Lichtsteuerelementen in der Regel einen Winkelbereich ein, der mehr als doppelt so groß, oft sogar mehr als dreimal so groß ist wie der entsprechende Winkelbereich einer Isokontrastkurve für das gleiche Kontrastverhältnis bei der TN-Anzeige.

Die Schaltzeiten der erfindungsgemäßen Lichtsteuerelemente sind sehr klein. Sie liegen in der Regel bei Werten von 5 ms oder weniger, bevorzugt bei 1 ms oder weniger, bevorzugt bei 0,5 ms oder weniger besonders bevorzugt bei 0,1 ms oder weniger.

Besonders vorteilhaft ist die Tatsache, dass beim Schalten zwischen verschiedenen Graustufen sowohl die Schaltzeit für das Ausschalten, als auch, besonders überraschend, die für das Einschalten nahezu unabhängig von der verwendeten Ansteuerspannung sind. Dies stellt einen wesentlichen Vorteil gegenüber herkömmlichen Lichtsteuerelementen wie Flüssigkristallzellen, z.B. TN-Zellen, dar.

Die elektrooptische Kennlinie wurde durch charakteristische Spannungen charakterisiert. Hierzu wurden insbesondere die Spannungen verwendet, bei denen 10%, 50% bzw. 90% relativer Kontrast erreicht wird. Diese Spannungen (kurz V₁₀, V₅₀ und V₉₀) werden auch als Schwellen-, Mittgrau- bzw. Sättigungsspannung bezeichnet. Zusätzlich wurde in der Regel die Spannung bei der 70% relativer Kontrast erreicht wird (V₇₀), bestimmt.

Elektrooptische Anzeigen gemäß der vorliegenden Erfindung enthalten ein oder mehrere erfindungsgemäße Lichtsteuerelemente. Diese werden in einer bevorzugten Ausführungsform mittels einer Aktiven Matrix angesteuert.

In einer anderen bevorzugten Ausführungsform werden die erfindungsgemäßen Lichtsteuerelemente im sogenannten "field sequential mode" angesteuert. Hierbei werden die Schaltelemente synchron zur Ansteuerung nacheinander mit verschieden farbigem Licht beleuchtet. Zur Erzeugung des gepulsten farbigen Lichts können beispielsweise ein Farbrad ("color wheel"), Stroboskoplampen oder Blitzlampen eingesetzt werden.

Elektrooptische Anzeigen gemäß der vorliegenden Erfindung können, insbesondere wenn sie für Fernsehbildschirme, Computermonitore oder ähnliches verwendet werden, zur Darstellung farbiger Bilder einen Farbfilter enthalten. Dieser Farbfilter besteht zweckmäßiger Weise aus einem Mosaik von Filterelementen verschiedener Farben. Hierbei ist typischer Weise jedem elektro-optischen Schaltelement ein Element des Farbfiltermosaiks einer Farbe zugeordnet.

Die erfindungsgemäßen Lichtsteuerelemente enthalten eine Elektrodenstruktur die ein elektrisches Feld mit einer signifikanten Komponente parallel zur Schicht des mesogenen Mediums erzeugt. Diese Elektrodenstruktur kann in der Form von interdigitalen Elektroden ausgeführt sein. Sie kann in Form von Kämmen oder Leitern ausgeführt sein. Auch Ausführungen in Form von überlagerten "H"s und doppel-"T"s bzw. "I"s sind vorteilhaft. Die Elektrodenstruktur befindet sich vorteilhaft auf nur einer Seite des mesogenen Mediums, bei Verwendung mindestens eines Substrats bevorzugt zwischen diesem und dem mesogenen Medium. Bevorzugt liegt die Elektrodenstruktur in mindestens zwei unterschiedlichen Ebenen, die sich beide auf einer Seite des mesogenen Steuermediums befinden, vor, dies gilt insbesondere wenn die Elektrodenstruktur überlappende Teilstrukturen enthält. Diese Teilstrukturen werden vorteilhafter Weise durch eine dielektrische Schicht voneinander getrennt. Wenn sich die Teilstrukturen auf den gegenüberliegenden Seiten einer lsolationsschicht befinden kann ein "lay out" gewählt werden, das die Realisierung von Kondensatoren erlaubt. Dies ist insbesondere bei der Ansteuerung von Anzeigen mittels einer Aktiven Matrix vorteilhaft. Derartige Aktiv Matrix Anzeigen verwenden eine Matrix von den einzelnen Lichtsteuerelementen zugeordneten Ansteuerelementen mit einer nichtlinearen Strom-Spannungs-Kennlinie, wie z. B. TFTs oder MIM- (Englisch: metal insulator metal) Dioden.

Ein wesentlicher Aspekt der vorliegenden Erfindung besteht in der Ausgestaltung der Elektrodenstruktur der erfindungsgemäßen elektro-optischen Schaltelemente. Hierbei sind verschiedene Ausführungsformen möglich. Im folgenden werden die bevorzugten Ausführungsformen den Elektroden der erfindungsgemäßen Lichtsteuerelemente gegebenenfalls unter Hinzuziehung der entsprechenden Abbildungen beschrieben.

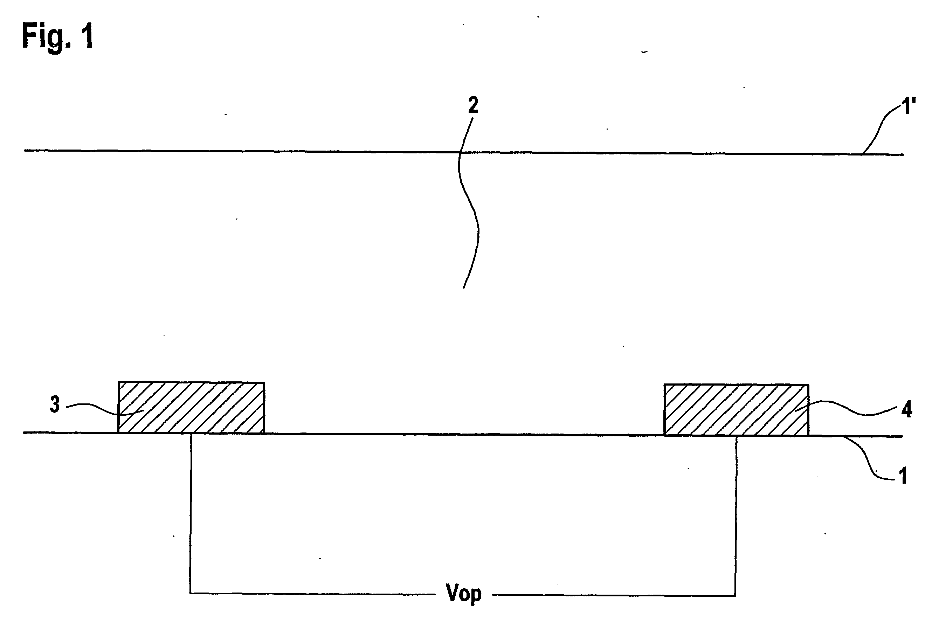

Der Aufbau von Lichtsteuerelementen mit einem mesogenen Steuermaterial ist im Prinzip in DE 102 172 73.0 beschrieben. Hier wird er kurz anhand der Abbildung 1 verdeutlicht.

Die Abbildung zeigt schematisch im Querschnitt den Aufbau eines Schaltelements oder eines Teils eines Schaltelements nach DE 102 172 73.0. Zwischen den inneren Oberflächen der Substrate (1) und (1') befindet sich das Steuermedium (2). Auf der inneren Oberfläche des einen Substrats (1) befinden sich die beiden Elektroden (3) und (4) der Elektrodenstruktur, die mit voneinander verschiedenen Potentialen beaufschlagt werden können. "Vop" bezeichnet die Spannungs-, Ladungs- bzw. Stromquelle. Die von Vop ausgehenden Linien symbolisieren die elektrischen Zuleitungen zu den Elektroden.

Die Elektroden können aus durchsichtigem Material bestehen, wie z. B. Indiumzinnoxid (ITO). In diesem Fall kann es vorteilhaft und gegebenenfalls nötig sein einen Teil oder Teile des Lichtsteuerelements mittels einer schwarzen Maske abzudecken. Dies erlaubt Bereiche in denen das elektrische Feld nicht effektiv ist abzuschirmen und so den Kontrast zu verbessern. Die Elektroden können aber auch aus undurchsichtigem Material bestehen, üblicherweise aus Metall, z.B. aus Chrom, Aluminium, Kupfer, Silber oder Gold, bevorzugt aus Chrom. In diesem Fall kann der Einsatz einer separaten schwarzen Maske gegebenenfalls entfallen.

Das verwendete elektrische Feld ist bevorzugt ein inhomogenes Feld.

Es wurde gefunden, dass der seitliche Abstand der Elektroden, die mit verschiedenem Potential beaufschlagt werden können, voneinander einen starken Einfluß auf die charakteristischen Spannungen der Lichtsteuerelemente hat. Mit abnehmendem Abstand nimmt die benötigte Ansteuerspannung ab. Wenn der Abstand jedoch kleiner wird, wird auch das Öffnungsverhältnis des Lichtsteuerelements kleiner und die Helligkeit nimmt ab. Bevorzugt haben die Elektroden einen Abstand voneinander der im Bereich von 0,5 µm bis 100 µm, bevorzugt im Bereich von 1 µm bis 20 µm, besonders bevorzugt im Bereich von 1 µm bis 15 µm, ganz besonders bevorzugt im Bereich von 2 µm bis 12 µm und am meisten bevorzugt im Bereich von 3 µm bis 11 µm liegt. Bevorzugt beträgt der Abstand der Elektroden zueinander 19 µm oder weniger, besonders bevorzugt 15 µm oder weniger, ganz besonders bevorzugt 10 µm oder weniger und insbesondere bevorzugt 9 µm oder weniger.

Die Breite der Elektroden in der Richtung zu den Nachbarelektroden, die mit verschiedenem Potential beaufschlagt werden können, ist weniger kritisch als der Abstand der Elektroden in dieser Richtung. Er hat nahezu keinen Einfluß auf die charakteristischen Spannungen der Lichtsteuerelemente. Mit zunehmender Breite der Elektroden wird jedoch das Öffnungsverhältnis des Lichtsteuerelements kleiner und die Helligkeit nimmt ab, insbesondere wenn die Elektroden aus lichtundurchlässigem Material bestehen. Mit abnehmender Breite der Elektroden nimmt dagegen ihr elektrischer Widerstand zu. Bevorzugt haben die Elektroden eine Breite die im Bereich von 0,5 µm bis 30 µm, bevorzugt im Bereich von 0,5 µm bis 20 µm, besonders bevorzugt im Bereich von 0,7 µm bis 19 µm, ganz besonders bevorzugt im Bereich von 1 µm bis 9 µm und am meisten bevorzugt im Bereich von 1,5 µm bis 6 µm liegt.

In einer bevorzugten Ausführungsform der vorliegenden Erfindung weisen die mesogenen Medien eine nematische Phase oder eine cholesterische auf. Es können jedoch auch Medien verwendet werden, bei denen der Temperaturbereich der nematischen Phase bzw. cholesterischen Phase so schmal ist, dass praktisch ein Übergang von der kristallinen Phase oder von der smektischen Phase in die optisch isotrope Phase erfolgt. Diese optisch isotrope Phase ist bevorzugt eine Blaue Phase, kann aber auch die isotrope Phase sein. In einigen Ausführungsformen ist der Temperaturbereich der Blauen Phase relativ eng und erstreckt sich nur über einige Grad oder weniger.

Der Klärpunkt der Steuermedien, die einen Übergang von der nematischen Phase oder der cholesterischen Phase in die isotrope Phase aufweisen (T(N,I) bzw. T(N*,I)), sowie die Umwandlungstemperatur (T(N*,BP)) der Medien die eine Blaue Phase aufweisen, liegt bevorzugt im Bereich von -20°C, bevorzugt -30°C bis 80°C, bevorzugt bis 60°C, besonders bevorzugt im Bereich von 0°C bis 60°C, bevorzugt bis 55°C und ganz besonders bevorzugt im Bereich von 20°C bis 60°C, bevorzugt bis 50°C. Bei Anzeigen mit Hintergrundbeleuchtung liegt der Klärpunkt bzw. die Umwandlungstemperatur bevorzugt im Bereich von 10°C bis 70°C undbesonders bevorzugt im Bereich von 30°C bis 50°C.

In der Ausführungsform, bei der die Steuermedien einen typischen Klärpunkt (T(N,I) bzw. T(N*,I)) aufweisen, ist die nematische Phase bevorzugt stabil zu tiefen Temperaturen von bis -10°C, besonders bevorzugt bis -30°C und ganz besonders bevorzugt bis -40°C. Gemäß den der vorliegenden Anmeldung zugrunde liegenden Untersuchungen, weisen die Steuermedien in dieser Ausführungsform eine möglichst niedrige Klärenthalpie, also eine Enthalpie (ΔH) beim Übergang aus der Mesophase, bevorzugt aus der namatischen oder der cholesterischen Phase, in die isotrope Phase, auf. Bevorzugt beträgt die Klärenthalpie 1,50 J/g oder weniger, besonders bevorzugt 1,00 J/g oder weniger und ganz besonders bevorzugt 0,80 J/g oder weniger.

In einer besonders bevorzugten Ausführungsform dieser Ausführungsform der vorliegenden Erfindung weisen die Steuermedien eine Klärenthalpie von weniger als 0,90 J/g, bevorzugt von 0,78 J/g oder weniger, besonders bevorzugt von 0,70 J/g oder weniger und ganz besonders bevorzugt von 0,60 J/g oder weniger und insbesondere von 0,55 J/g oder weniger auf.

Des weiteren haben die Erfinder der vorliegenden Erfindung gefunden, dass die Steuermedien in dieser Ausführungsform, bei der die Steuermedien einen typischen Klärpunkt (T(N,I) bzw. T(N*,I)) aufweisen, eine möglichst große dielektrische Suszeptibilität (ε auch εₐᵥ. genannt) aufweisen sollten. Bei einer Temperatur von 4° oberhalb des Klärpunkts des Mediums beträgt die dielektrische Suszeptibilität 25 oder mehr, bevorzugt 27 oder mehr, bevorzugt 35,5 oder mehr, bevorzugt 36 oder mehr, besonders bevorzugt 40 oder mehr und ganz besonders bevorzugt 55 oder mehr, oder 60 oder mehr.

Die optische Anisotropie des Mediums bei einer Temperatur von 4° unterhalb des Klärpunkts des Mediums beträgt bei dieser bevorzugten Ausführungsform, bei der die Steuermedien einen typischen Klärpunkt (T(N,I) bzw. T(N*,I)) aufweisen, bevorzugt 0,080 oder mehr, besonders bevorzugt 0,090 oder mehr und ganz besonders bevorzugt 0,100 oder mehr.

In einer besonders bevorzugten Ausführungsform dieser bevorzugten Ausführungsform, bei der die Steuermedien einen typischen Klärpunkt (T(N,I) bzw. T(N*,I)) aufweisen, weisen die mesogenen Medien gemäß der vorliegenden Erfindung in der nematischen Phase bei einer Temperatur von 4 Grad unter dem Klärpunkt bevorzugt eine Doppelbrechung (Δn) von 0,150 oder mehr und besonders bevorzugt von 0,200 oder mehr auf. Der Wert der Doppelbrechung ist für die erfindungsgemäße Anwendung so gut wie unbegrenzt. Praktisch ist er jedoch bei dieser bevorzugten Ausführungsform, bei der die Steuermedien einen typischen Klärpunkt (T(N,I) bzw. T(N*,I)) aufweisen, in der Regel 0,500 oder kleiner und meist 0,450 oder kleiner. Der Wert der Doppelbrechung der erfindungsgemäßen Medien wird hier in der nematischen Phase bei einer Temperatur von 4° unterhalb des Klärpunkts gemessen.

Ist das Medium bei dieser Temperatur nicht stabil nematisch oder zumindest bis zu dieser Temperatur in der nematischen Phase unterkühlbar, so wird, ebenso wie bei Einzelsubstanzen und Vormischungen, die Doppelbrechung einer Mischung aus dem Medium und der nematischen Mischung ZLI-4792 der Merck KGaA bei 20°C bestimmt und aus der Änderung gegenüber der Mischung ZLI-4792 auf den Wert des reinen Mediums extrapoliert. Es werden 10% des Mediums und 90% der Mischung ZLI-4792 verwendet. Wenn die Löslichkeit des Mediums nicht ausreicht, wird auf eine Konzentration von 5% ausgewichen und falls die Löslichkeit dann immer noch nicht ausreicht, wird als Wirtsmischung die nematische Mischung MLC-6828 verwendet, wie unten weiter beschrieben, und nötigenfalls auch hier die Konzentration von 10% auf 5% verringert. Das Verfahren der Extrapolation der Werte aus der Wirtsmischung wird für alle entsprechenden Eigenschaften der Medien verwendet, sofern diese bei der entsprechenden Temperatur nicht in der nematischen Phase untersucht werden können.

In einer weiteren bevorzugten Ausführungsform weist das Steuermedium eine Blaue Phase auf, d.h. mit steigender Temperatur geht das Medium aus der nematischen Phase, einer smektischen Phase oder der kristallinen Phase in eine Blaue Phase über. Das Medium kann mit steigender Temperatur mehrere Blaue Phase aufweise. Mit weiter steigender Temperatur geht das Medium bei einer Übergangstemperatur (T(BP,I)) in die isotrope Phase über.

In dieser Ausführungsform liegt die Übergangstemperatur (T(BP,I)) bevorzugt im Bereich von -20°C, bevorzugt -30°C bis 80°C, bevorzugt bis 60°C, besonders bevorzugt im Bereich von 0°C bis 60°C, bevorzugt bis 55°C und ganz besonders bevorzugt im Bereich von 20°C bis 60°C, bevorzugt bis 50°C. Bei Anzeigen mit Hintergrundbeleuchtung liegt der Klärpunkt bevorzugt im Bereich von 10°C bis 70°C und besonders bevorzugt im Bereich von 30°C bis 50°C.

In dieser Ausführungsform beträgt die dielektrische Suszeptibilität (ε) des Steuermediums bei einer Temperatur von 4° oberhalb der Übergangstemperatur (T(BP,I)) des Mediums 25 oder mehr, bevorzugt 27 oder mehr, bevorzugt 35,5 oder mehr, bevorzugt 36 oder mehr, besonders bevorzugt 40 oder mehr und ganz besonders bevorzugt 55 oder mehr, oder 60 oder mehr.

Die mesogenen Medien gemäß der vorliegenden Erfindung weisen bevorzugt ein Dipolmoment von 4 Debye oder mehr, besonders bevorzugt von 6 Debye oder mehr und besonders bevorzugt von 8 Debye oder mehr auf.

Für die Lichtsteuerelemente gemäß der vorliegenden Erfindung können sowohl mesogene Steuermedien verwendet werden, die in der Mesophase eine positive dielektrische Anisotropie (Δε) aufweisen, als auch solche die eine negative dielektrische Anisotropie aufweisen. Bevorzugt werden mesogene Steuermedien verwendet, die in der anisotropen Mesophase, bevorzugt in der nematischen Phase, eine positive dielektrische Anisotropie (Δε) aufweisen.

Wenn die mesogenen Steuermedien eine positive dielektrische Anisotropie haben, hat diese bei den Steuermedien die einen Übergang von der nematischen Phase oder von der cholesterischen Phase in die isotrope Phase aufweisen bei 1 kHz und einer Temperatur von 4° unterhalb des Klärpunkts, bevorzugt in der nematischen Phase, einen Wert von bevorzugt 15 oder mehr, besonders bevorzugt 30 oder mehr und ganz besonders bevorzugt 45 oder mehr. Weist das Medium keine nematische Phase auf, oder liegt es bei einer Temperatur von 4° unterhalb des Übergangs in die isotrope Phase nicht in der nematischen Phase vor, so wird seine dielektrische Anisotropie, wie die Doppelbrechung, durch Extrapolation der Werte einer entsprechenden Wirtsmischung ermittelt.

Wenn die mesogenen Steuermedien eine negative dielektrische Anisotropie haben, hat diese bei den Steuermedien die einen Übergang von der nematischen Phase oder von der cholesterischen Phase in die isotrope Phase aufweisen bei 1 kHz und einer Temperatur von 4° unterhalb des Klärpurikts, bevorzugt in der nematischen Phase, einen Wert von bevorzugt -5 oder weniger, besonders bevorzugt -7 oder weniger und ganz besonders bevorzugt-10 oder weniger. Für dielektrisch negative Steuermedien wird, sofern nötig, die nematische Mischung ZLI-3086 der Merck KGaA als Wirtsmischung verwendet, wie für dielektrisch negative Verbindungen.

Die entsprechenden Grenzen für Δε gelten auch für die Medien die einen Übergang T(N*,BP) aufweisen. Sie beziehen sich dann auf die Temperatur von 4°C unterhalb dieser Temperatur.

Besonders bevorzugt sind Steuermedien mit einer positiven dielektrischen Anisotropie.

Bevorzugt weisen die erfindungsgemäßen Steuermedien in den erfindungsgemäßen Lichtsteuerelementen bei einer Temperatur von 2 Grad oberhalb des Klärpunkts (T(N,I) bzw. T(N*,I)) bzw. der Übergangstemperatur (T(N*,BP)) eine charakteristische Spannung V₇₀ im Bereich von 5 V bis 150 V, bevorzugt von 15 V bis 110 V, besonders bevorzugt von 20 V bis 90 V und ganz besonders bevorzugt von 30 V bis 80 V auf. Besonders bevorzugt haben die erfindungsgemäßen Steuermedien in den erfindungsgemäßen Lichtsteuerelementen bei einer Temperatur von 2 Grad oberhalb des Klärpunkts bzw. der Übergangstemperatur eine charakteristische Spannung von 105 V oder weniger, bevorzugt von 95 V oder weniger, besonders bevorzugt von 75 V oder weniger und ganz besonders bevorzugt von 65 V oder weniger.

Bevorzugt weisen die erfindungsgemäßen Steuermedien in den erfindungsgemäßen Lichtsteuerelementen eine geringe Temperaturabhängigkeit der charakteristische Spannung V₇₀ bei einer Temperatur von 2 Grad oberhalb des Klärpunkts (T(N,I) bzw. T(N*,I)) bzw. der Übergangstemperatur (T(N*,BP)), also dV/dT(T(N,I)+2°) bzw. dV/dT(T(N*,I)+2°) bzw. dV/dT(T(N*,BP)+2°), über einen Temperaturbereich von einem Grad unterhalb bis einem Grad oberhalb der gegebenen Temperatur im Bereich von 1 V/° bis 20 V/°, bevorzugt von 1 V/° bis 15 V/°, besonders bevorzugt von 2 V/° bis 10 V/° und ganz besonders bevorzugt von 2 V/° bis 7 V/° auf. Dies gilt besonders für die Medien, die einen Übergang von der nematischen oder cholesterischen Phase in die isotrope Phase aufweisen.

In einer besonders bevorzugten Ausführungsform weisen die erfindungsgemäßen Steuermedien in den erfindungsgemäßen Lichtsteuerelementen eine noch geringe Temperaturabhängigkeit der charakteristische Spannung V₇₀ bei einer Temperatur von 2 Grad oberhalb des Klärpunkts (T(N,I) bzw. T(N*,I)) bzw. der Übergangstemperatur (T(N*,BP)), also dV/dT(T(N,I)+2°) bzw. dV/dT(T(N*,I)+2°) bzw. dV/dT(T(N*,BP)+2°), über einen Temperaturbereich von einem Grad unterhalb bis einem Grad oberhalb der gegebenen Temperatur auf. Diese liegt im Bereich von 0 V/° bis 5 V/°, bevorzugt von 0 V/° bis 3 V/°, besonders bevorzugt von 0 V/° bis 1 V/° und ganz besonders bevorzugt von 0,1 V/° bis 0,8 V/° auf. Dies gilt besonders für die Medien, die einen Übergang von der cholesterischen Phase in die Blaue Phase aufweisen.

Die mesogenen Medien gemäß der vorliegenden Erfindung bestehen bevorzugt aus zwei bis 40 Verbindungen, besonders bevorzugt aus fünf bis 30 Verbindungen und ganz besonders bevorzugt aus sieben bis 25 Verbindungen.

Die erfindungsgemäßen mesogenen Medien mit positiver dielektrischer Anisotropie gemäß der vorliegenden Erfindung enthalten bevorzugt
- eine Komponente A bestehend aus einer oder mehreren Verbindungen mit einer sehr stark positiven dielektrischen Anisotropie von 30 oder mehr,
- optional eine Komponente B bestehend aus einer oder mehreren Verbindungen mit einer stark positiven dielektrischen Anisotropie von 10 bis < 30,
- optional eine Komponente C bestehend aus einer oder mehreren Verbindungen mit einer moderat positiven dielektrischen Anisotropie von > 1,5 bis < 10,
- optional eine Komponente D bestehend aus einer oder mehreren dielektrisch neutralen Verbindungen mit einer dielektrischen Anisotropie im Bereich von -1,5 bis +1,5 und
- gegebenenfalls optional eine Komponente E bestehend aus einer oder mehreren Verbindungen mit einer negativen dielektrischen Anisotropie von weniger als -1,5.

Die Komponente A dieser Medien enthält bevorzugt eine oder mehrere Verbindungen der Formel I und besteht besonders bevorzugt überwiegend und ganz besonders bevorzugt nahezu vollständig aus einer oder mehreren Verbindungen ausgewählt aus den Verbindungen der Formeln I und II, 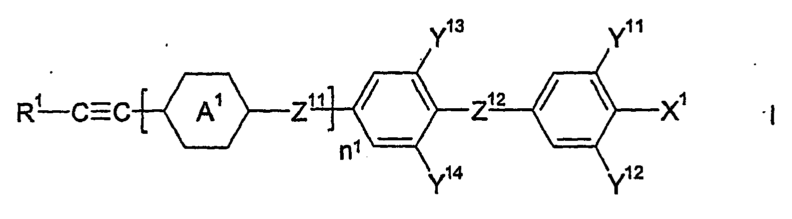 worin
- R¹: Alkyl mit 1 bis 7 C-Atomen oder Oxaalkyl mit 2 bis 7 C-Atomen, jeweils bevorzugt mit 2 bis 5 C-Atomen, bevorzugt Alkyl, 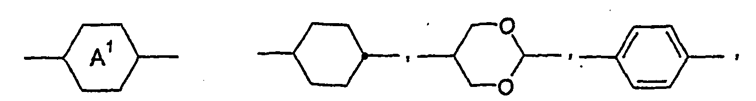 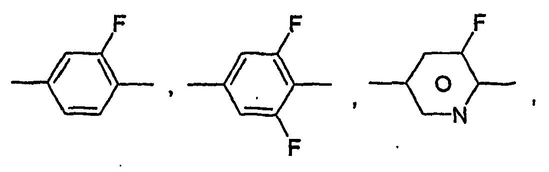 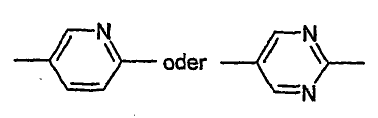
- Z¹¹ und Z¹²: jeweils voneinander unabhängig, eine Einfachbindung, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, -CF₂-O-, -O-CF₂- oder -C=C- oder eine Kombination von zwei oder mehreren dieser Gruppen, bevorzugt mindestens eine dieser Gruppen -COO- oder -CF₂-O-,
- X¹: F, Cl, NO₂, -OCF₃, -CF₃, -OCF₂H, Cl, CN, -C≡C-CN oder NCS, bevorzugt CN, -CF₃, -C≡C-CN oder NCS, besonders bevorzugt CN oder -CF₃,
- Y¹¹, Y¹², Y¹³ und Y¹⁴,: jeweils unabhängig voneinander, H oder F und
- n¹: 0 oder 1, bevorzugt 0 bedeuten,
wobei die Verbindungen der Formel I bevorzugt drei oder mehr, besonders bevorzugt vier oder mehr Fluoratome an den Phenylringen tragen, bevorzugt jedoch je Phenylring nicht mehr als zwei F-atome, besonders bevorzugt bedeuten Y¹¹, Y¹² und Y¹³ F und bevorzugt bedeutet Z¹² -COO- 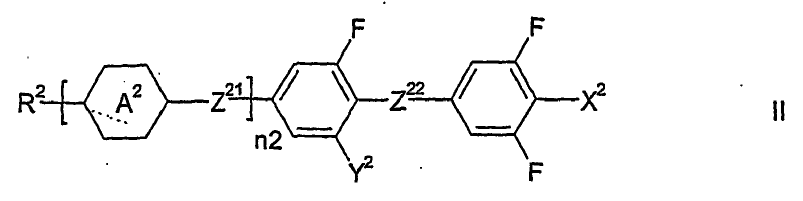 worin
- R²: Alkyl oder Alkoxy mit 1 bis 7 C-Atomen, Alkenyl, Alkenyloxy oder Oxaalkyl mit 2 bis 7 C-Atomen, bevorzugt Alkyl oder Alkoxy mit 1 bis 5 C-Atomen oder Alkenyl mit 2 bis 5 C-Atomen, bevorzugt Alkyl oder Alkoxy, 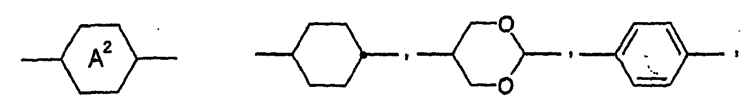 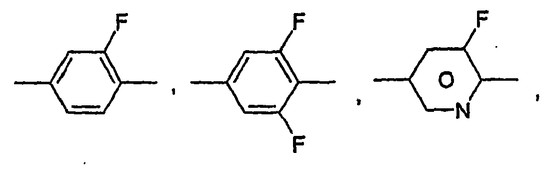 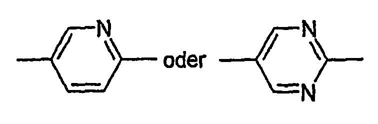
- Z²¹ und Z²²: jeweils voneinander unabhängig, eine Einfachbindung, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, -CF₂-O-, -O-CF₂- oder -C≡C- oder eine Kombination von zwei oder mehreren dieser Gruppen, bevorzugt mindestens eine dieser Gruppen -COO- oder -CF₂-O-,
- X²: F, Cl, NO₂, -OCF₃, -CF₃, -OCF₂H, Cl, CN, -C≡C-CN oder NCS, bevorzugt CN, -CF₃, -C≡C-CN oder NCS, besonders bevorzugt CN,
- Y²: H oder F und
- n²: 0 oder 1 bedeuten.

In einer bevorzugten Ausführungsform der vorliegenden Anmeldung enthalten die Medien eine oder mehrere Verbindungen der Formel I und bestehen bevorzugt überwiegend und besonders bevorzugt nahezu vollständig aus einer oder mehreren Verbindungen der Formel I

Bevorzugt werden die Verbindungen der Formel I ausgewählt aus der Gruppe der Verbindungen I-1 und I-2 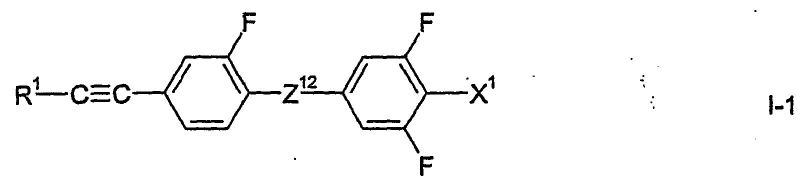 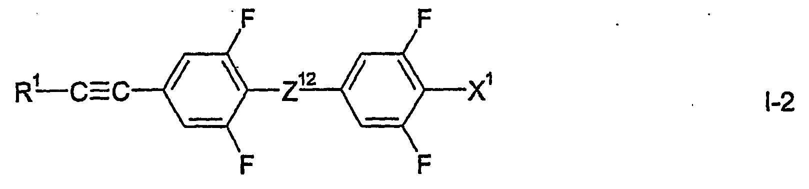 worin die Parameter die oben unter Formel I gegebene Bedeutung haben und bevorzugt
- R¹: Alkyl mit 1 bis 7, bevorzugt mit 1 bis 5, bevorzugt bis 3 C-Atomen,
- Z¹²: -COO- oder -CF₂-O- und
- X¹: CN, -CF₃ oder NCS, bevorzugt CN oder -CF₃
bedeuten.

Besonders bevorzugt enthalten die erfindungsgemäßen Medien eine oder mehrere Verbindungen der Formel I, bevorzugt der Formel I-1 und/oder der Formel I-2, worin X¹ CF₃ bedeutet.

Bevorzugt werden die Verbindungen der Formel II ausgewählt aus der Gruppe der Verbindungen II-1 bis II-7 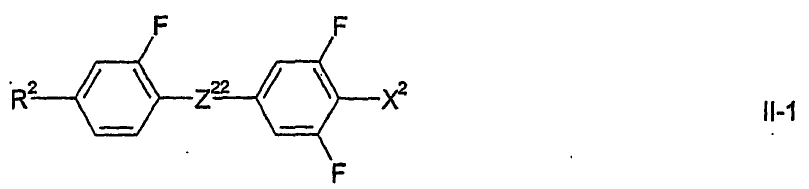 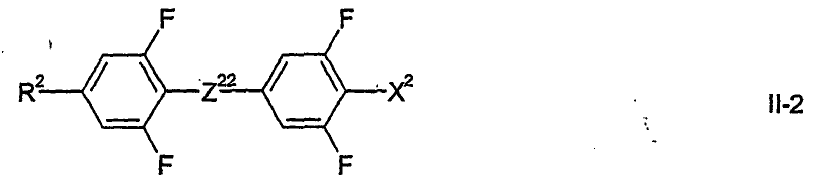 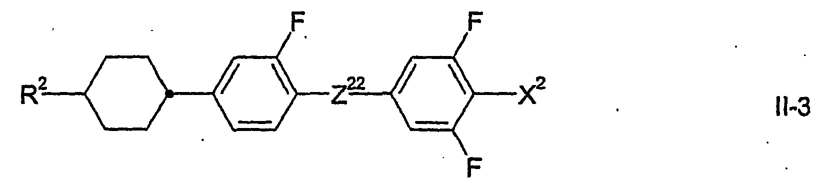 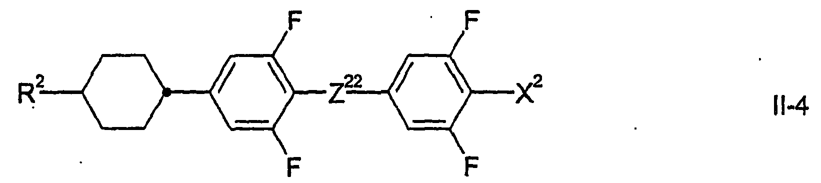 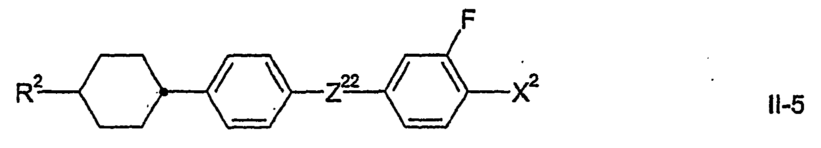 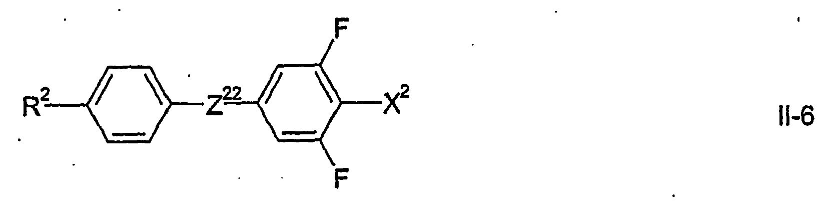 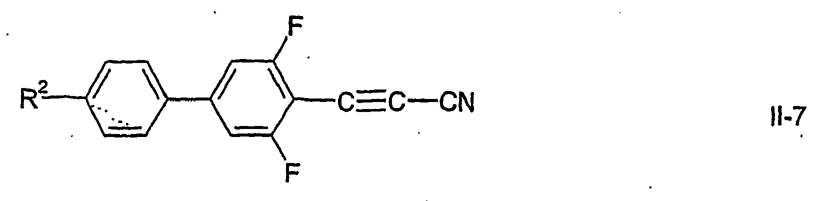 worin die Parameter die oben unter Formel II gegebene Bedeutung haben und bevorzugt
- R²: Alkyl oder Alkoxy mit 1 bis 7 C-Atomen, Alkenyl, Alkenyloxy oder Oxaalkyl mit 2 bis 7 C-Atomen, bevorzugt Alkyl oder Alkoxy mit 1 bis 5 C-Atomen,
- Z²²: eine Einfachbindung, -CO-O- oder -CF₂-O- bevorzugt -COO- oder -CF₂-O-,
bei Formel II-6 auch, besonders bevorzugt, -CsC- und
- _{X}²: CN, oder CF₃, bevorzugt CF₃,
bei Formel II-6 besonders bevorzugt CN, oder CF₃, bevorzugt CN
bedeuten.

Bevorzugt enthalten die erfindungsgemäßen Medien eine oder mehrere Verbindungen ausgewählt aus der Gruppe der Verbindungen der Formeln II1 bis II-5, bevorzugt Verbindungen worin Z²²-CO-O- bedeutet.

In einer bevorzugten Ausführungsform der vorliegenden Erfindung enthält die Komponente A der erfindungsgemäßen Medien bevorzugt eine oder mehrere Verbindungen der Formel II und besteht besonders bevorzugt überwiegend und ganz besonders bevorzugt nahezu vollständig aus einer oder mehreren Verbindungen der Formel II.

Für die Lichtsteuerelemente gemäß der vorliegenden Erfindung können sowohl mesogene Steuermedien verwendet werden, die in der Mesophase, bevorzugt in der nematischen Phase, eine positive dielektrische Anisotropie (Δε) aufweisen, als auch solche die eine negative dielektrische Anisotropie aufweisen. Bevorzugt werden mesogene Steuermedien verwendet, die in der Mesophase eine positive dielektrische Anisotropie (Δε) aufweisen. Wenn die mesogenen Steuermedien eine positive dielektrische Anisotropie haben, hat diese bei den Steuermedien, die eine Übergang von der nematischen Phase oder von der cholesterischen Phase in die isotrope Phase aufweisen, bei 1 kHz und einer Temperatur von 4° unterhalb des Klärpunkts bzw. unterhalb T(N*,BP), bevorzugt in der nematischen Phase, bevorzugt einen Wert von 40 oder mehr.

Die mesogenen Medien gemäß der vorliegenden Erfindung mit positiver dielektrischer Anisotropie bestehen besonders bevorzugt überwiegend und ganz besonders bevorzugt nahezu vollständig aus der Komponente A.

In einer bevorzugten Ausführungsform enthalten die mesogenen Medien gemäß der vorliegenden Erfindung mit positiver dielektrischer Anisotropie eine oder mehrere Komponenten ausgewählt aus der Gruppe der Komponenten B bis D, bevorzugt ausgewählt aus der Gruppe der Komponenten B und D, besonders bevorzugt der Komponente B.

Die mesogenen Medien gemäß der vorliegenden Erfindung mit positiver dielektrischer Anisotropie enthalten bevorzugt
- 5% bis 80%, bevorzugt 10% bis 60%, besonders bevorzugt 18% bis 43% einer oder mehrerer Verbindungen der Formel l,
- 5% bis 95%, bevorzugt 15% bis 80%, besonders bevorzugt 40% bis 70% einer oder mehrerer Verbindungen der Formel II und
- 0% bis 30% bevorzugt 0% bis 15%, besonders bevorzugt 0% bis 10% einer oder mehrerer weiterer Verbindungen.

Die mesogenen Medien gemäß der vorliegenden Erfindung mit positiver dielektrischer Anisotropie enthalten bevorzugt
- 3% bis 45%, bevorzugt 5% bis 40%, besonders bevorzugt 10% bis 35% einer oder mehrerer Verbindungen der Formel I-1 und/oder
- 2% bis 35%, bevorzugt 4% bis 30%, besonders bevorzugt 5% bis 30% einer oder mehrerer Verbindungen der Formel I-1 und/oder
- 0 bis 30%, bevorzugt 2% bis 25%, besonders bevorzugt 5% bis 20% einer oder mehrerer Verbindungen der Formel II-1 und/oder
- 0 bis 30%, bevorzugt 2% bis 25%, besonders bevorzugt 5% bis 20% einer oder mehrerer Verbindungen der Formel II-2 und/oder
- 5% bis 70%, bevorzugt 15% bis 65%, besonders bevorzugt 20% bis 60% einer oder mehrerer Verbindungen der Formel II-3 und/oder II-4, bevorzugt II-4 und/öder
- 0% bis 20% bevorzugt 0% bis 15%, besonders bevorzugt 3% bis 12% einer oder mehrerer Verbindungen der Formel II-5 und/oder
- 0% bis 30% bevorzugt 0% bis 20%, besonders bevorzugt 3% bis 15% einer oder mehrerer Verbindungen der Formel II-6 und/oder
- 0% bis 35% bevorzugt 0% bis 30%, besonders bevorzugt 3% bis 12% einer oder mehrerer Verbindungen der Formel II-7.

Die mesogenen Medien gemäß der vorliegenden Erfindung mit negativer dielektrischer Anisotropie bestehen besonders bevorzugt überwiegend und ganz besonders bevorzugt nahezu vollständig aus der Komponente D.

Die Komponente D dieser Medien enthält bevorzugt eine oder mehrere Verbindungen.

Die mesogenen Medien mit negativer dielektrischer Anisotropie gemäß der vorliegenden Erfindung enthalten bevorzugt
- eine Komponente A' bestehend aus einer oder mehreren Verbindungen mit einer stark negativen dielektrischen Anisotropie von -5 oder weniger,
- optional eine Komponente B' bestehend aus einer oder mehreren Verbindungen mit einer moderat negativen dielektrischen Anisotropie von -1,5 bis < -5,
- optional eine Komponente C' bestehend aus einer oder mehreren dielektrisch neutralen Verbindungen mit einer dielektrischen Anisotropie von -1,5 bis +1,5 und
- gegebenenfalls eine Komponente D' bestehend aus einer oder mehreren Verbindungen mit einer positiven dielektrischen Anisotropie von mehr als 1,5.

Das mesogene Medium gemäß der vorliegenden Erfindung kann weitere Additive und chirale Dotierstoffe in üblichen Konzentrationen enthalten. Die Gesamtkonzentration dieser weiteren Bestandteile liegt im Bereich von 0% bis 10%, bevorzugt im Bereich von 0, 1 % bis 6%, bezogen auf die Gesamtmischung. Die Konzentrationen der einzelnen dieser Verbindungen liegen im Bereich von 0,1 bis 3%. Die Konzentration dieser Verbindungen und ähnlicher Bestandteile der Mischung werden, mit Ausnahme der chiralen Dotierstoffe bei den Medien die eine Blaue Phase aufweisen, bei der Angabe der Konzentrationsbereiche der übrigen Mischungsbestandteile nicht berücksichtigt.

Die Medien werden auf übliche Weise aus den Verbindungen erhalten. Zweckmäßiger Weise werden die Verbindungen die in geringerer Menge eingesetzt werden in den in größerer Menge eingesetzten Verbindungen gelöst. Wird die Temperatur während des Mischvorgangs über den Klär punkt der überwiegenden Komponente erhöht, kann die Vollständigkeit der Auflösung leicht beobachtet werden. Die erfindungsgemäßen Medien können jedoch auch auf andere Weisen hergestellt werden. So durch den Einsatz von Vormischungen. Als Vormischungen könne unter anderem Homologenmischungen und/oder eutektische Mischungen eingesetzt werden. Die Vormischungen können aber auch bereits selbst einsatzfähige Medien sein. Dies ist bei sogenannten Zwei- oder Mehr-Flaschen-Systemen.(Englisch: "two-bottle" oder "multi-bottle systems") der Fall.

In der vorliegenden Anmeldung gilt, soweit nicht explizit anders angegeben, das Folgende.

Die angegebenen Bereiche von Werten schließen bevorzugt die Grenzwerte ein.

Die Konzentrationen sind in Massen-% gegeben und beziehen sich auf die vollständige Mischung. Temperaturen sind in Grad Celsius und Temperaturdifferenzen in Differenzgrad Celsius angegeben. Alle physikalischen Eigenschaften wurden bestimmt wie in "Merck Liquid Crystals, Physical Properties of Liquid Crystals", Stand Nov. 1997, Merck KGaA, Deutschland und sind für eine Temperatur von 20 °C gegeben, sofern nicht explizit anders angegeben. Die optische Anisotropie (Δn), auch Doppelbrechung genannt, wird bei einer Wellenlänge von 589,3 nm bestimmt. Die dielektrischen Eigenschaften werden bei einer Frequenz von 1 kHz bestimmt.

Im Zusammenhang mit Angaben zur Zusammensetzung der Medien, bzw. ihrer Komponenten, bedeutet
- "enthalten", dass die Konzentration des jeweiligen genannten Materials, also der Komponente oder der Verbindung, in der Bezugseinheit, also dem Medium bzw. der Komponente, bevorzugt 10% oder mehr, besonders bevorzugt 20 % oder mehr und ganz besonders bevorzugt 30% oder mehr beträgt,
- "überwiegend bestehen aus", dass die Konzentration des genannten Materials in der Bezugseinheit bevorzugt 50% oder mehr, besonders bevorzugt 60 % oder mehr und ganz besonders bevorzugt 70% oder mehr beträgt und
- "nahezu vollständig bestehen aus", dass die Konzentration des genannten Materials in der Bezugseinheit bevorzugt 80% oder mehr, besonders bevorzugt 90 % oder mehr und ganz besonders bevorzugt 95% oder mehr beträgt.

Dielektrisch positive Verbindungen haben ein Δε > 1,5, dielektrisch neutrale Verbindungen haben ein Δε im Bereich -1,5 ≤ Δε ≤ 1,5 und dielektrisch negative Verbindungen haben ein Δε < -1,5. Die selben Definitionen gelten auch für Komponenten von Mischungen und für Mischungen.

Die dielektrischen Eigenschaften, elektrooptischen Eigenschaften (z.B. die Schwellenspannungen) und die Schaltzeiten wurden in bei der Merck KGaA, Darmstadt, Deutschland hergestellten Testzellen, bestimmt. Die Testzellen zur Bestimmung von Δε hatten eine Schichtdicke von 22 µm und eine kreisförmige Elektrode aus Indiumzinnoxid (ITO)-mit einer Fläche von 1,13 cm² und einem Schutzring. Für homeotrope Orientierung zu Bestimmung von ε∥ wurden Zellen mit einer homeotrop orientierenden Polyimid-Orientierungsschicht verwendet. Alternativ kann Lezithin (Merck KGaA) als. Orientierungsmittel verwendet. Die Zellen zur Bestimmung von ε_{⊥} hatten Orientierungsschichten aus dem Polyimid AL-1054 der Firma Japan Synthetic Rubber, Japan. Die Kapazitäten wurden in der Regel mit einem Frequenzanalysator Solatron 1260 mit einer Rechteckwelle mit einer Effektivspannung von 0.3 Vᵣₘₛ gemessen. Die elektooptischen Untersuchungen wurden mit weißem Licht durchgeführt. Die charakteristischen Spannungen wurden unter senkrechter Beobachtung bestimmt.

Die dielektrischen Eigenschaften der Materialien werden bei 1.kHz und 20°C, sowie für Steuermedien, die einen Übergang von der nematischen Phase oder der cholesterischen Phase in die isotrope Phase (T(N,I)) aufweisen, bei einer Temperatur von 4° unterhalb sowie bei einer Temperatur von 4° oberhalb des Klärpunkts (T(N,I) bzw. T(N*,I)) wieder jeweils bei 1 kHz, und bei Steuermedien, die einen Übergang von der Blauen Phase in die isotrope Phase aufweisen bei einer.Temperatur von 4° oberhalb der entsprechenden Übergangstemperatur (T(N*,BP)) des jeweiligen Materials, hier allerdings bei 30 Hz, bestimmt.

Die dielektrische Anisotropie (Δε) der Verbindungen wird durch Extrapolation der Werte einer 10%-igen Lösung der jeweiligen Verbindung in einer Wirtsmischung bei 20°C auf einen Anteil der jeweiligen Verbindung von 100% bestimmt. Die Kapazitäten der Testmischungen werden sowohl in einer Zelle mit homeotroper, als auch in einer Zelle mit homogener Randorientierung bestimmt. Die Schichtdicke beider Zellentypen beträgt ca. 20 µm. Zur Messung wird eine Rechteckwelle mit einer Frequenz von 1 kHz und einer effektiven Spannung (rms, Englisch: root mean square) von typischer Weise 0,2 V bis 1,0 V verwendet. In jedem Fall ist die verwendete Spannung niedriger als die kapazitive Schwelle der jeweils untersuchten Mischung.

Für dielektrisch positive Verbindungen wird die Mischung ZLI-4792 und für dielektrisch neutrale, sowie für dielektrisch negative Verbindungen, die Mischung ZLI-3086, beide von Merck KGaA, Deutschland, als Wirtsmischung verwendet. Diese Wirtsmischungen werden auch für Komponenten und Medien verwendet, die selbst bei der betreffenden Temperatur keine nematische Phase aufweisen, bzw. die nicht bis zu der betreffenden Temperatur in der nematischen Phase unterkühlt werden können. Ist die Löslichkeit der Verbindungen, Komponenten oder Medien in der jeweiligen Wirtsmischung geringer als 10%, wird ausnahmsweise die Konzentration der untersuchten Substanz auf 5% erniedrigt. Ist die Löslichkeit einer dielektrisch positiven Substanz (einer Verbindung, einer Komponente eines Mediums oder eines Mediums) in der Wirtsmischung ZLI-4792 geringer als 5%, so wird die nematische Mischung MLC-6828, Merck KGaA, Deutschland als Wirtsmischung verwendet. Auch hier wird nötigenfalls die Konzentration der zu untersuchenden Substanz von 10% auf 5% halbiert. Aus der Änderung der Werte gegenüber denen der Wirtsmischung wird auf den Wert der reinen Substanz extrapoliert.

Die erdfindungsgemäßen Medien enthalten bevorzugt 0% bis 10% an Verbindungen deren Löslichkeit in der entsprechenden Wirtsmischung (ZLI-3086 bzw. MLC-6828) geringer als 5% ist. Bevorzugt ist die Konzentration dieser Verbindungen 8% oder weniger, besonders bevorzugt 5% oder weniger und ganz besonders bevorzugt 4% oder weniger.

Die dielektrische Anisotropie der Verbindungen, Komponenten und gegebenenfalls der Medien, die bei 20°C oder bei einer Temperatur von 4° unterhalb ihres Klärpunkts (T(N,I) bzw. (T(N*,I) bzw. Ihrer Übergangstemperatur (T(N*,BP)) nicht in der nematischen Phase vorliegen, bzw. die nicht bis zu dieser Temperatur in dieser Phase unterkühlbar sind, werden aus einer Wirtsmischung bestimmt, wie oben bei den Verbindungen beschrieben.

Die Dielektrizitätskonstanten ε∥ und ε_{⊥} werden mit einer absoluten Genauigkeit von ca. +/-0,1 bis +/-0,2 bestimmt, wodurch sich für die dielektrische Anisotropie (Δε) eine absoluten Genauigkeit von ca. +/-0,2 bis +/-0,4, typischerweise von +/-0,3 ergibt. Die Genauigkeit nimmt bei größeren Werten ab, die möglichen Abweichungen nehmen also zu. Bei Werten von Δε von 25 bis 40 beträgt die absolute Genauigkeit ca. +/-0,5 und bei Werten von mehr als 40 beträgt die absolute Genauigkeit ca. +/-1,0.

Die dielektrische Suszeptibilität der Medien wird bei einer Temperatur von 4° oberhalb der Temperatur ihres Übergangs in die optisch isotrope Phase in der optisch isotropen Phase bestimmt. Sie wird mittlere dielektrische Suszeptibilität (ε_{av.}) genannt. Bei den Medien, die einen Übergang aus der nematischen Phase oder der cholesterischen Phase in die isotrope Phase aufweisen, kann sie auch, in erster Näherung, aus der Extrapolation der mittleren dielektrischen Suszeptibilität des nematischen Mediums über den Übergangspunkt in die optisch isotrope Phase hinaus erhalten werden. Die dielektrische Suszeptibilität der Medien wird typischer weise mit einer absoluten Genauigkeit von ca. +/-0,1 bis +/-0,2 bestimmt. Bei großen Werten der dielektrischen Suszeptibilität, von 30 oder mehr, beträgt die absolute Genauigkeit ca. +/-0,5 und bei sehr großen Werten, von 40 oder mehr oder sogar von 60 oder mehr, beträgt die absolute Genauigkeit ca. +/-1.

Für die Steuermedien, die einen Übergang aus der nematischen Phase oder der cholesterischen Phase in die isotrope Phase aufweisen, wurde die Klärenthalpie per "differential scanning calorimetry", kurz DSC bestimmt. Hierzu wurde ein kommerzielles Gerät DSC2920 der Firma Texas Instruments, USA verwendet. Es wurden 2 mg bis 8 mg, typischerweise 4 mg, des betreffenden Materials in einem Pfännchen gegen ein leeres Pfännchen als Referenz vermessen. Dabei wurde die Temperatur mit einer Heizrate von 10 Grad/Minute erhöht. Der Startpunkt wurde ca. 30° bis 40° unterhalb des Klärpunkts der Substanz gewählt. Der Endpunkt lag jeweils ca. 30° oberhalb des Klärpunkts der Substanz. Die relative Genauigkeit der Werte beträgt jeweils ca. +/-10% bis +/-15%. Bei sehr kleinen Werten der Klärenthalpie muß gegebenenfalls die Probenmenge erhöht oder auf ein präziseres Meßgerät gewechselt werden.

Der Wert der Doppelbrechung der erfiridungsgemäßen Medien wird hier in der riematischen Phase bei 20°C und bei einer Temperatur von 4° unterhalb des Klärpunkts bzw. der Übergangstemperatur T(N*,BP) gemessen. Ist das Medium bei einer dieser beiden Temperaturen oder bei diesen beiden Temperaturen nicht stabil nematisch oder zumindest bis zu dieser Temperatur in der nematischen Phase unterkühlbar, so wird die Doppelbrechung einer Mischung aus der entsprechenden nematischen Wirtsmischung extrapoliert, wie oben bei der Bestimmung der dielektrischen Anisotropie beschrieben.

Ist der cholesterische Pitch der erfindungsgemäßen Medien zu kurz um eine Bestimmung der anisotropen Eigenschaften wie z.B. der Doppelbrechung oder der dielektrischen Suzeptibilität zu erlauben stehen hierfür drei Möglichkeiten zur Verfügung. Die erste, am meisten bevorzugte Möglichkeit ist der Ersatz der bzw. aller der in den Medien verwendeten chiralen Verbindungen durch deren Racemat. Die zweite ebenfalls noch bevorzugte Möglichkeit ist die Verringerung der Konzentration der chiralen Verbindung, bzw. der chiralen Verbindungen auf einen Wert der den cholesterischen Pitch so groß werden lässt, dass die Bestimmung der Eigenschaften gerade möglich wird. Die dritte, am wenigsten bevorzugte Möglichkeit ist die Kompensation des cholesterischen Pitchs durch Zugabe eine chiralen Verbindung mit umgekehrtem Helixdrehsinn. Hierzu wird bevorzugt die entsprechenden Verbindung des Eantiomerenpaares R-8011 und S-8011 der Fa. Merck KGaA verwendet.

Der Begriff Schwellenspannung bedeutet in der vorliegenden Anmeldung die optische Schwelle und wird für einen relativen Kontrast von 10 % (V₁₀) angegeben. Die Mittgrauspannung und die Sättigungsspannung werden ebenfalls optisch bestimmt und für einen relativen Kontrast von 50%, bzw. von 90 % angegeben. Als Bezugsgröße und charakteristischer Wert der elektrooptischen Kennlinie der verschiedenen Medien wird in der vorliegenden Anmeldung in der Regel die Spannung (V₇₀) angegeben bei der die Kennlinie zum ersten Mal den Wert von 70% relativem Kontrast erreicht. Wird die kapazitive Schwellenspannung (V₀), auch Freedericksz-Schwelle genannt, angegeben, so ist dies explizit vermerkt.

Die,Medien wurden in Testzellen mit interdigitalen Elektroden gefüllt. Die Schichtdicke der Testzellen betrug in der Regel ca. 10 µm. Die Breite der Elektroden betrug 10 µm und der Anstand zwischen den benachbarten Elektroden betrug 15 µm. Die elektrooptische Kennlinie wurde bei einer Temperatur von 2° oberhalb des Klärpunkts (T(N,I) bzw. T(N*,I)) bzw. der Übergangstemperatur von der cholesterischen Phase in die Blauen Phase (T(N*,BP)) des jeweiligen Mediums bestimmt. Beim Einfüllen der Medien in eine Zelle wurde in einigen Fällen eine leichte Erhöhung des Klärpunkts bzw. der Übergangstemperatur T(N*,BP) beobachtet. Dieser Effekt ist möglicherweise mit einer gewissen Stabilisierung der nematischen Phase bzw. der Blauen Phase in dünnen Schichten zu erklären. Die Erhöhung des Klärpunkts bzw. der Übergangstemperatur T(N*,BP) betrug in einigen Fällen 0,5° und bis zu ca. 0,7°. In einigen (seltenen) Fällen können Abweichungen von bis zu 2° oder sogar 4° auftreten. In den Fällen in denen eine Erhöhung des Klärpunkts bzw. der Übergangstemperatur T(N*,BP) in der Zelle auftritt, wird die Untersuchung der elektrooptischen Eigenschaften nicht bei einer Temperatur von 2° oberhalb des Klärpunkts des Mediums als solchem (T(N,I) bzw. T(N*,I) bzw. der Übergangstemperatur T(N*,BP) als solchem, sondern 2° oberhalb des Klärpunkts des Mediums in der Zelle (T_{c}(N,I) bzw. (T_{c}(N*,I)) bzw, bzw. der Übergangstemperatur des Mediums in der Zelle (T_{c}(N*,BP)) bestimmt.

Die Phasenbreite der Blauen Phase bzw. die Gesamtbreite mehrerer Blauer Phase wird, bei den Medien, die eine oder mehrere Blaue Phasen aufweisen, aus der Temperaturabhängigkeit des elektrooptischen Effekts bestimmt. Die Temperatur bei der, der elektrooptische Effekt auftritt, ist die Temperatur, bei der die optisch isotrope Phase, die Blaue Phase auftritt (T(N*,BP)). Die Temperatur bei der die Blaue Phase, bzw. bei Medien die mehr als eine Blaue Phase aufweisen, die mit steigender Temperatur zuletzt auftretende Blaue Phase, verschwindet und das Medium in die isotrope Phase übergeht (T(BP,I)), wird aus der Temperaturabhängigkeit der charakteristischen Spannungen bestimmt, als die Temperatur, bei der, der typische, relativ geringe Anstieg der charakteristischen Spannungen in einen stärkeren Anstieg mit steigender Temperatur übergeht. Der Wert von T(BP,I) wird durch Interpolation der Temperaturabhängigkeit der charakteristischen Spannungen oberhalb und unterhalb dieser Temperatur bestimmt, die in vielen Fällen sowohl oberhalb als auch unterhalb dieser Temperatur nahezu linear ist.

In der vorliegenden Anmeldung, besonders in den im folgenden beschriebenen Beispielen werden die Strukturen der chemischen Verbindungen mittels Abkürzungen angegeben. Die Bedeutung der jeweiligen Abkürzungen ist in den folgenden Tabellen A und B zusammengestellt. Alle Gruppen CₙH₂ₙ₋₁ und CₘH₂ₘ₊₁ sind geradkettige Alkylgruppen mit n bzw. m C-Atomen. Tabelle B ist aus sich selbst heraus verständlich, da sie jeweils die vollständige Abkürzung für eine Formel homologer Verbindungen angibt. In Tabelle A sind nur die Abkürzungen für die Kemstrukturen der Verbindungstypen zusammengestellt. Die Abkürzungen für die jeweiligen einzelnen Verbindungen setzen sich aus der jeweils zutreffenden dieser Abkürzungen für den Kern der Verbindung und der mittels einem Bindestrich angehängten Abkürzung für die Gruppen R¹, R², L¹ und L² gemäß folgender Tabelle zusammen.

| Abkürzung für R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nN.F.F | CₙH₂ₙ₊₁ | CN | F | F |
| nON.F.F | OCₙH₂ₙ₊₁ | CN | F | F |
| nOF | OCₙH₂ₙ₊₁ | F | H | H |
| nCl | CₙH₂ₙ₊₁ | Cl | H | H |
| nCl.F | CₙH₂ₙ₊₁ | Cl | H | F |
| nCl.F.F | CₙH₂ₙ₊₁ | Cl | F | F |
| nF | CₙH₂ₙ₊₁ | F | H | H |
| nF.F | CₙH₂ₙ₊₁ | F | H | F |
| nF.F.F | CₙH₂ₙ₊₁ | F | F | F |
| nmF | CₙH₂ₙ₊₁ | CₘH₂ₘ₊₁ | F | H |
| nCF₃ | CₙH₂ₙ₊₁ | CF₃ | H | H |
| nOCF₃ | CₙH₂ₙ₊₁ | OCF₃ | H | H |
| nOCF₃.F | CₙH₂ₙ₊₁ | OCF₃ | H | F |
| nOCF₃.F.F | CₙH₂ₙ+₁ | OCF₃ | F | F |
| nOCF₂ | CₙH₂ₙ+₁ | OCHF₂ | H | H |
| nOCF₂.F | CₙH₂ₙ₊₁ | OCHF₂ | H | F |
| nOCF₂.F.F | CₙH₂ₙ₊₁ | OCHF₂ | F | F |
| nS | CₙH₂ₙ₊₁ | NCS | H | H |
| nS.F | CₙH₂ₙ₊₁ | NCS | H | F |
| nS.F.F | CₙH₂ₙ₊₁ | NCS | F | F |
| rVsN | CᵣH₂ᵣ₊₁-CH=CH-CₛH₂ₛ- | CN | H | H |
| rOsN | CᵣH₂ᵣ₊₁-O-CₛH₂ₛ- | CN | H | H |
| nEm | CₙH₂ₙ₊₁ | COOCₘH₂ₘ₊₁ | H | H |

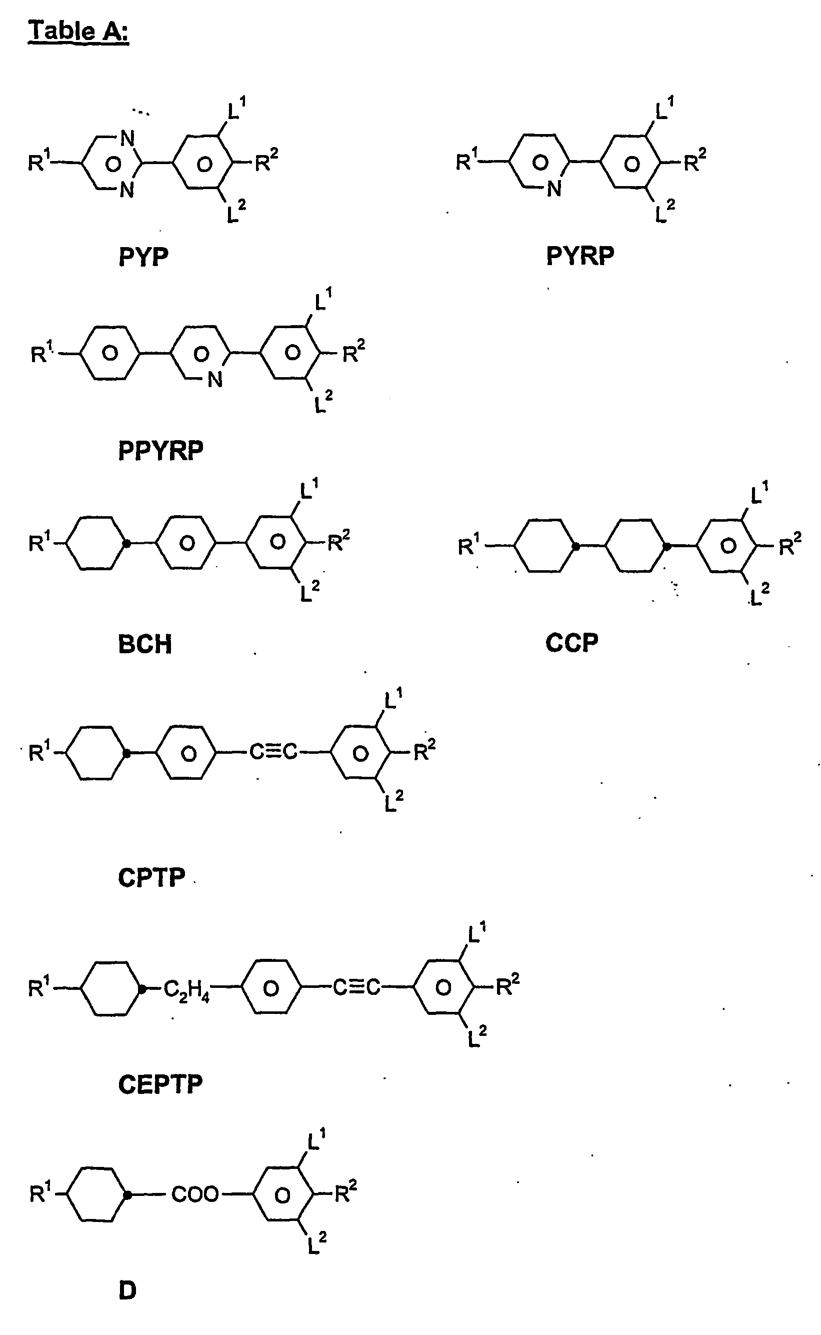

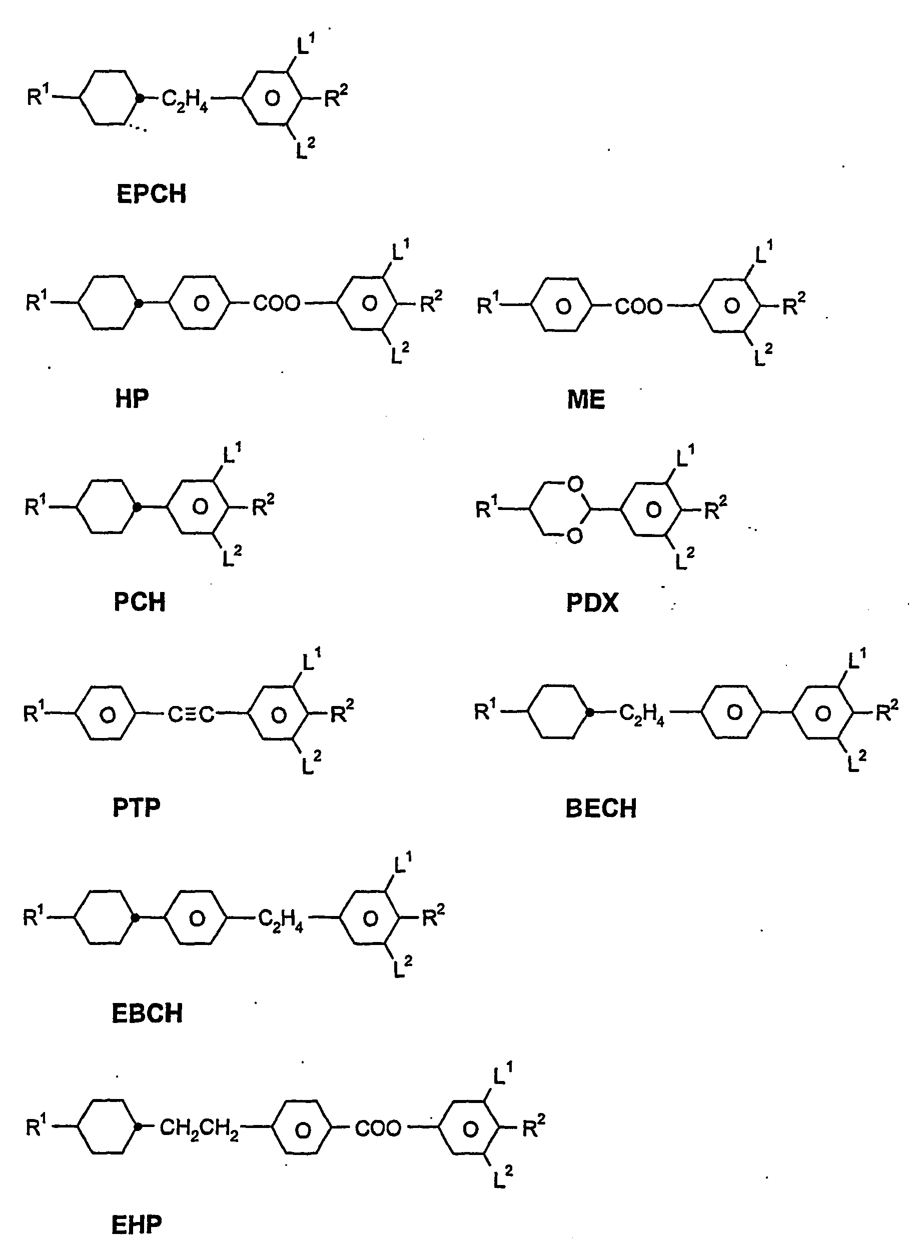

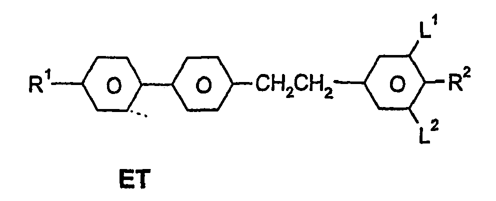

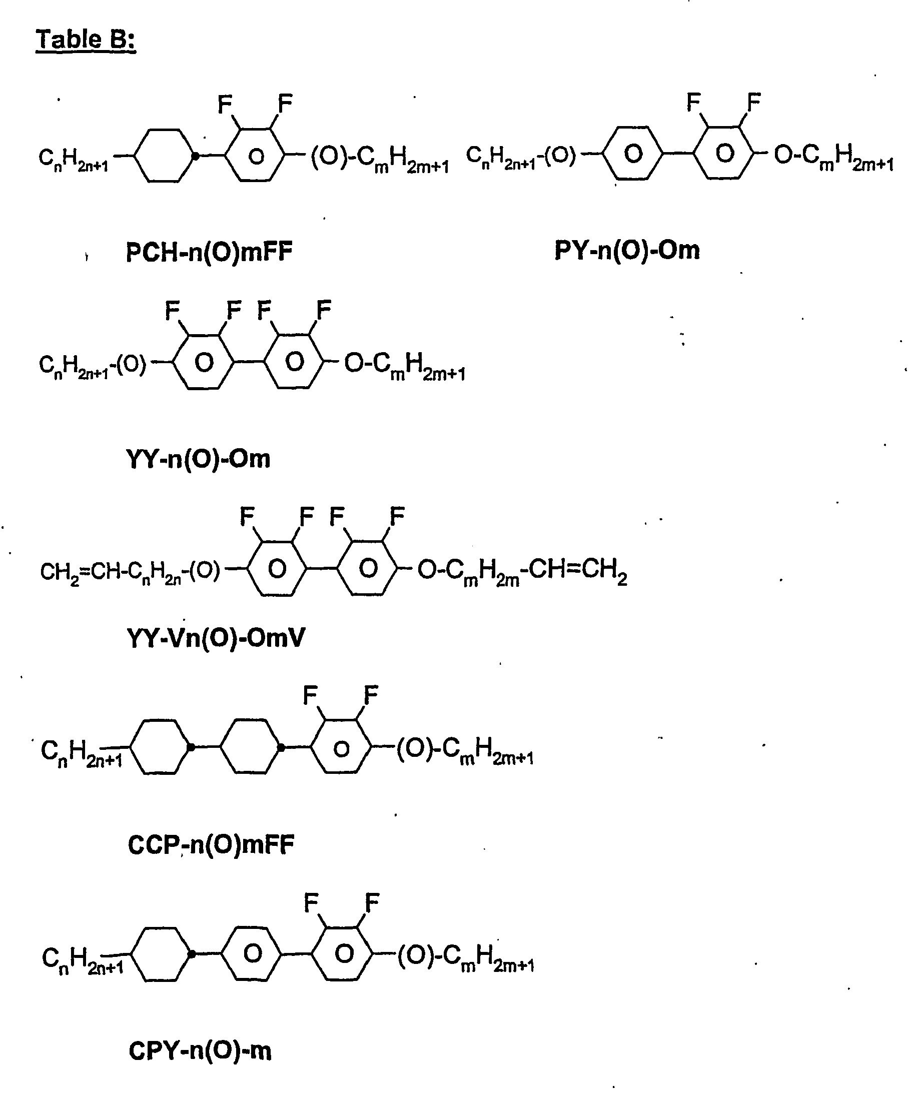

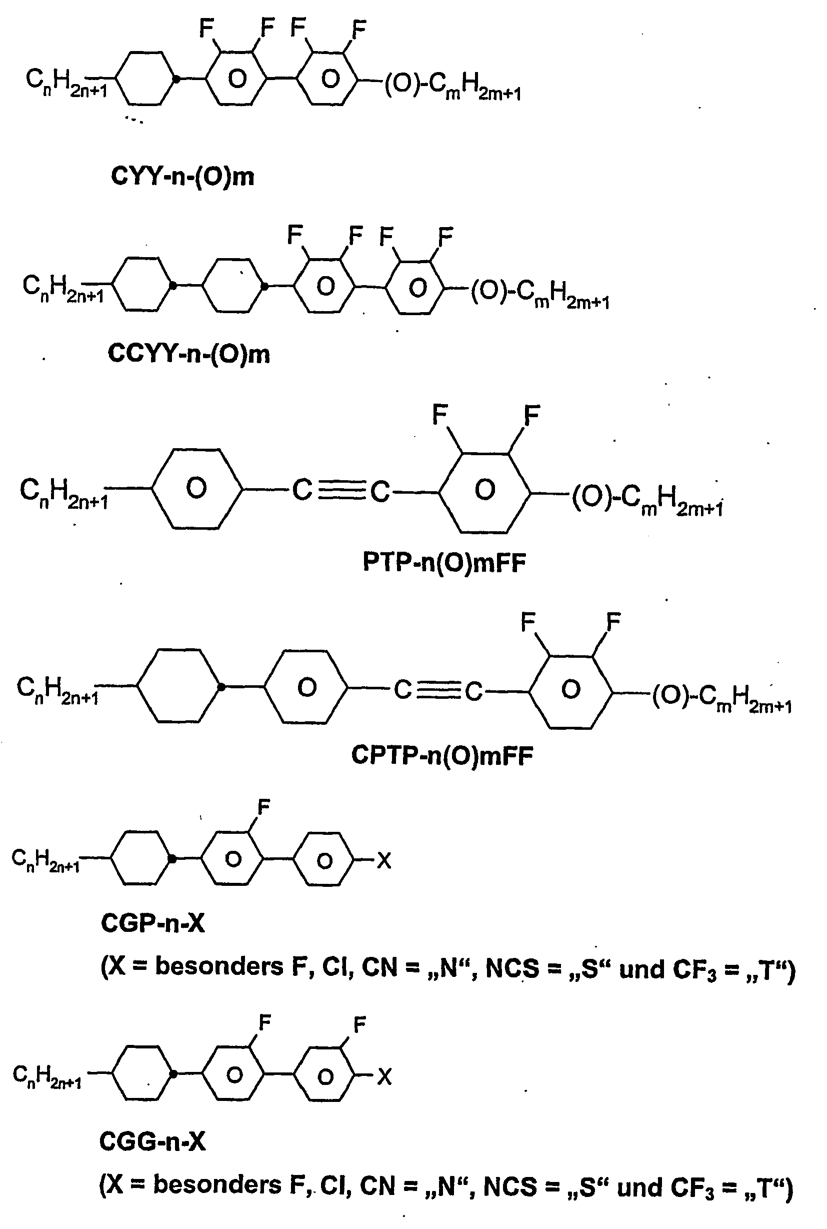

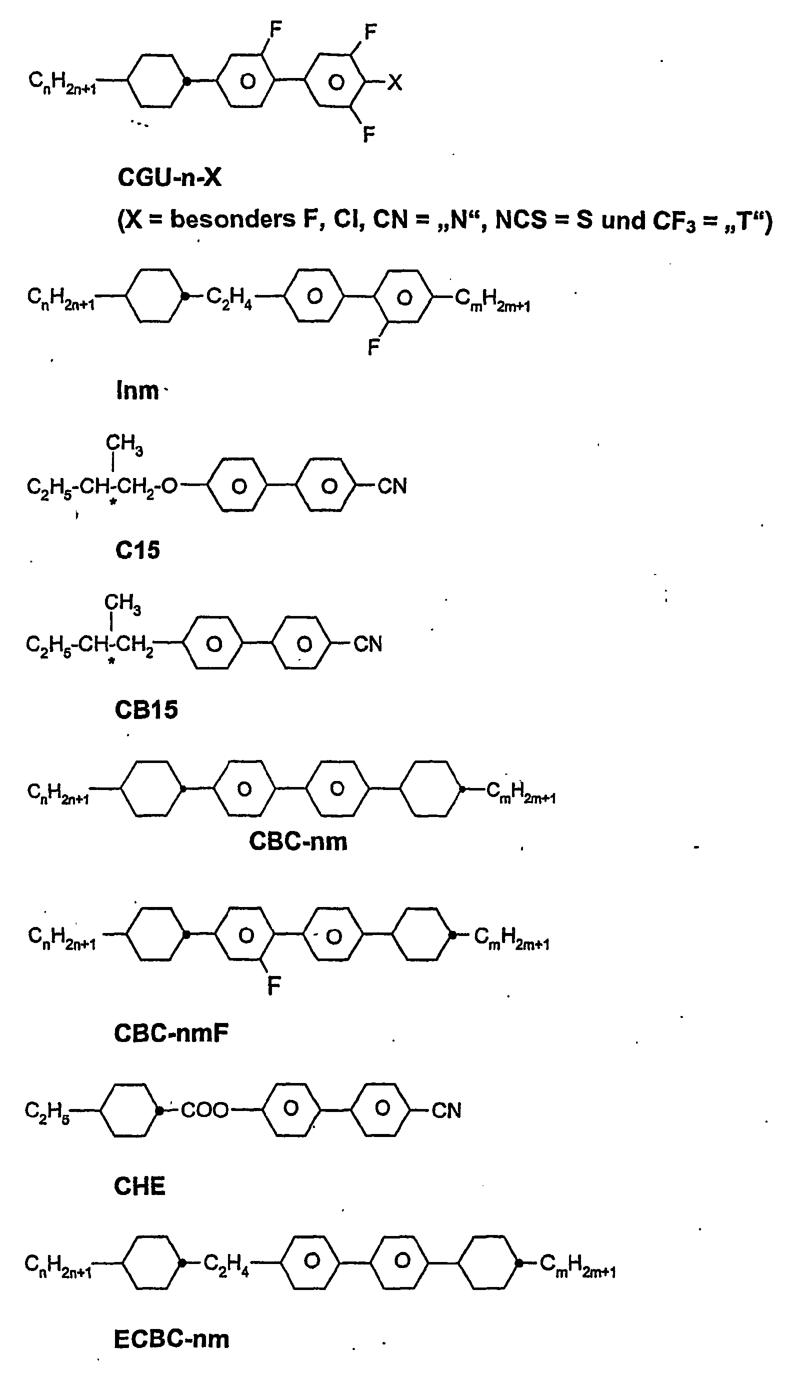

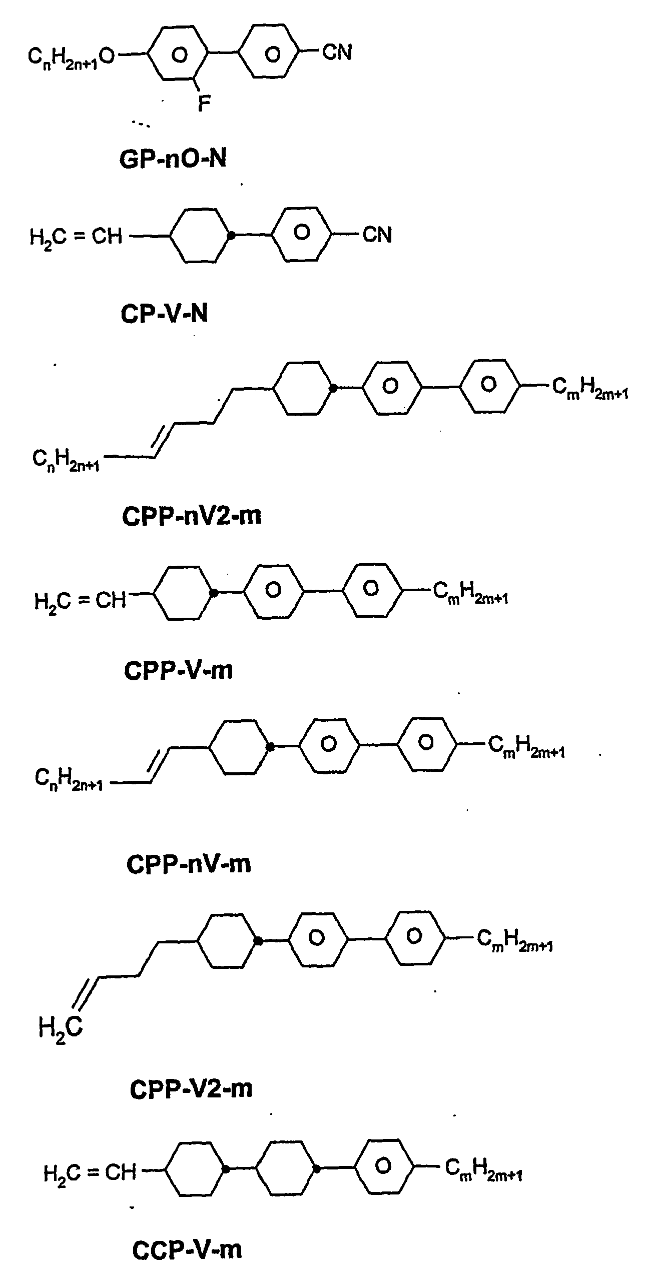

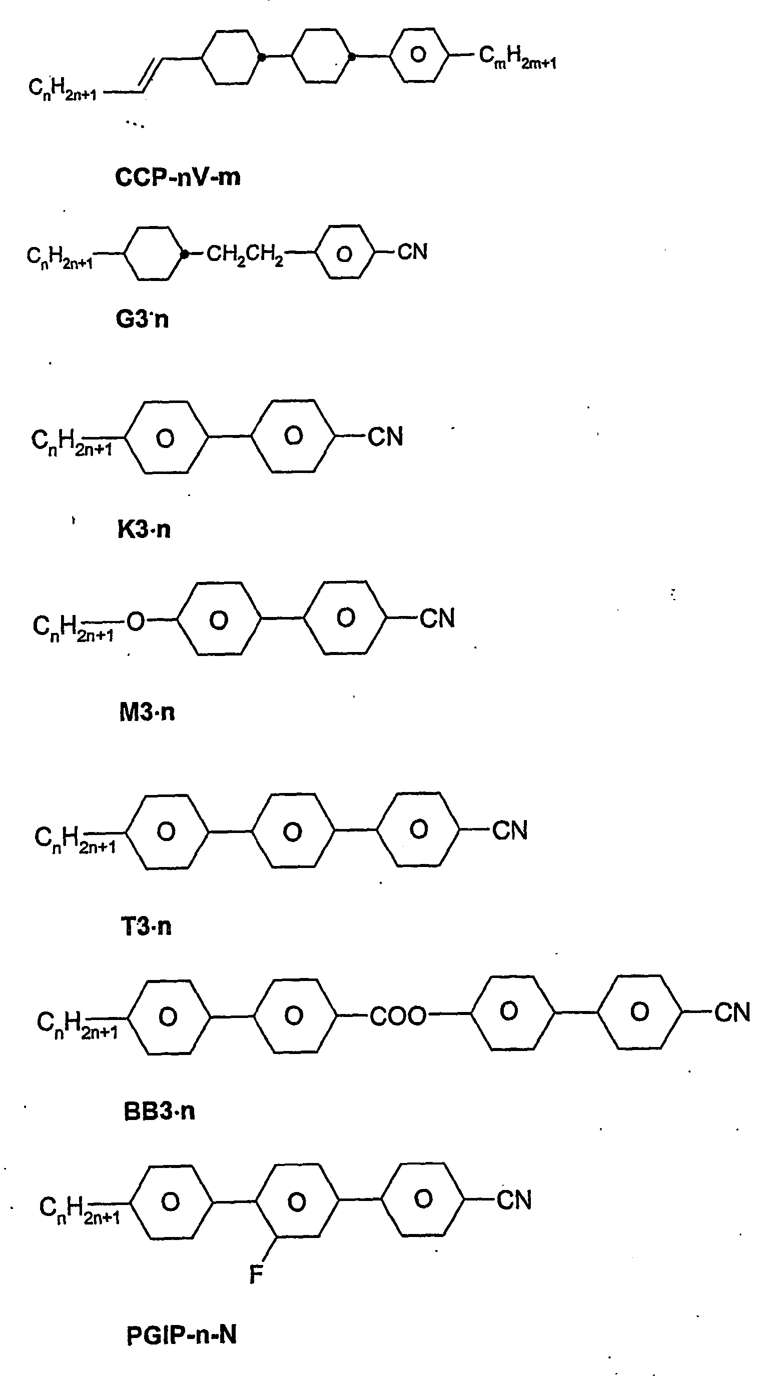

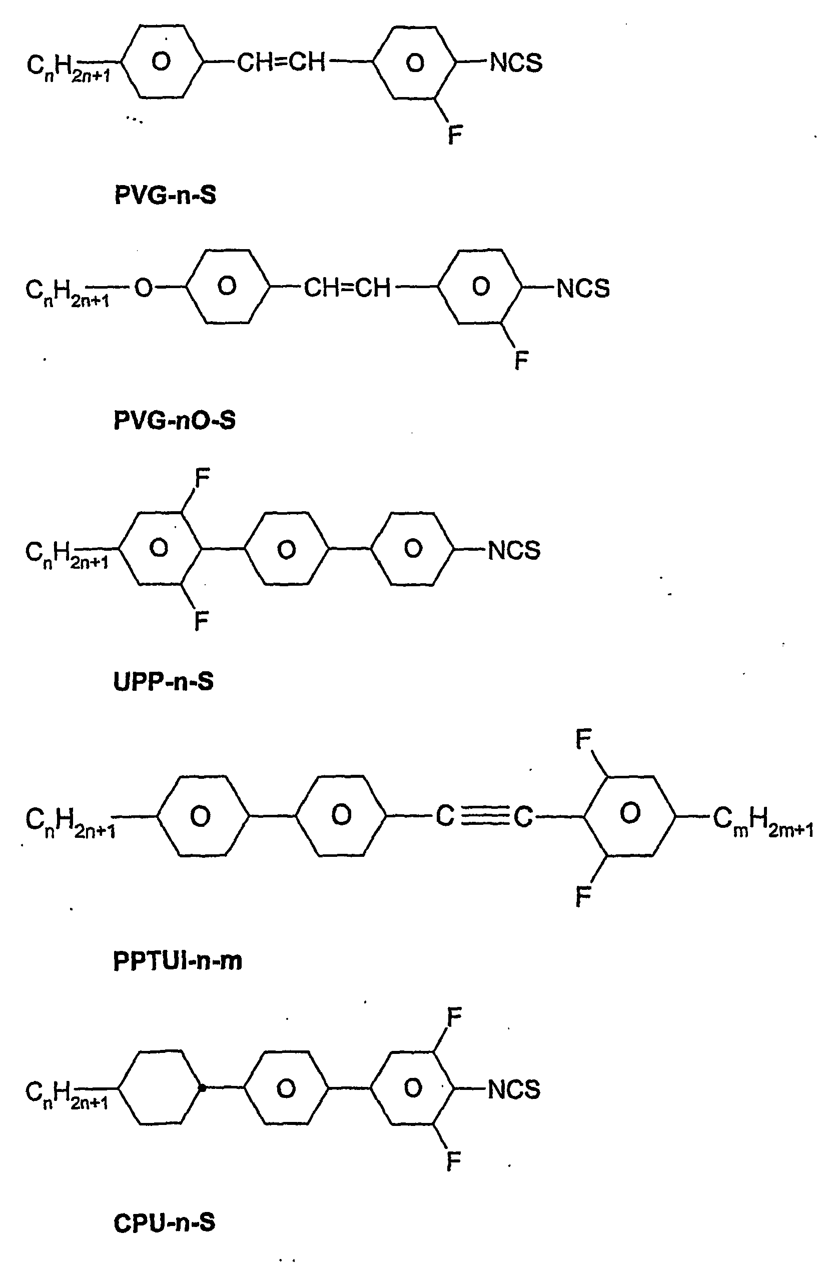

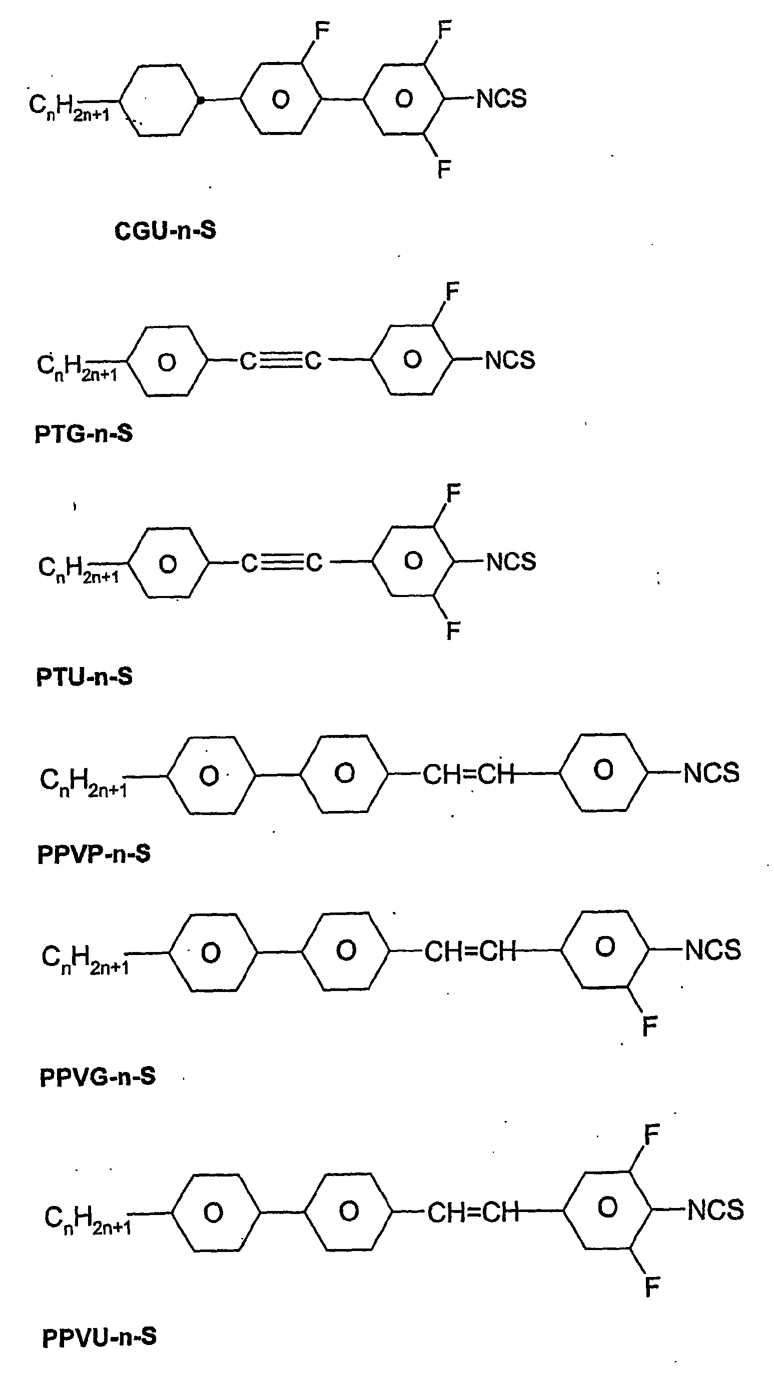

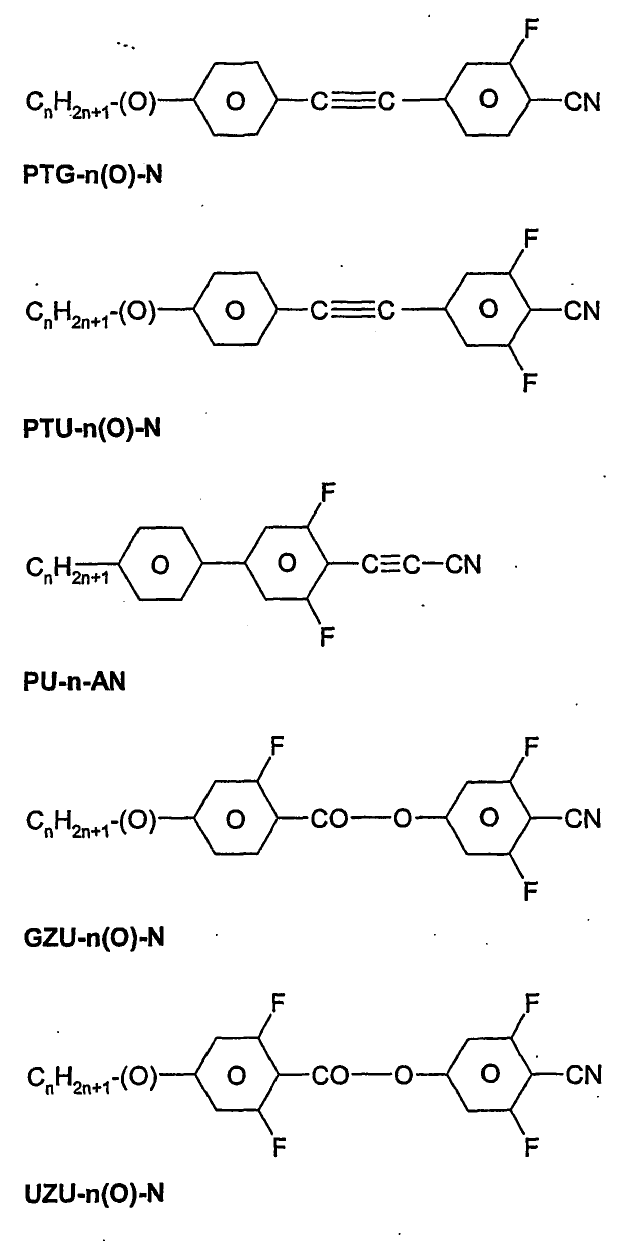

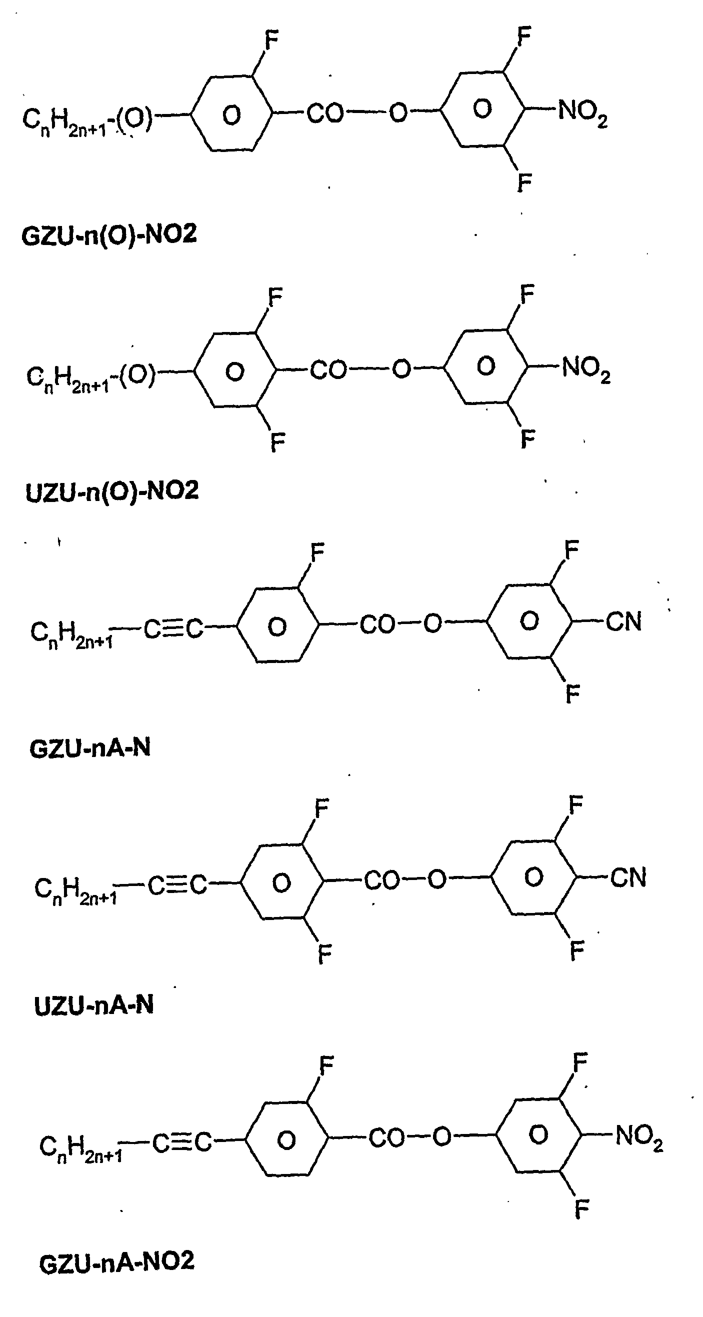

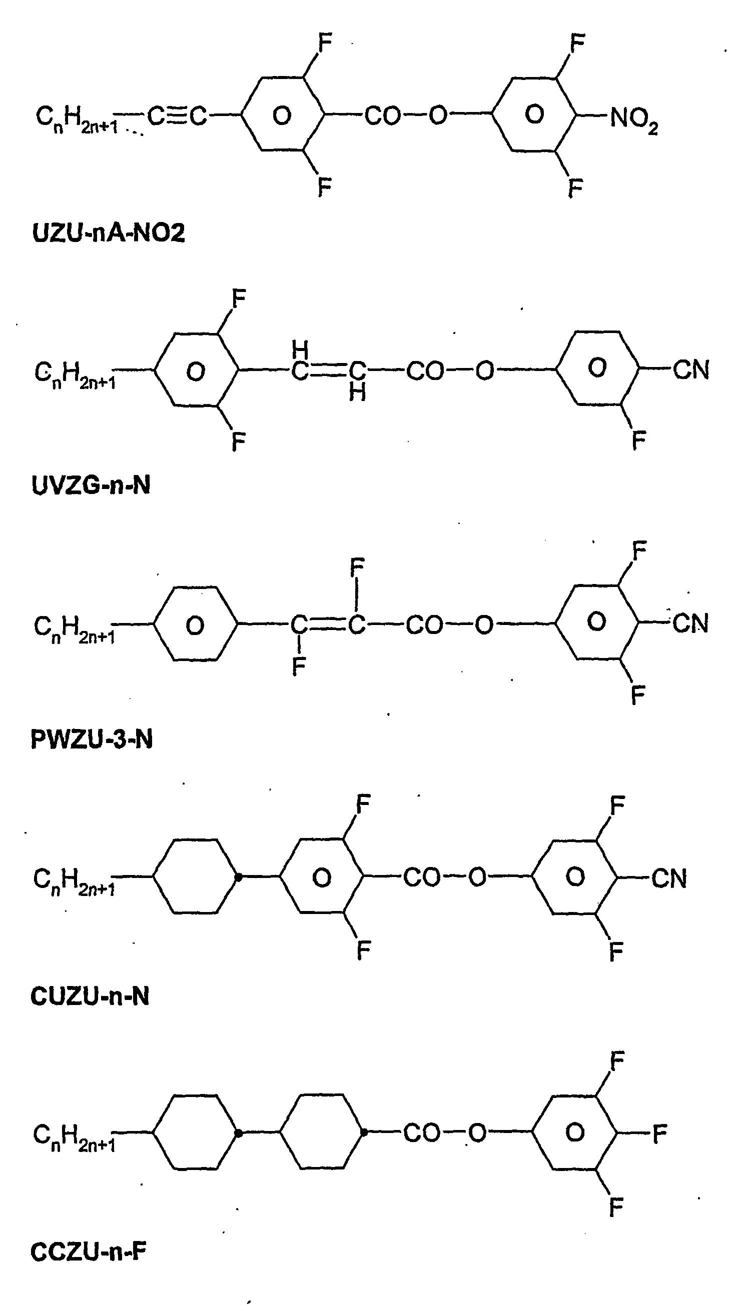

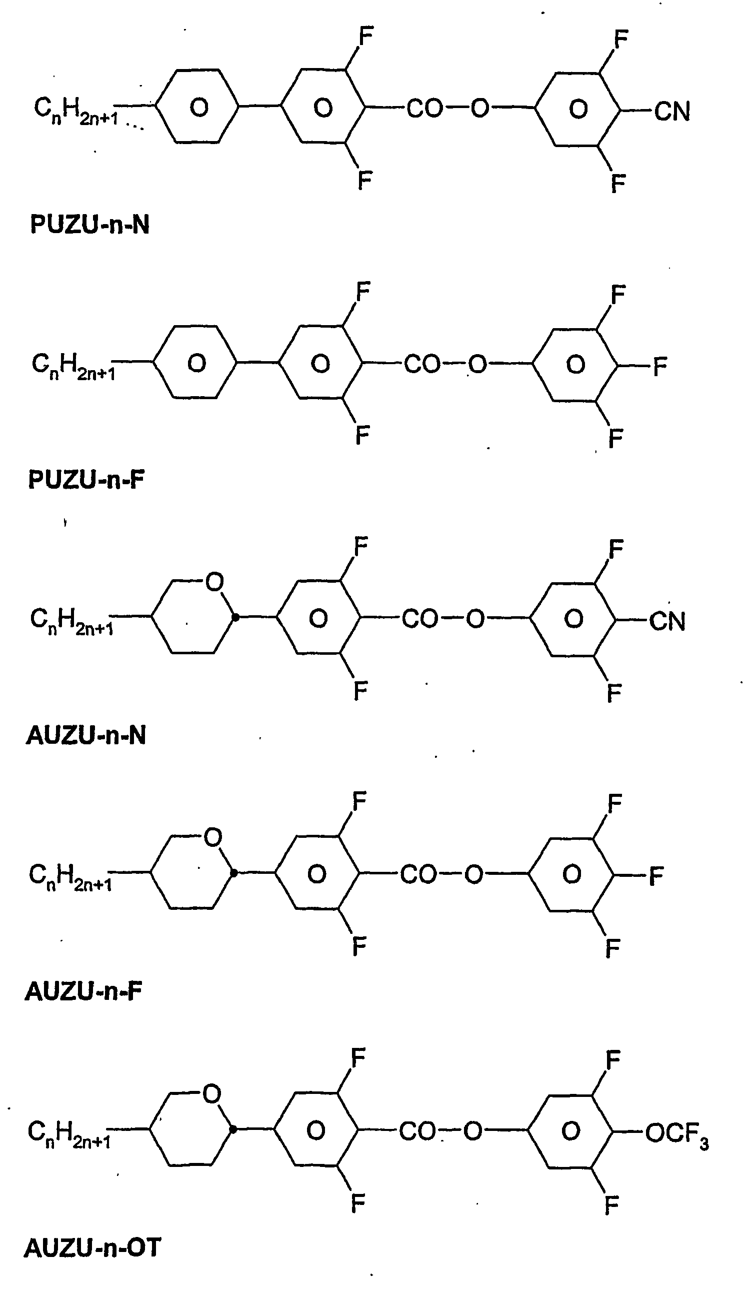

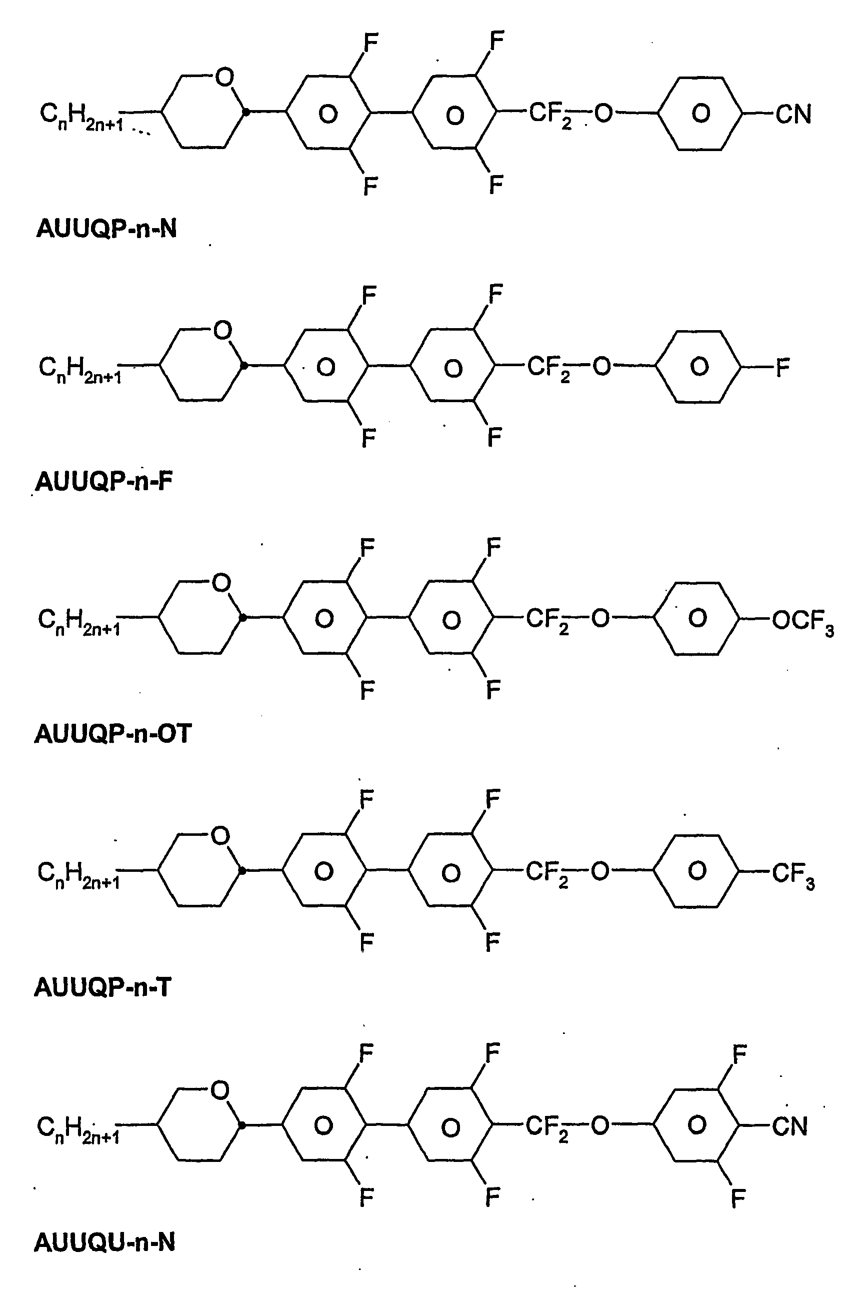

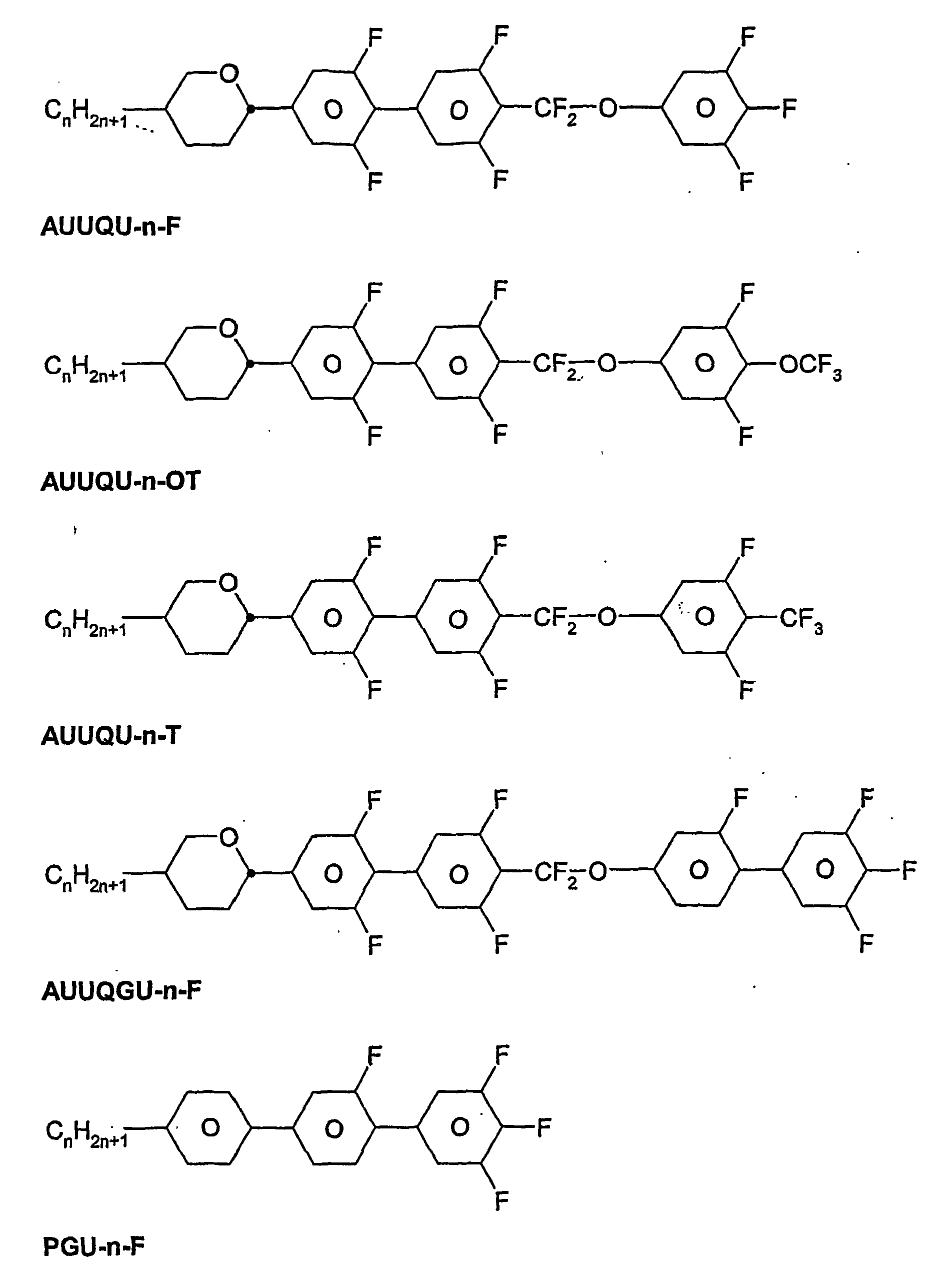

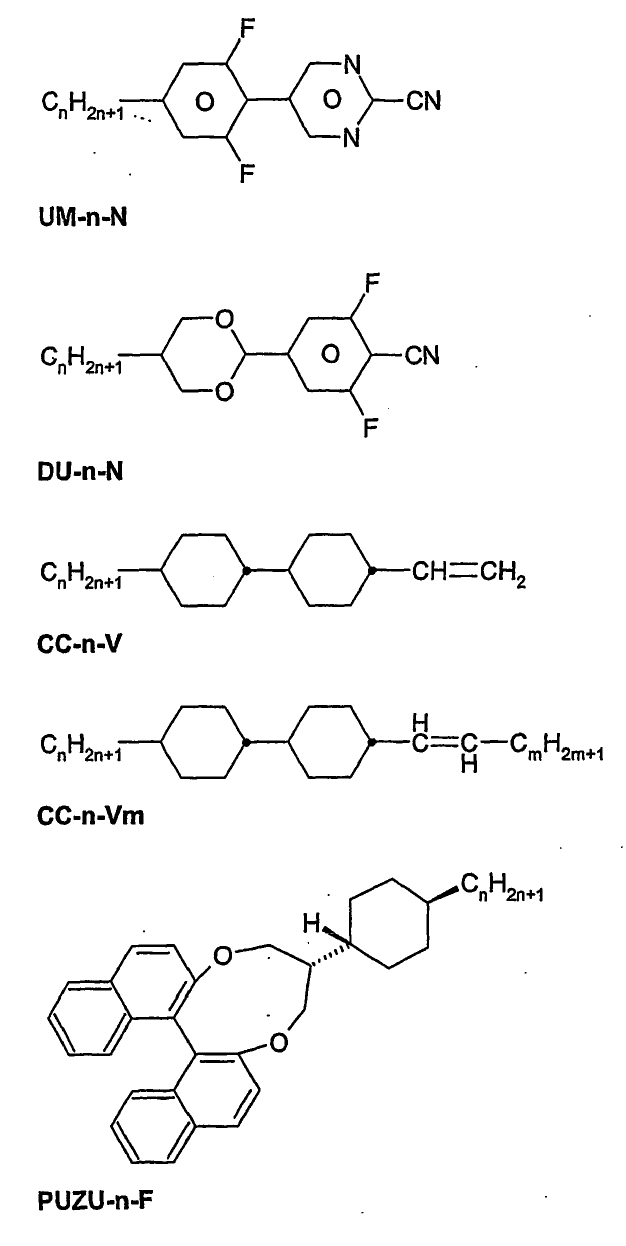

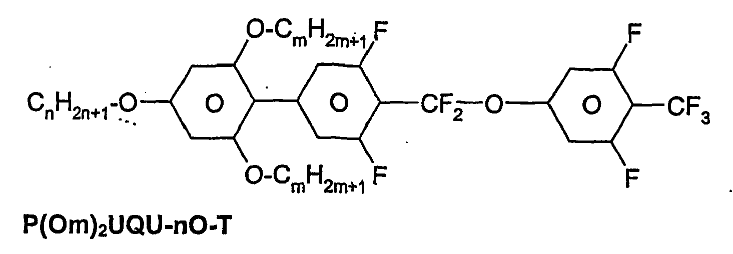

Die mesogenen Medien gemäß der vorliegenden Anmeldung enthalten bevorzugt
- vier oder mehr, bevorzugt sechs oder mehr, Verbindungen ausgewählt aus der Gruppe der Verbindungen der Tabellen A und B und/oder
- fünf oder mehr Verbindungen ausgewählt aus der Gruppe der Verbindungen der Tabelle B und/oder
- zwei oder mehr Verbindungen ausgewählt aus der Gruppe der Verbindungen der Tabelle A.

### Beispiele

Die im Folgenden beschriebenen Beispiele illustrieren die vorliegende Erfindung ohne sie in irgend einer Art zu beschränken. Ferner zeigen sie dem Fachmann welche Eigenschaften und insbesondere welche Eigenschaftskombinationen mit der vorliegenden Erfindung erreicht werden können.

### Vergleichsbeispiel 1

Die Flüssigkristallmischung mit der folgenden Zusammensetzung wurde hergestellt und untersucht.

| Zusammensetzung | | | Physikalische Eigenschaften | | |
|---|---|---|---|---|---|
| Verbindung | | Konz. | T(N,I) | = | 22,9 °C |
| # | Abkürzung | /Massen-% | nₑ(20°C, 589,3 nm) | = | 1,7298 |
| 1 | UM-3-N | 10,0 | Δn(20°C, 589,3 nm) | = | 0,1765 |
| 2 | GZU-3A-N | 10,0 | Δε(20°C, 1 kHz) | > | 0 |
| 3 | UVZG-3-N | 10,0 | | | |
| 4 | PWZU-3-N | 7,0 | ΔH(N,I) | = | 1,14 J/g |
| 5 | PU-3-AN | 16,0 | | | |
| 6 | PU-5-AN | 16,0 | T(N,I)+4° | = | 26,9 °C |
| 7 | PTG-3-N | 15,0 | ε_{av.}(T(N,I)+4°) | = | 34,1 |
| 8 | PTU-4O-N | 15,0 | | | |
| 9 | HP-3N.F | 1,0 | T(N,I)+2° | = | 24,9 °C |
| Σ | | 100,0 | V₇₀(T(N,I)+2°) | = | 113 V |

Diese Flüssigkristallmischung wurde in eine Testzelle gefüllt und bei einer Temperatur von 23,1°C, sowie bei 24,9°C (2° oberhalb des Klärpunkts) bezüglich ihrer elektrooptischen Eigenschaften untersucht.

Die verwendete Testzelle wies interdigitale Elektroden auf nur einem der beiden Substrate auf. Eine elektrooptische Testzelle mit einem Lichtschaltelement enthaltend die Flüssigkristallmischung wurde hergestellt. Die Substrate bestanden aus Glas. Es wurden Substrate ohne Orientierungsschicht und ohne Passivierungsschicht verwendet. Die Elektrodenstruktur bestand aus ineinander verzahnten kammförmigen Elektroden. Der Abstand der Elektroden betrug 15 µm und die Breite der Elektroden voneinander betrug 10 µm. Die Schichtdicke der Elektroden betrug ca. 100 nm. Die Elektroden befanden sich alle in einer gemeinsamen Ebene. Die Schichtdicke des Steuermediums betrug ca. 10 µm.

Es wurde ein erster Polarisator vor und als Analysator ein zweiter Polarisator hinter der Zelle benutzt. Die Absorptionsachsen der beiden Polarisatoren bildeten einen Winkel von 90° zueinander. Der Winkel zwischen der Achse der maximalen Absorption der Polarisatoren und der Komponente des elektrischen Felds in der Ebene der Anzeige betrug jeweils 45°. Die Spannungs-Transmissions-Kennlinie wurde mit einem elektrooptischen Meßplatz DMS 703 der Firma Autronic-Melchers, Karlsruhe, Deutschland bestimmt. Bei senkrechter Beobachtung wurde eine Kurve erhalten wie sie für eine Zelle mit elektrisch kontrollierter Doppelbrechung (z. B. ECB) typisch ist.

Bei 23,1°C liegt der Wert der Schwellenspannung (V₁₀) bei 36,5 V, der Wert der Mittgrauspannung (V₅₀) bei 28 V und der Wert der Sättigungsspannung (V₉₀) bei 31,5 V. Das Maximum des relativen Kontrasts liegt bei 34 V. Bei 24,9°C beträgt V₇₀ der 113 V. Diese Ergebnisse sind in Tabelle 1 zusammengestellt.

**Tabelle 1: Charakteristische Spannungen**

| Beispiel: | V.1 | V.2 | V.3 | 1 | 2 | 5 | 8 |
|---|---|---|---|---|---|---|---|
| Physikalische Parameter | | | | | | | |
| ΔH(N,I)/J/g | 1,14 | 1,20 | 0,80 | 0,89 | 0,75 | 0,52 | 0,51 |
| εₐᵥ.(T(N,I)+4°) | 23,1 | 24,0 | 58,5 | 41,5 | 48,0 | 55,0 | 62,2 |

| Kennlinie | | | | | | | |
|---|---|---|---|---|---|---|---|
| Elektrodenabstand 10 µm, Elektrodenbreite 10 µm | | | | | | | |
| T/°C | 23,1 | 24,0 | 24,0 | n.b. | n.b. | n.b. | n.b. |
| V₁₀(T) / V | 36,5 | 22,0 | 40,5 | n.b. | n.b. | n.b. | n.b. |
| V₅₀(T) / V | 28,0 | 35,5 | 56,0 | n.b. | n.b. | n.b. | n.b. |
| V₉₀(T) / V | 31,5 | 44,5 | 65,5 | n.b. | n.b. | n.b. | n.b. |

| Elektrodenabstand 15 µm, Elektrodenbreite 10 µm | | | | | | | |
|---|---|---|---|---|---|---|---|
| T(N,I)+2° /°C | 24,9 | 25,8 | 25,7 | 34,4 | 37,6 | 7,7 | 16,3 |
| V₇₀(T(N,I)+2°)/V | 113 | 134 | 71 | 103 | 102 | 67 | 70 |
| dV₇₀/dT / V/° | n.b. | 38 | 18 | n.b. | n.b. | 17 | 17 |
| dV₇₀*/dT / %/° | n.b. | 28 | 25 | n.b. | n.b. | 25 | 24 |

| | | |
|---|---|---|
| Bemerkungen: | n.b.: | nicht bestimmt, |
| | dV₇₀/dT: | [V₇₀(T(N,I)+3°) - V₇₀(T(N,I)+1°)] /2° und |
| | dV₇₀*/dT: | [V₇₀(T(N,I)+3°) - V₇₀(T(N,I)⁺1°)] / [V₇₀(T(N,I)+2°) - 2°] |

Wie man aus dieser Tabelle ersehen kann, sind die charakteristischen Spannungen der Flüssigkristallschaltelemente der Beispiele 1, 2, 5 und 8 signifikant niedriger als die der Vergleichsbeispiele 1 und 2. Die Erniedrigung liegt im Vergleich von Beispiel 1 zu Vergleichsbeispiel 1 bereits bei ca. 10 % und im Vergleich zu Vergleichsbeispiel 2 bei ca. 25 %.

### Vergleichsbeispiel 2

Die Flüssigkristallmischung mit der folgenden Zusammensetzung wurde hergestellt und untersucht. Die Zusammensetzung und die Eigenschaften der Mischung sind in der folgenden Tabelle zusammengefaßt.

| Zusammensetzung | | | Physikalische Eigenschaften | | |
|---|---|---|---|---|---|
| Verbindung | | Konz. | T(N,I) | = | 23,8 °C |
| # | Abkürzung | /Massen-% | nₑ(20°C, 589,3 nm) | = | 1,6971 |
| 1 | ME2N.F | 3,0 | Δn(20°C, 589,3 nm) | = | 0,1456 |
| 2 | ME3N.F | 3,0 | ε\|\|(20°C, 1 kHz) | = | 47,4 |
| 3 | ME4N.F | 8,0 | Δε(20°C, 1 kHz) | = | 27,3 |
| 4 | ME5N.F | 8,0 | | | |
| 5 | UM-3-N | 4,0 | ΔH(N,I) | = | 1,20 J/g |
| 6 | PTG-3-N | 8,0 | | | |
| 7 | PTG-5-N | 8,0 | T(N,I)+4° | = | 27,8 °C |
| 8 | PTU-4O-N | 8,0 | εₐᵥ.(T(N,I)+4°) | = | 24,0 |
| 9 | PU-3-AN | 8,0 | | | |
| 10 | PU-5-AN | 8,0 | T(N,I)+2° | = | 25,8 °C |
| 11 | PGU-2-F | 10,0 | V₇₀(T(N,I)+2°) | = | 134 V |
| 12 | PGU-3-F | 10,0 | dV/dT(T(N,I)+2°) | = | 38 V/° |
| 13 | PGU-5-F | 10,0 | | | |
| 14 | HP-3N.F | 4,0 | | | |
| Σ | | 100,0 | | | |

Wie bei Vergleichsbeispiel 1 wird eine elektro-optische Anzeige realisiert und deren Kennlinie vermessen. Bei einer Temperatur von 24,0°C beträgt der Wert der Schwellenspannung (V₁₀) 22 V, der Wert der Mittgrauspannung (V₅₀) 35,5 V und der Wert der Sättigungsspannung (V₉₀) 44,5 V.

Bei einer Temperatur von 2 Grad oberhalb des Klärpunkts beträgt V₇₀ 134 V.

Diese Ergebnisse sind zum Vergleich mit denen des Vergleichsbeispiels 1 Tabelle 1 enthalten.

### Beispiel 1

Die Flüssigkristallmischung mit der folgenden Zusammensetzung wurde hergestellt und untersucht.

| Zusammensetzung | | | Physikalische Eigenschaften | | |
|---|---|---|---|---|---|
| Verbindung | | Konz. | T(N,I) | = | 32,4 °C |
| # | Abkürzung | /Massen-% | Δε(20°C, 1 kHz) | > | 0 |
| 1 | CCG-V-F | 15,0 | | | |
| 2 | UZU-3A-N | 10,2 | ΔH(N,I) | = | 0,89 J/g |
| 3 | UZU-5A-N | 10,2 | | | |
| 4 | GZU-3A-N | 10,2 | T(N,I)+4° | = | 36,4 °C |
| 5 | GZU-4A-N | 9,35 | ε_{av.}(T(N,I)+4°) | = | 41,5 |
| 6 | GZU-40-N | 8,5 | | | |
| 7 | UVZG-3-N | 8,5 | T(N,I)+2° | = | 34,4 °C |
| 8 | CUZU-2-N | 8,5 | V₇₀(T(N,I)+2°) | = | 103 V |
| 9 | CUZU-3-N | 8,5 | | | |
| 10 | CUZU-4-N | 8,5 | | | |
| 11 | HP-5N.F | 2,55 | | | |
| Σ | | 100,0 | | | |

Die Mischung wird in eine Testzelle gefüllt und wie im Vergleichsbeispiel 1 beschrieben untersucht. Insbesondere werden ihre elektrooptischen Eigenschaften bei einer Temperatur von 34,4°C bestimmt.

Die so erhaltene Zelle erreichte bei einer Spannung von 103 V 70 % relativen Kontrast.

Diese Ergebnisse sind zum Vergleich mit denen der Vergleichsbeispiele 1 und 2 in Tabelle 1 enthalten.

### Beispiel 2

Die Flüssigkristallmischung mit der folgenden Zusammensetzung wurde hergestellt und untersucht.

| Zusammensetzung | | | Physikalische Eigenschaften | | |
|---|---|---|---|---|---|
| Verbindung | | Konz. | T(N,I) | = | 35,6 °C |
| # | Abkürzung | /Massen-% | Δε(20°C, 1 kHz) | > | 0 |
| 1 | GZU-4-N | 15,0 | | | |
| 2 | GZU-4O-N | 12,0 | ΔH(N,I) | = | 0,75 J/g |
| 3 | GZU-V2-N | 12,0 | | | |
| 4 | UM-3-N | 9,0 | T(N,I)+4° | = | 39,6 °C |
| 5 | PYP-4N.F.F | 6,8 | εₐᵥ.(T(N,I)+4°) | = | 48,0 |
| 6 | CUZU-2-N | 12,0 | | | |
| 7 | CUZU-3-N | 12,0 | T(N,I)+2° | = | 37,6 °C |
| 8 | CUZU-4-N | 12,0 | V₇₀(T(N,I)+2°) | = | 102 V |
| 9 | HP-3N.F | 7,0 | | | |
| 10 | HP-5N.F | 2,2 | | | |
| Σ | | 100,0 | | | |

Die Mischung wird in eine Testzelle gefüllt und wie im Vergleichsbeispiel 1 beschrieben untersucht. Insbesondere werden ihre elektrooptischen Eigenschaften bei einer Temperatur von 37,6 C bestimmt.

Die so erhaltene Zelle erreichte bei einer Spannung von 102 V 70 % relativen Kontrast. Diese Ergebnisse sind, zum Vergleich mit denen der Vergleichsbeispiele 1 und 2, ebenfalls in Tabelle 1 enthalten.

### Beispiele 3 bis 10 und Vergleichsbeispiele 3 bis 22

Die Flüssigkristallmischungen mit den folgenden Zusammensetzung werden hergestellt und untersucht.

### Beispiel 3

| Zusammensetzung | | | Physikalische Eigenschaften | | |
|---|---|---|---|---|---|
| Verbindung | | Konz. | T(N,I) | = | 37,4 °C |
| # | Abkürzung | /Massen-% | Δε(20°C, 1 kHz) | > | 0 |
| 1 | UZU-3A-N | 16,0 | | | |
| 2 | UZU-5A-N | 18,0 | ΔH(N,I) | = | 0,75 J/g |
| 3 | GZU-4.O-N | 15,0 | | | |
| 4 | CUZU-2-N | 18,0 | T(N,I)+4° | = | 52,7 °C |
| 5 | CUZU-3-N | 15,0 | εₐᵥ.(T(N,I)+4°) | = | 41,5 |
| 6 | CUZU-4-N | 18,0 | | | |
| Σ | | 100,0 | T(N,I)+2° | = | 39,4 °C |
| | | | V₇₀(T(N,I)+2°) | = | 88 V |

### Beispiel 4

| Zusammensetzung | | | Physikalische Eigenschaften | | |
|---|---|---|---|---|---|
| Verbindung | | Konz. | T(N,I) | = | 22,0 °C |
| # | Abkürzung | /Massen-% | Δε(20°C, 1 kHz) | > | 0 |
| 1 | UVZG-3-N | 15,0 | | | |
| 2 | GZU-4-N | 4,0 | ΔH(N,I) | = | 0,92 J/g |
| 3 | GZU-4O-N | 15,0 | | | |
| 4 | UM-3-N | 10,0 | T(N,I)+4° | = | 26,0 °C |
| 5 | DU-2-N | 15,0 | ε_{av.}(T(N,I)+4°) | = | 55,8 |
| 6 | CUZU-2-N | 15,0 | | | |
| 7 | CUZU-3-N | 15,0 | T(N,I)+2° | = | 24,0 °C |
| 8 | CUZU-4-N | 11,0 | V₇₀(T(N,I)+2°) | = | 101 V |
| Σ | | 100,0 | | | |

### Vergleichsbeispiel 3

| Zusammensetzung | | | Physikalische Eigenschaften | | |
|---|---|---|---|---|---|
| Verbindung | | Konz. | T(N,I) | = | 23,7 °C |
| # | Abkürzung | /Massen-% | nₑ(20°C, 589,3 nm) | = | 1,6187 |
| 1 | UZU-3A-N | 12,0 | Δn(20°C, 589,3 nm) | = | 0,0925 |
| 2 | UZU-5A-N | 12,0 | Δε(20°C, 1 kHz) | > | 0 |
| 3 | GZU-3A-N | 12,0 | | | |
| 4 | GZU-4A-N | 11,0 | ΔH(N,I) | = | 0,80 J/g |
| 5 | GZU-4O-N | 10,0 | | | |
| 6 | UVZG-3-N | 10,0 | T(N,I)+4° | = | 27,7 °C |
| 7 | CUZU-2-N | 10,0 | ε_{av.}(T(N,I)+4°) | = | 58,5 |
| 8 | CUZU-3-N | 10,0 | | | |
| 9 | CUZU-4-N | 10,0 | T(N,t)+2° | = | 25,7 °C |
| 10 | HP-5N.F | 3,0 | V₇₀(T(N,I)+2°) | = | 71 V |
| Σ | | 100,0 | dV/dT(T(N,I)+2°) | = | 18 V/° |

Wie bei Beispiel 1 wurde die Mischung bei einer Temperatur von 2 oberhalb des Klärpunkts in einer Testzelle bezüglich ihrer elektrooptischen Eigenschaften untersucht, insbesondre wurde V₇₀ zu 71 V bestimmt.

Außerdem wurde die Mischung bei einer Temperatur von 24,0°C in einer Testzelle bezüglich ihrer elektrooptischen Eigenschaften untersucht. Der Wert der Schwellenspannung (V₁₀) lag bei 40,5 V, der Wert der Mittgrauspannung (V₅₀) bei 56 V und der Wert der Sättigungsspannung (V₉₀) bei 65 V. Der maximale Kontrast wurde bei 73 V erreicht. Bei Spannungen von 80 V bzw. 90 V sank der relative Kontrast wieder auf 90 % bzw. 50 % ab.

Diese Ergebnisse sind, zum Vergleich mit denen der Vergleichsbeispiele 1 und 2 und der Beispiele 1 und 2, ebenfalls in Tabelle 1 enthalten.

### Vergleichsbeispiel 4

| Zusammensetzung | | | Physikalische Eigenschaften | | |
|---|---|---|---|---|---|
| Verbindung | | Konz. | T(N,I) | = | 24,8 °C |
| # | Abkürzung | /Massen-% | Δε(20°C, 1 kHz) | > | 0 |
| 1 | UM-3-N | 10,0 | | | |
| 2 | PYP-3N.F.F | 15,0 | ΔH(N,I) | = | 0,82 J/g |
| 3 | UZU-3A-N | 12,0 | | | |
| 4 | GZU-3A-N | 12,0 | T(N,I)+4° | = | 28,8 °C |
| 5 | GZU-4-N | 1,0 | ε_{av.}(T(N,I)+4°) | = | 60,5 |
| 6 | GZU-4O-N | 10,0 | | | |
| 7 | UVZG-3-N | 10,0 | T(N,I)+2° | = | 26,8 °C |
| 8 | CUZU-2-N | 10,0 | V₇₀(T(N,I)+2°) | = | 79 V |
| 9 | CUZU-3-N | 10,0 | | | |
| 10 | HP-3N.F | 10,0 | | | |
| Σ | | 100,0 | | | |

### Beispiel 5

| Zusammensetzung | | | Physikalische Eigenschaften | | |
|---|---|---|---|---|---|
| Verbindung | | Konz. | T(N,I) | = | 5,7 °C |
| # | Abkürzung | /Massen-% | Δε(20°C, 1 kHz) | > | 0 |
| 1 | UZU-3A-N | 7,5 | | | |
| 2 | GZU-3A-N | 15,0 | ΔH(N,I) | = | 0,52 J/g |
| 3 | GZU-4A-N | 15,0 | | | |
| 4 | GZU-4O-N | 15,0 | T(N,I)+4° | = | 9,7 °C |
| 5 | PU-3-AN | 10,0 | ε_{av.}(T(N,I)+4°) | = | 55,0 |
| 6 | PTU-4O-N | 15,0 | | | |
| 6 | CUZU-2-N | 15,0 | T(N,I)+2° | = | 7,7 °C |
| 7 | CUZU-3-N | 7,5 | V₇₀(T(N,I)+2°) | = | 67 V |
| Σ | | 100,0 | dV/dT(T(N,I)+2°) | = | 17 V/° |

### Beispiel 6

| Zusammensetzung | | | Physikalische Eigenschaften | | |
|---|---|---|---|---|---|
| Verbindung | | Konz. | T(N,1) | = | 24,0 °C |
| # | Abkürzung | /Massen-% | Δε(20°C, 1 kHz) | > | 0 |
| 1 | UZU-3A-N | 12,0 | | | |
| 2 | UZU-5A-N | 4,5 | ΔH(N,I) | = | 0,55 J/g |
| 3 | GZU-3A-N | 12,0 | | | |
| 4 | GZU-4A-N | 12,0 | T(N,I)+4° | = | 28,0 °C |
| 5 | GZU-4-N | 10,0 | εₐᵥ,(T(N,I)+4°) | = | 60,2 |
| 6 | GZU-4O-N | 11,0 | | | |
| 7 | CUZU-2-N | 11,0 | T(N,I)+2° | = | 26,0 °C |
| 8 | CUZU-3-N | 11,0 | V₇₀(T(N,I)+2°) | = | 75 V |
| 9 | CUZU-4-N | 11,0 | | | |
| 10 | HP-3N.F | 5,5 | | | |
| Σ | | 100,0 | | | |

### Beispiel 7

| Zusammensetzung | | | Physikalische Eigenschaften | | |
|---|---|---|---|---|---|
| Verbindung | | Konz. | T(N,I) | = | 22,5 °C |
| # | Abkürzung | /Massen-% | Δε(20°C, 1 kHz) | > | 0 |
| 1 | UZU-3A-N | 15,0 | | | |
| 2 | UZU-5A-N | 5,6 | ΔH(N,I) | = | 0,57 J/g |
| 3 | GZU-3A-N | 15,0 | | | |
| 4 | GZU-4A-N | 15,0 | T(N,I)+4° | = | 26,5 °C |
| 5 | GZU-4O-N | 12,0 | εₐᵥ,(T(N,I)+4°) | = | 60,8 |
| 6 | CUZU-2-N | 11,0 | | | |
| 7 | CUZU-3-N | 11,0 | T(N,I)+2° | = | 24,5 °C |
| 8 | CUZU-4-N | 11,0 | V₇₀(T(N,I)+2°) | = | 69 V |
| 9 | HP-3N.F | 4,4 | | | |
| Σ | | 100,0 | | | |

### Beispiel 8

| Zusammensetzung | | | Physikalische Eigenschaften | | |
|---|---|---|---|---|---|
| Verbindung | | Konz. | T(N,I) | = | 14,3 °C |
| # | Abkürzung | /Massen-% | Δε(20°C, 1 kHz) | > | 0 |
| 1 | UZU-5A-NO2 | 10,0 | | | |
| 2 | UZU-3A-N | 10,8 | ΔH(N,I) | = | 0,51 J/g |
| 3 | UZU-5A-N | 10,8 | | | |
| 4 | GZU-3A-N | 10,8 | T(N,I)+4° | = | 18,3 °C |
| 5 | GZU-4A-N | 9,9 | εₐᵥ.(T(N,I)+4°) | = | 62,2 |
| 6 | GZU-4O-N | 9,0 | | | |
| 7 | UVZG-3-N | 9,0 | T(N,I)+2° | = | 16,3 °C |
| 8 | CUZU-2-N | 9,0 | V₇₀(T(N,I)+2°) | = | 70 V |
| 9 | CUZU-3-N | 9,0 | dV/dT(T(N,I)+2°) | = | 17 V/° |
| 10 | CUZU-4-N | 9,0 | | | |
| 11 | HP-5N.F | 2,7 | | | |
| Σ | | 100,0 | | | |

Diese Ergebnisse sind, zum Vergleich mit denen der Vergleichsbeispiele 1 bis 3 und der Beispiele 1 und 2, ebenfalls in Tabelle 1 enthalten.

### Vergleichsbeispiel 5

| Zusammensetzung | | | Physikalische Eigenschaften | | |
|---|---|---|---|---|---|
| Verbindung | | Konz. | T(N,I) | = | 23,5 °C |
| # | Abkürzung | /Massen-% | nₑ(20°C, 589,3 nm) | = | 1,6138 |
| 1 | CGU-2-F | 11,0 | Δn(20°C, 589,3 nm) | = | 0,0854 |
| 2 | CGU-3-F | 11,0 | ε∥(20°C, 1 kHz) | = | 16,5 |
| 3 | CGU-5-F | 10,0 | Δε(20°C, 1 kHz) | = | 9,1 |
| 4 | BCH-3F.F.F | 18,0 | | | |
| 5 | BCH-5F.F.F. | 14,0 | T(N,I)+4° | = | 27,5 °C |
| 6 | PGU-2-F | 11,0 | εₐᵥ.(T(N,I)+4°) | < | 12,9 |
| 7 | PGU-3-F | 11,0 | | | |
| 8 | BCH-32 | 3.0 | T(N,I)+2° | = | 25,5 °C |
| Σ | | 100,0 | V₇₀(T(N,I)+2°) | = | 63 V |

### Vergleichsbeispiel 6

| Zusammensetzung | | | Physikalische Eigenschaften | | |
|---|---|---|---|---|---|
| Verbindung | | Konz. | T(N,I) | = | 29,6 °C |
| # | Abkürzung | /Massen% | nₑ(20°C, 589,3 nm) | = | 1,7549 |
| 1 | ME2N.F | 10,0 | Δn(20°C, 589,3 nm) | = | 0,2092 |
| 2 | UM-3-N | 8,5 | ε∥(20°C, 1 kHz) | = | 59,2 |
| 3 | PTG-3-N | 15,0 | Δε(20°C, 1 kHz) | = | 42,9 |
| 4 | PTG-5-N | 15,0 | | | |
| 5 | PU-3-AN | 15,0 | ΔH(N,I) | = | 0,95 J/g |
| 6 | PU-5-AN | 15,0 | | | |
| 7 | PTU-4O-N | 15,0 | T(N,I)+4° | = | 33,6 °C |
| 8 | HP-3N.F | 6,5 | εₐᵥ.(T(N,I)+4°) | = | 26,4 |
| Σ | | 100,0 | | | |

### Vergleichsbeispiel 7

| Zusammensetzung | | | Physikalische Eigenschaften | | |
|---|---|---|---|---|---|
| Verbindung | | Konz. | T(N,I) | = | 21,0 °C |
| # | Abkürzung | /Massen% | Δε(20°C, 1 kHz) | > | 0 |
| 1 | UM-3-N | 8,0 | | | |
| 2 | GZU-3A-N | 8,0 | ΔH(N,I) | = | 0,81 J/g |
| 3 | UVZG-3-N | 8,0 | | | |
| 4 | PWZU-3-N | 10,0 | T(N,I)+4° | = | 25,0 °C |
| 5 | PYP-40N.F.F | 6,0 | εₐᵥ,(T(N,I)+4°) | = | 34,8 |
| 6 | PU-3-AN | 15,0 | | | |
| 7 | PU-5-AN | 15,0 | | | |
| 8 | PTG-3-N | 15,0 | | | |
| 9 | PTU-4O-N | 15,0 | | | |
| Σ | | 100,0 | | | |

### Vergleichsbeispiel 8

| Zusammensetzung | | | Physikalische Eigenschaften | | |
|---|---|---|---|---|---|
| Verbindung | | Konz. | T(N,I) | = | 24,2 °C |
| # | Abkürzung | /Massen-% | nₑ(20°C, 589,3 nm) | = | 1,6857 |
| 1 | PTG-3-N | 15,0 | Δn(20°C, 589,3 nm) | = | 0,1405 |
| 2 | PTP-5-N | 15,0 | ε∥ (20°C, 1 kHz) | = | 45,8 |
| 3 | PTU-4O-N | 15,0 | Δε(20°C, 1 kHz) | = | 27,8 |
| 4 | PU-5-AN | 9,0 | | | |
| 5 | PGU-5-F | 14,0 | ΔH(N,I) | = | 0,62 J/g |
| 6 | HP-3N.F | 7,0 | | | |
| 7 | HP-3N.F | 8,0 | T(N,I)+4° | = | 28,2 °C |
| 8 | DU-2-N | 15,0 | εₐᵥ,(T(N,I)+4°) | = | 24,7 |
| 9 | PCH-3N.F.F | 2,0 | | | |
| Σ | | 100,0 | | | |

### Vergleichsbeispiel 9

| Zusammensetzung | | | Physikalische Eigenschaften | | |
|---|---|---|---|---|---|
| Verbindung | | Konz. | T(N,I) | = | 30,1 °C |
| # | Abkürzung | /Massen% | nₑ(20°C, 589,3 nm) | = | 1,6095 |
| 1 | CCP-2F.F.F | 10,0 | Δn(20°C, 589,3 nm) | = | 0,1035 |
| 2 | CCP-3F.F.F | 10,0 | ε∥(20°C, 1 kHz) | = | 62,6 |
| 3 | CCP-5F.F.F | 10,0 | Δε(20°C, 1 kHz) | = | 45,9 |
| 4 | ME2N.F | 10,0 | | | |
| 5 | ME3N.F | 10,0 | ΔH(N,I) | = | 0,92 J/g |
| 6 | ME4N.F | 7,0 | | | |
| 7 | ME5N.F | 15,0 | T(N,I)+4° | = | 34,1 °C |
| 8 | DU-2-N | 6,0 | εₐᵥ.(T(N,I)+4°) | = | 26,7 |
| 9 | PCH-5N.F.F | 2,0 | | | |
| 10 | UM-3-N | 10,0 | | | |
| 11 | HP-3N.F | 10,0 | | | |
| Σ | | 100,0 | | | |

### Vergleichsbeispiel 10

| Zusammensetzung | | | Physikalische Eigenschaften | | |
|---|---|---|---|---|---|
| Verbindung | | Konz. | T(N,I) | = | 29,0 °C |
| # | Abkürzung | /Massen-% | Δε(20°C, 1 kHz) | = | > 0 |
| 1 | UM-3-N | 6,0 | | | |
| 2 | GZU-3A-N | 10,0 | ΔH(N,I) | = | 0,79 J/g |
| 3 | UVZG-3-N | 12,0 | | | |
| 4 | PWZU-3-N | 10,0 | T(N,I)+4° | = | 33,0 °C |
| 5 | PU-3-AN | 15,0 | εₐᵥ.(T(N,I)+4°) | = | 35,2 |
| 6 | PU-5-AN | 15,0 | | | |
| 7 | PTG-3-N | 15,0 | | | |
| 8 | PTU-4O-N | 15,0 | | | |
| 9 | HP-3N.F | 2,0 | | | |
| Σ | | 100,0 | | | |

### Vergleichsbeispiel 11

| Zusammensetzung | | | Physikalische Eigenschaften | | |
|---|---|---|---|---|---|
| Verbindung | | Konz. | T(N,I) | = | 11,5 °C |
| # | Abkürzung | /Massen-% | Δε(20°C, 1 kHz) | = | > 0 |
| 1 | CGU-2-F | 11,0 | | | |
| 2 | CGU-3-F | 11,0 | T(N,I)+4° | = | 15,5 °C |
| 3 | CGU-5-F | 10,0 | ε_{av.}(T(N,I)+4°) | < | 11 |
| 4 | BCH-3F.F.F | 16,0 | | | |
| 5 | BCH-5F.F.F | 14,0 | | | |
| 6 | PGU-2-F | 10,0 | | | |
| 7 | PGU-3-F | 10,0 | | | |
| 8 | PGU-5-F | 9,0 | | | |
| 9 | PCH-7F | 9,0 | | | |
| Σ | | 100,0 | | | |

### Vergleichsbeispiel 12

| Zusammensetzung | | | Physikalische Eigenschaften | | |
|---|---|---|---|---|---|
| Verbindung | | Konz. | T(N,I) | = | 15,5 °C |
| # | Abkürzung | /Massen-% | Δε(20°C, 1 kHz) | > | 0 |
| 1 | CGU-2-F | 12,0 | | | |
| 2 | CGU-3-F | 12,0 | T(N,I)+4° | = | 19,5 °C |
| 3 | CGU-5-F | 11,0 | ε_{av.}(T(N,I)+4°) | < | 11 |
| 4 | BCH-3F.F.F | 18,0 | | | |
| 5 | BCH-5F.F.F | 14,0 | | | |
| 6 | PGU-2-F | 11,0 | | | |
| 7 | PGU-3-F | 10,0 | | | |
| 8 | PGU-5-F | 11,0 | | | |
| Σ | | 100,0 | | | |

### Vergleichsbeispiel 13

| Zusammensetzung | | | Physikalische Eigenschaften | | |
|---|---|---|---|---|---|
| Verbindung | | Konz. | T(N,I) | = | 42,3 °C |
| # | Abkürzung | /Massen-% | Δε(20°C, 1 kHz) | > | 0 |
| 1 | ME2N.F | 3,0 | | | |
| 2 | ME3N.F | 3,0 | ΔH(N,I) | = | 0,80 J/g |
| 3 | ME4N.F | 5,0 | | | |
| 4 | ME5N.F | 3,0 | T(N,I)+4° | = | 46,3 °C |
| 5 | UM-3-N | 4,0 | ε_{av.}(T(N,I)+4°) | = | 21,2 |
| 6 | PTG-3-N | 8,0 | | | |
| 7 | PTG-5-N | 8,0 | | | |
| 8 | PTU-4O-N | 7,0 | | | |
| 9 | PU-3-AN | 8,0 | | | |
| 10 | PU-5-AN | 8,0 | | | |
| 11 | PGU-2-F | 10,0 | | | |
| 12 | PGU-3-F | 10,0 | | | |
| 13 | PGU-5-F | 10,0 | | | |
| 14 | HP-3N.F | 5,0 | | | |
| 15 | HP-4N.F | 5,0 | | | |
| 16 | HP-5N.F | 4,0 | | | |
| Σ | | 100,0 | | | |

### Vergleichsbeispiel 14

| Zusammensetzung | | | Physikalische Eigenschaften | | |
|---|---|---|---|---|---|
| Verbindung | | Konz. | T(N,I) | = | 16,0 °C |
| # | Abkürzung | /Massen-% | Δε(20°C, 1 kHz) | > | 0 |
| 1 | ME2N.F | 3,0 | | | |
| 2 | ME3N.F | 3,0 | ΔH(N,I) | = | 0,82 J/g |
| 3 | ME4N.F | 8,0 | | | |
| 4 | ME5N.F | 9,0 | T(N,I)+4° | = | 20,0 °C |
| 5 | UM-3-N | 4,0 | εₐᵥ.(T(N,I)+4°) | = | 24,7 |
| 6 | PTG-3-N | 9,0 | | | |
| 7 | PTG-5-N | 8,0 | | | |
| 8 | PTU-4O-N | 8,0 | | | |
| 9 | PU-3-AN | 9,0 | | | |
| 10 | PU-5-AN | 9,0 | | | |
| 11 | PGU-2-F | 10,0 | | | |
| 12 | PGU-3-F | 10,0 | | | |
| 13 | PGU-5-F | 10,0 | | | |
| Σ | | 100,0 | | | |

### Vergleichsbeispiel 15

| Zusammensetzung | | | Physikalische Eigenschaften | | |
|---|---|---|---|---|---|
| Verbindung | | Konz. | T(N,I) | = | 16,0 °C |
| # | Abkürzung | /Massen-% | Δε(20°C, 1 kHz) | < | 0 |
| 1 | YY-2-O2 | 8,0 | | | |
| 2 | YY-3-O2 | 8,0 | T(N,I)+4° | = | 20,0 °C |
| 3 | YY-4O-04 | 10,0 | εₐᵥ.(T(N,I)+4°) | < | 3,0 |
| 4 | YY-V1O-O1V | 8,0 | | | |
| 5 | PY-3-O2 | 15,0 | | | |
| 6 | PY-1-O2 | 11,0 | | | |
| 7 | CYY-3-O2 | 10,0 | | | |
| 8 | CYY-5-O2 | 10,0 | | | |
| 9 | PTP-302FF | 10,0 | | | |
| 10 | PTP-502FF | 10,0 | | | |
| Σ | | 100,0 | | | |

### Vergleichsbeispiel 16

| Zusammensetzung | | | Physikalische Eigenschaften | | |
|---|---|---|---|---|---|
| Verbindung | | Konz. | T(N,I) | = | 16,0 °C |
| # | Abkürzung | /Massen-% | Δε(20°C, 1 kHz) | < | 0 |
| 1 | YY-2-O2 | 8,0 | | | |
| 2 | YY-3-O2 | 8,0 | T(N,I)+4° | = | 20,0 °C |
| 3 | YY-3O-O4 | 6,0 | ε_{av.}(T(N,I)+4°) | < | 3,5 |
| 4 | YY-4O-O4 | 6,0 | | | |
| 5 | YY-V1O-O1V | 6,0 | | | |
| 6 | PY-3-O2 | 9,0 | | | |
| 7 | PY-1-O2 | 12,0 | | | |
| 8 | CYY-3-O2 | 9,0 | | | |
| 9 | CYY-5-O2 | 9,0 | | | |
| 10 | PTP-302FF | 10,0 | | | |
| 11 | PTP-302FF | 10,0 | | | |
| 12 | CPY-3-O2 | 5,0 | | | |
| 13 | CCYY-2-O2 | 2,0 | | | |
| Σ | | 100,0 | | | |

### Vergleichsbeispiel 17

| Zusammensetzung | | | Physikalische Eigenschaften | | |
|---|---|---|---|---|---|
| Verbindung | | Konz. | T(N,I) | = | 41,0 °C |
| # | Abkürzung | /Massen-% | nₑ(20°C, 589,3 nm) | = | 1,6157 |
| 1 | PYP-5F | 25,0 | Δn(20°C, 589,3 nm) | = | 0,1066 |
| 2 | PCH-32 | 16,5 | ε∥(20°C, 1 kHz) | = | 5,7 |
| 3 | PCH-301 | 15,0 | Δε(20°C, 1 kHz) | = | 2,4 |
| 4 | PCH-302 | 11,3 | | | |
| 5 | BCH-32 | 14,3 | T(N,I)+4° | = | 45,0 °C |
| 6 | BCH-52 | 10,5 | ε_{av.}(T(N,I)+4°) | < | 4,1 |
| 7 | CBC-33 | 3,7 | | | |
| 8 | CBC-53 | 3,7 | | | |
| Σ | | 100,0 | | | |

### Vergleichsbeispiel 18

| Zusammensetzung | | | Physikalische Eigenschaften | | |
|---|---|---|---|---|---|
| Verbindung | | Konz. | T(N,I) | = | 27,0 °C |
| # | Abkürzung | /Massen-% | nₑ(20°C, 589,3 nm) | = | 1,6470 |
| 1 | PCH-5F | 14,6 | Δn(20°C, 589,3 nm) | = | 0,1350 |
| 2 | PCH-6F | 12,9 | ε∥(20°C, 1 kHz) | = | 7,4 |
| 3 | PCH-7F | 12,5 | Δε(20°C, 1 kHz) | = | 3,6 |
| 4 | PTP-20F | 15,2 | | | |
| 5 | PTP-40F | 19,1 | T(N,I)+4° | = | 31,0 °C |
| 6 | PTP-60F | 25,7 | εₐᵥ.(T(N,I)+4°) | < | 5,6 |
| Σ | | 100,0 | | | |

### Vergleichsbeispiel 19

| Zusammensetzung | | | Physikalische Eigenschaften | | |
|---|---|---|---|---|---|
| Verbindung | | Konz. | T(N,I) | = | 30,0 °C |
| # | Abkürzung | /Massen-% | nₑ(20°C, 589,3 nm) | = | 1,5856 |
| 1 | CCP-2F.F.F | 4,0 | Δn(20°C, 589,3 nm) | = | 0,1007 |
| 2 | CCP-20CF3 | 4,0 | ε∥(20°C, kHz) | = | 14,5 |
| 3 | CCP-30CF3 | 5,0 | Δε(20°C, 1 kHz) | = | 10,6 |
| 4 | CCP-40CF3 | 2,0 | | | |
| 5 | PCH-3 | 6,0 | T(N,I)+4° | = | 34,0 °C |
| 6 | K9 | 4,0 | εₐᵥ.(T(N,I)+4°) | < | 4,7 |
| 7 | BCH-3F.F.F | 12,0 | | | |
| 8 | CGU-2-F | 10,0 | | | |
| 9 | CGU-3-F | 6,0 | | | |
| 10 | CCZU-2-F | 5,0 | | | |
| 11 | CCZU-3-F | 16,0 | | | |
| 12 | CCZU-5-F | 5,0 | | | |
| 13 | CC-5-V | 2,0 | | | |
| 14 | CCP-V-1 | 10,0 | | | |
| 15 | CC-3-V1 | 9,0 | | | |
| Σ | | 100,0 | | | |

### Vergleichsbeispiel 20

| Zusammensetzung | | | Physikalische Eigenschaften | | |
|---|---|---|---|---|---|
| Verbindung | | Konz. | T(N,I) | = | 33,0 °C |
| # | Abkürzung | /Massen-% | nₑ(20°C, 589,3 nm) | = | 1,6010 |
| 1 | PCH-5 | 19,0 | Δn(20°C, 589,3 nm) | = | 0,1100 |
| 2 | PCH-302 | 31,0 | ε∥(20°C, 1 kHz) | = | 9,5 |
| 3 | PCH-304 | 31,0 | Δε(20°C, 1 kHz) | = | 4,9 |
| 4 | K15 | 19,0 | | | |
| Σ | | 100,0 | T(N,I)+4° | = | 37,0 °C |
| | | | εₐᵥ.(T(N,I)⁺4°) | < | 6,2 |

### Vergleichsbeispiel 21

| Zusammensetzung | | | Physikalische Eigenschaften | | |
|---|---|---|---|---|---|
| Verbindung | | Konz. | T(N,I) | = | 50,0 °C |
| # | Abkürzung | /Massen-% | Δε(20°C, 1 kHz) | < | 0 |
| 1 | PCH-302FF | 26,0 | | | |
| 2 | PCH-502FF | 26,0 | T(N,I)+4° | = | 54,0 °C |
| 3 | CCP-V-1 | 15,0 | ε_{av.}(T(N,I)+4°) | < | 2,0 |
| 4 | CC-5-V | 19,0 | | | |
| 5 | CCH-35 | 8,0 | | | |
| 6 | BCH-32 | 6,0 | | | |
| Σ | | 100,0 | | | |

### Vergleichsbeispiel 22

| Zusammensetzung | | | Physikalische Eigenschaften | | |
|---|---|---|---|---|---|
| Verbindung | | Konz. | T(N,I) | = | 50,0 °C |
| # | Abkürzung | /Massen-% | nₑ(20°C, 589,3 nm) | = | 1,5640 |
| 1 | PCH-302FF | 26,0 | Δn(20°C, 589,3 nm) | = | 0,0821 |
| 2 | PCH-502FF | 26,0 | ε∥(20°C, 1 kHz) | = | 3,9 |
| 3 | CCP-V-1 | 13,0 | Δε(20°C, 1 kHz) | = | -2,9 |
| 4 | CC-5-V | 16,0 | | | |
| 5 | CCH-35 | 5,0 | T(N,I)+4° | = | 54,0 °C |
| 6 | BCH-32 | 9,0 | εₐᵥ.(T(N,I)+4°) | < | 2,0 |
| 7 | CCP-21FF | 3,0 | | | |
| 8 | PCH-301 | 2,0 | | | |
| Σ | | 100,0 | | | |

### Beispiel 9

| Zusammensetzung | | | Physikalische Eigenschaften | | |
|---|---|---|---|---|---|
| Verbindung | | Konz. | T(BP,I) | = | 43,5 °C |
| # | Abkürzung | /Massen-% | T(N*,BP) | = | 30,0 °C |
| 1 | AUUQU-3-N | 10,0 | ΔT(BP) | = | 13,5 ° |
| 2 | CUZU-3-N | 9,0 | | | |
| 3 | CUZU-4-N | 9,0 | Δε(20°C, 1 kHz) | > | 0 |
| 4 | HP-3N.F | 8,0 | | | |
| 5 | AUUQU-3-OT | 10,0 | T(N*,BP)+4° | = | 34,0 °C |
| 6 | AUUQU-3-F | 9,0 | εₐᵥ.(T(N*,I)+4°) | = | 42 |
| 7 | AUUQU-3-T | 8,0 | | | |
| 8 | AUUQP-3-T | 5,0 | T(N*,I)+2° | = | 32,0 °C |
| 9 | PUZU-3-F | 9,0 | V₉₀(T(N*,I)+2°) | = | 40 V |
| 10 | PUZU-5-F | 8,0 | | | |
| 11 | P(O3)₂UQU-30-T | 10,0 | | | |
| 12 | N(O1)₂C*H-C-3 | 5,0 | | | |
| Σ | | 100,0 | | | |

Das Steuermedium dieses Beispiels weist einen Übergang von der nematischen (hier stark verdrillten cholesterischen) Phase in die Blaue Phase auf. Es weist eine niedrige charakteristische Spannung V₉₀ auf und ist durch eine besonders günstige, niedrige Temperaturabhängigkeit der charakteristischen Spannungen, auch im Vergleich mit den Beispielen 1 bis 8 der vorliegenden Anmeldung, gekennzeichnet.

### Beispiel 10

| Zusammensetzung | | | Physikalische Eigenschaften | | |
|---|---|---|---|---|---|
| Verbindung | | Konz. | | | |
| # | Abkürzung | /Massen% | T(BP,I) | = | 44,5 °C |
| 1 | AUUQU-3-N | 9,98 | T(N*,BP) | = | 23,5 °C |
| 2 | AUZU-3-N | 9,98 | ΔT(BP) | = | 21,0 ° |
| 3 | AUZU-4-N | 9,98 | | | |
| 4 | GZU-3A-N | 8,00 | Δε(20°C, 1 kHz) | > | 0 |
| 5 | HP-3N.F | 6,02 | | | |
| 6 | AUUQU-3-OT | 9,98 | T(N*,BP)+4° | = | 27,5 °C |
| 7 | AUUQU-3-T | 8,00 | ε_{av.}(T(N*,I)+4°) | = | 43 |
| 8 | AUUQU-3-F | 9,03 | | | |
| 9 | AUUQGU-3-F | 8,00 | T(N*,I)+2° | = | 25,5 °C |
| 10 | PUZU-3-F | 7,05 | V₉₀(T(N*,I)+2°) | = | 76 V |
| 11 | P(O3)₂UQU-30-T | 5,0 | | | |
| 12 | N(O1)₂C*H-C-3 | 9,0 | | | |
| Σ | | 100,0 | | | |

Das Steuermedium dieses Beispiels weist, wie das des Beispiels 9, einen Übergang von der stark verdrillten cholesterischen Phase in die Blaue Phase auf. Es ist durch eine ganz besonders günstige, niedrige Temperaturabhängigkeit der charakteristischen Spannungen gekennzeichnet.

### Beschreibung der Abbildungen

Abbildung 1: Die Abbildung zeigt schematisch im Querschnitt den Aufbau eines Schaltelements oder eines Teils eines Schaltelements gemäß der vorliegenden Anmeldung. Zwischen den inneren Oberflächen der Substrate (1) und (1') befindet sich das Steuermedium (2). Auf der inneren Oberfläche des einen Substrats (1) befinden sich die beiden Elektroden (3) und (4) der Elektrodenstruktur, die mit voneinander verschiedenen Potentialen beaufschlagt werden können. Vop bezeichnet die Spannungs-, Ladungs- bzw. Stromquelle. Die von Vop ausgehenden Linien symbolisieren die elektrischen Zuleitungen zu den Elektroden.

### Liste der Bedeutung der Bezugszeichen der Abbildungen:

- 1 :: Oberfläche des ersten Substrats,
- 1' :: Oberfläche des 2. Substrats,
- 2 :: Steuerschicht,
- 3 :: Leitfähige Schicht der Elektrodenstruktur, die mit dem 1. Potential beaufschlagt werden kann,
- 4 :: Leitfähige Schicht der Elektrodenstruktur, die mit dem 2. Potential beaufschlagt werden kann,
- Vop :: Spannungs-, Ladungs- bzw. Stromquelle

## Patentansprüche

1. Elektrooptisches Lichtsteuerelement umfassend
- ein Substrat oder mehrere Substrate,
- eine Elektrodenanordnung,
- mindestens ein Element oder mehrere Elemente zur Polarisation des Lichts und
- ein Steuermedium,
**dadurch gekennzeichnet, dass**
- das Lichtsteuerelement bei einer Temperatur betrieben wird, bei der das Steuermedium im nicht angesteuerten Zustand in einer optisch isotropen Phase vorliegt und dass
- die Elektrodenanordnung ein elektrisches Feld mit einer signifikanten Komponente parallel zur Fläche des mesogenen Steuermediums erzeugen kann und dass
- das mesogene Steuermedium mindestens eine der folgenden folgende Bedingungen (a) und (f) erfüllt und für den Fall, dass es von diesen beiden Bedingungen (a) und (f) nur die Bedingung (a) erfüllt zusätzlich mindestens eine der folgenden Bedingungen (b) und (c) und im Fall, dass es von den Bedingungen (b) und (c) nur die Bedingung (c) erfüllt, mindestens eine der beiden weiteren folgenden Bedingungen (d) und (e) erfüllt und im Fall, dass es die Bedingung (f) erfüllt optional zusätzlich die Bedingung (g) erfült
- (a) das Steuermedium weist bei steigender Temperatur einen Übergang von der nematischen Phase oder von der cholesterischen Phase in die isotrope Phase (T(N,I) bzw. T(N*,I)) auf und die dielektrische Suszeptibilität des Steuermediums bei einer Temperatur von 4 Grad oberhalb des Klärpunkts beträgt 25 oder mehr,
- (b) die Klärenthalpie des Steuermediums beträgt 0;78 J/g oder weniger oder
- (c) die Klärenthalpie des Steuermediums beträgt 1,50 J/g oder weniger und
- (d) die dielektrische Suszeptibilität des Steuermediums bei einer Temperatur von 4 Grad oberhalb des Klärpunkts beträgt 27 oder mehr, mit der Maßgabe, dass Lichtsteuerelemente enthaltend Steuermedien, die 8%, 10% oder 12% der Verbindung UVZG-3-N enthalten ausgeschlossen sind oder
- (e) die dielektrische Suszeptibilität des Steuermediums bei einer Temperatur von 4 Grad oberhalb des Klärpunkts beträgt 35,5 oder mehr mit der Maßgabe, dass Lichtsteuerelemente enthaltend Steuermedien mit einer der beiden folgenden Zusammensetzungen 1 und 2
| Zusammensetzung 1 | | | Zusammensetzung 2 | | |
|---|---|---|---|---|---|
| Verbindung | | Konz. | Verbindung | | Konz. |
| # | Abkürzung | /% | # | Abkürzung | /% |
| 1 | UZU-3A-N | 12,0 | 1 | UM-3-N | 10,0 |
| 2 | UZU-5A-N | 12,0 | 2 | PYP-3N.F.F | 15,0 |
| 3 | GZU-3A-N | 12,0 | 3 | UZU-3A-N | 12,0 |
| 4 | GZU-4A-N | 11,0 | 4 | GZU-3A-N | 12,0 |
| 5 | GZU-4O-N | 10,0 | 5 | GZU-4-N | 1,0 |
| 6 | UVZG-3-N | 10,0 | 6 | GZU-4O-N | 10,0 |
| 7 | CUZU-2-N | 10,0 | 7 | UVZG-3-N | 10,0 |
| 8 | CUZU-3-N | 10,0 | 8 | CUZU-2-N | 10,0 |
| 9 | CUZU-4-N | 10,0 | 9 | CUZU-3-N | 10,0 |
| 10 | HP-5N.F | 3,0 | 10 | HP-3N.F | 10,0 |
ausgeschlossen sind, wobei die Abkürzungen für die Verbindungen die im Text der Anmeldung gegebene Bedeutung haben,
- (f) das Steuermedium weist bei steigender Temperatur bei einer Temperatur T(N*,BP) einen Übergang von der cholesterischen Phase (Ch, hier chirale nematische Phase N* genannt,) in eine Blaue Phase (BP) auf und
- (g) die dielektrische Suszeptibilität des Steuermediums bei einer Temperatur von 4 Grad oberhalb dieser Übergangstemperatur (T(N*,BP)) beträgt 25 oder mehr.

2. Lichtsteuerelement nach Anspruch 1, **dadurch gekennzeichnet, dass**
- die Klärenthalpie des mesogenen Steuermediums 1,10 J/g oder weniger beträgt.

3. Lichtsteuerelement nach Anspruch 2, **dadurch gekennzeichnet, dass**
- die Klärenthalpie des mesogenen Steuermediums 0,70 J/g oder weniger beträgt.

4. Lichtsteuerelement nach mindestens einem der Ansprüche 1 bis 3,
**dadurch gekennzeichnet, dass**
- die dielektrische Suszeptibilität des Steuermediums bei einer Temperatur von 4 Grad oberhalb des Klärpunkts bzw. der Übergangstemperatur (T(N*,BP) 40 oder mehr beträgt.

5. Lichtsteuerelement nach Anspruch 4, **dadurch gekennzeichnet, dass**
- die dielektrische Suszeptibilität des Steuermediums bei einer Temperatur von 4 Grad oberhalb des Klärpunkts bzw. der Übergangstemperatur (T(N*,BP) 55 oder mehr beträgt.

6. Lichtsteuerelement nach mindestens einem der Ansprüche 1 bis 5,
**dadurch gekennzeichnet, dass**
- die optische Anisotropie bei einer Temperatur von 4 Grad unterhalb des Klärpunkts bzw. der Übergangstemperatur (T(N*,BP) 0,080 oder mehr beträgt.

7. Lichtsteuerelement nach mindestens einem der Ansprüche 1 bis 6, **dadurch gekennzeichnet, dass** das mesogene Steuermedium eine oder mehrere Verbindungen der Formel I enthält, 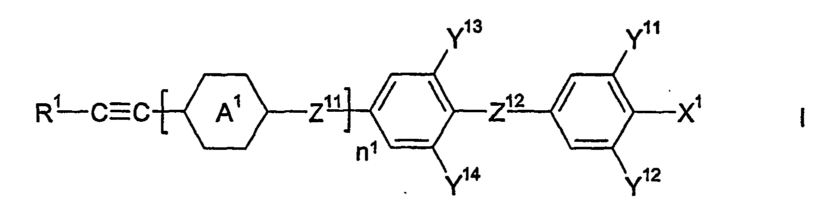 worin
R¹ Alkyl mit 1 bis 7 C-Atomen oder Oxaalkyl mit 2 bis 7 C-Atomen, 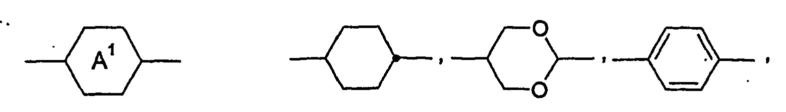 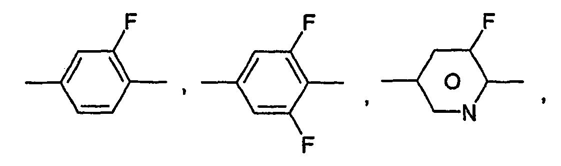 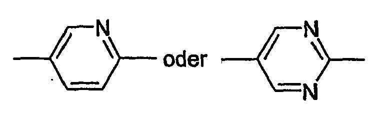
Z¹¹ und Z¹² jeweils voneinander unabhängig, eine Einfachbindung, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, -CF₂-O-, -O-CF₂- oder -C≡C- oder eine Kombination von zwei oder mehreren dieser Gruppen,
X¹ F, Cl, NO₂, -OCF₃, -CF₃, -OCF₂H, Cl, CN, -C≡C-CN oder NCS,
Y¹¹, Y¹², Y¹³ und Y¹⁴, jeweils unabhängig voneinander, H oder F und
n¹ 0 oder 1 bedeuten.

8. Lichtsteuerelement nach mindestens einem der Ansprüche 1 bis 7, **dadurch gekennzeichnet, dass** das mesogene Steuermedium eine oder mehrere Verbindungen der Formel II enthält, 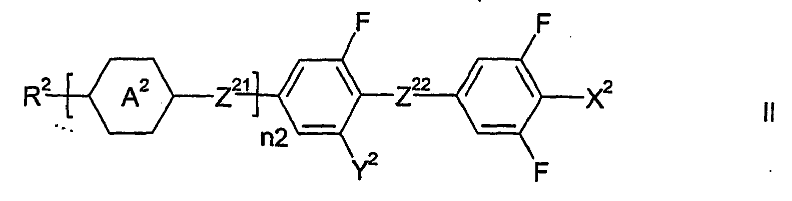 worin
R² Alkyl oder Alkoxy mit 1 bis 7 C-Atomen, Alkenyl, Alkenyloxy oder Oxaalkyl mit 2 bis 7 C-Atomen, 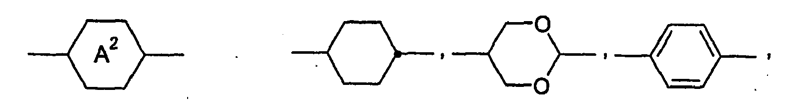 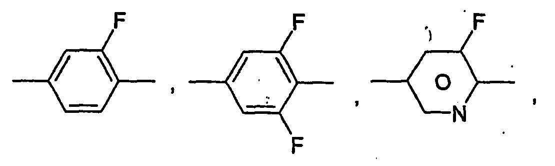 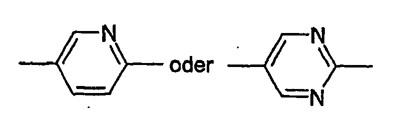
Z²¹ und Z²² jeweils voneinander unabhängig, eine Einfachbindung -CO-O-, trans -CH=CH-, -CH=CF-, -CF=CH-, -CF=CF-, -CH=CF-CO-O-, -CF₂-O-, -O-CF₂- oder -C≡C- oder eine Kombination von zwei oder mehreren dieser Gruppen,
X² F, Cl, NO₂, -OCF₃, -CF₃, -OCF₂H, Cl, CN, -C≡C-CN oder NCS,
Y² H oder F und
n² 0 oder 1 bedeuten.

9. Lichtsteuerelement nach mindestens einem der Ansprüche 1 bis 8, **dadurch gekennzeichnet, dass** das Medium neben den Verbindungen der Formeln 1 und/oder II eine oder mehrere weitere mesogene Verbindungen enthält.

10. Lichtsteuerelement nach mindestens einem der Ansprüche 1 bis 9, **dadurch gekennzeichnet, dass** das mesogene Steuermedium
- 5% bis 80 einer oder mehrerer Verbindungen der Formel 1 und/oder
- 5% bis 95% einer oder mehrerer Verbindungen der Formel II und/oder
- 0% bis 30% einer oder mehrerer weiterer mesogenen Verbindungen enthält.

11. Elektrooptische Anzeige enthaltend ein oder mehrere Lichtsteuerelemente nach mindestens einem der Ansprüche 1 bis 10.

12. Elektrooptische Anzeige nach Anspruch 11, **dadurch gekennzeichnet, dass** die Anzeige mittels einer aktiven Matrix angesteuert wird.

13. Elektrooptisches Anzeigesystem enthaltend eine oder mehrere elektrooptische Anzeigen nach mindestens einem der Ansprüche 11 und 12.

14. Elektrooptisches Anzeigesystem nach Anspruch 13, **dadurch gekennzeichnet, dass** es als Fernsehbildschirm, als Computer monitor oder als beides verwendet werden kann.

15. Verwendung eines Lichtsteuerelements nach mindestens einem der Ansprüche 1 bis 10, zur Darstellung von Information.

16. Verwendung einer elektrooptischen Anzeige nach mindestens einem der Ansprüche 11 und 12, in einem elektrooptischen Anzeigesystem.

17. Verwendung eines elektrooptischen Anzeigesystems nach mindestens einem der Ansprüche 13 und 14, zur Darstellung von Videosignalen oder von digitalen Signalen.

18. Medium **dadurch gekennzeichnet, dass** es die folgende Bedingung (a) und mindestens eine der beiden weitem folgenden Bedingungen (b) und (c) erfüllt
- (a) das Medium weist bei steigender Temperatur einen Übergang von der nematischen Phase oder von der cholesterischen Phase in die isotrope Phase (T(N,I) bzw. T(N*,I)) und auf die Klärenthalpie des Mediums beträgt 1,50 J/g oder weniger und
- (b) die dielektrische Suszeptibilität des Mediums bei einer Temperatur von 4 Grad oberhalb des Klärpunkts beträgt 27 oder mehr, mit der Maßgabe, dass Medien, die 8%, 10% oder 12% der Verbindung UVZG-3-N enthalten ausgeschlossen sind oder
- (c) die dielektrische Suszeptibilität des Mediums bei einer Temperatur von 4 Grad oberhalb des Klärpunkts beträgt 35,5 oder mehr, mit der Maßgabe, dass Medien mit einer der beiden folgenden Zusammensetzungen 1 und 2
| Zusammensetzung 1 | | | Zusammensetzung 2 | | |
|---|---|---|---|---|---|
| Verbindung | | Konz. | Verbindung | | Konz. |
| # | Abkürzung | /% | # | Abkürzung | /% |
| 1 | UZU-3A-N | 12,0 | 1 | UM-3-N | 10,0 |
| 2 | UZU-5A-N | 12,0 | 2 | PYP-3N.F.F | 15,0 |
| 3 | GZU-3A-N | 12,0 | 3 | UZU-3A-N | 12,0 |
| 4 | GZU-4A-N | 11,0 | 4 | GZU-3A-N | 12,0 |
| 5 | GZU-4O-N | 10,0 | 5 | GZU-4-N | 1,0 |
| 6 | UVZG-3-N | 10,0 | 6 | GZU-4O-N | 10,0 |
| 7 | CUZU-2-N | 10,0 | 7 | UVZG-3-N | 10,0 |
| 8 | CUZU-3-N | 10,0 | 8 | CUZU-2-N | 10,0 |
| 9 | CUZU-4-N | 10,0 | 9 | CUZU-3-N | 10,0 |
| 10 | HP-5N.F | 3,0 | 10 | HP-3N.F | 10,0 |
ausgeschlossen sind, wobei die Abkürzungen für die Verbindungen die in der Anmeldung Text gegebene Bedeutung haben oder, dass das Medium die Bedingung (d) erfüllt
- (d) das Steuermedium weist bei steigender Temperatur bei einer Temperatur T(N*,BP) einen Übergang von der cholesterischen Phase in eine Blaue Phase (BP) auf und dass optional die dielektrische Suszeptibilität des Steuermediums bei einer Temperatur von 4 Grad oberhalb dieser Übergangstemperatur 25 oder mehr beträgt.

19. Medium nach Anspruch 18, **dadurch gekennzeichnet, dass** es eine Klärenthalpie von 1,00 J/g oder weniger aufweist.

20. Medium nach Anspruch 19, **dadurch gekennzeichnet, dass** es eine Klärenthalpie von 0,80 J/g oder weniger aufweist.

21. Medium nach mindestens einem der Ansprüche 18 bis 20, **dadurch gekennzeichnet, dass** die dielektrische Suszeptibilität des Mediums bei einer Temperatur von 4 Grad oberhalb des Klärpunkts bzw. der Umwandlungstemperatur 40 oder mehr beträgt.

22. Medium nach Anspruch 21, **dadurch gekennzeichnet, dass** die dielektrische Suszeptibilität des Mediums bei einer Temperatur von 4 Grad oberhalb des Klärpunkts bzw. der Umwandlungstemperatur 55 oder mehr beträgt.

23. Medium nach mindestens einem der Ansprüche 18 bis 22, **dadurch gekennzeichnet, dass** es einen Klärpunkt bzw. eine Umwandlungstemperatur im Bereich von -30°C bis 80°C aufweist.

24. Medium nach Anspruch 23, **dadurch gekennzeichnet, dass** es einen Klärpunkt bzw. eine Umwandlungstemperatur im Bereich von 0°C bis 45°C aufweist.

25. Medium nach mindestens einem der Ansprüche 18 bis 24, **dadurch gekennzeichnet, dass** die optische Anisotropie des Mediums bei einer Temperatur von 4 Grad unterhalb des Klärpunkts bzw. der Umwandlungstemperatur 0,080 oder mehr beträgt.

26. Medium nach mindestens einem der Ansprüche 18 bis 25, **dadurch gekennzeichnet, dass** es eine oder mehrere Verbindungen der Formel I, wie in Anspruch 7 gegeben, enthält.

27. Medium nach mindestens einem der Ansprüche 18 bis 26, **dadurch gekennzeichnet, dass** es eine oder mehrere Verbindungen der Formel II, wie in Anspruch 7 gegeben, enthält.

28. Medium nach mindestens einem der Ansprüche 18 bis 27, **dadurch gekennzeichnet, dass** es neben den Verbindungen der Formeln I und/oder II eine oder mehrere weitere mesogene Verbindungen enthält.

29. Medium nach mindestens einem der Ansprüche 18 bis 28, **dadurch gekennzeichnet, dass** das Medium
- 5% bis 80 einer oder mehrerer Verbindungen der Formel I und/oder
- 5% bis 95% einer oder mehrerer Verbindungen der Formel II und/oder
- 0% bis 30% einer oder mehrerer weiterer mesogener Verbindungen enthält.

## Claims

1. Electro-optical light modulation element comprising
- a substrate or a plurality of substrates,
- an electrode arrangement,
- at least one element or a plurality of elements for polarisation of the light and
- a modulation medium,
**characterised in that**
- the light modulation element is operated at a temperature at which the modulation medium is in an optically isotropic phase in the unaddressed state and **in that**
- the electrode arrangement can generate an electric field having a significant component parallel to the surface of the mesogenic modulation medium and **in that**
- the mesogenic modulation medium satisfies at least one of the following conditions (a) and (f) and, in the case where it only satisfies condition (a) of these two conditions (a) and (f), it additionally satisfies at least one of the following conditions (b) and (c) and, in the case where it only satisfies condition (c) of conditions (b) and (c), it satisfies at least one of the two further following conditions (d) and (e) and, in the case where it satisfies condition (f), it optionally additionally satisfies condition (g),
- (a) the modulation medium has, with increasing temperature, a transition from the nematic phase or from the cholesteric phase into the isotropic phase (T(N,I) or T(N*,I)), and the dielectric susceptibility of the modulation medium at a temperature of 4 degrees above the clearing point is 25 or more,
- (b) the enthalpy of clearing of the modulation medium is 0.78 J/g or less or
- (c) the enthalpy of clearing of the modulation medium is 1.50 J/g or less and
- (d) the dielectric susceptibility of the modulation medium at a temperature of 4 degrees above the clearing point is 27 or more, with the proviso that light modulation elements containing modulation media which comprise 8%, 10% or 12% of compound UVZG-3-N are excluded, or
- (e) the dielectric susceptibility of the modulation medium at a temperature of 4 degrees above the clearing point is 35.5 or more, with the proviso that light modulation elements containing modulation media having one of the two following compositions 1 and 2
| Composition 1 | | | Composition 2 | | |
|---|---|---|---|---|---|
| Compound | | Conc. | Compound | | Conc. |
| # | Abbreviation | / % | # | Abbreviation | / % |
| 1 | UZU-3A-N | 12.0 | 1 | UM-3-N | 10.0 |
| 2 | UZU-5A-N | 12.0 | 2 | PYP-3N.F.F | 15.0 |
| 3 | GZU-3A-N | 12.0 | 3 | UZU-3A-N | 12.0 |
| 4 | GZU-4A-N | 11.0 | 4 | GZU-3A-N | 12.0 |
| 5 | GZU-4O-N | 10.0 | 5 | GZU-4-N | 1.0 |
| 6 | UVZG-3-N | 10.0 | 6 | GZU-4O-N | 10.0 |
| 7 | CUZU-2-N | 10.0 | 7 | UVZG-3-N | 10.0 |
| 8 | CUZU-3-N | 10.0 | 8 | CUZU-2-N | 10.0 |
| 9 | CUZU-4-N | 10.0 | 9 | CUZU-3-N | 10.0 |
| 10 | HP-5N.F | 3.0 | 10 | HP-3N.F | 10.0 |
are excluded, where the abbreviations for the compounds have the meaning indicated in the application text,
- (f) the modulation medium has, with increasing temperature, a transition from the cholesteric phase (Ch, here referred to as the chiral nematic phase N*) into a blue phase (BP) at a temperature T(N*,BP) and
- (g) the dielectric susceptibility of the modulation medium at a temperature of 4 degrees above this transition temperature (T(N*,BP)) is 25 or more.

2. Light modulation element according to Claim 1, **characterised in that**
- the enthalpy of clearing of the mesogenic modulation medium is 1.10 J/g or less.

3. Light modulation element according to Claim 2, **characterised in that**
- the enthalpy of clearing of the mesogenic modulation medium is 0.70 J/g or less.

4. Light modulation element according to at least one of Claims 1 to 3,
**characterised in that**
- the dielectric susceptibility of the modulation medium at a temperature of 4 degrees above the clearing point or transition temperature (T(N*,BP) is 40 or more.

5. Light modulation element according to Claim 4, **characterised in that**
- the dielectric susceptibility of the modulation medium at a temperature of 4 degrees above the clearing point or transition temperature (T(N*,BP) is 55 or more.

6. Light modulation element according to at least one of Claims 1 to 5,
**characterised in that**
- the optical anisotropy at a temperature of 4 degrees below the clearing point or transition temperature (T(N*,BP) is 0.080 or more.

7. Light modulation element according to at least one of Claims 1 to 6, **characterised in that** the mesogenic modulation medium comprises one or more compounds of the formula I 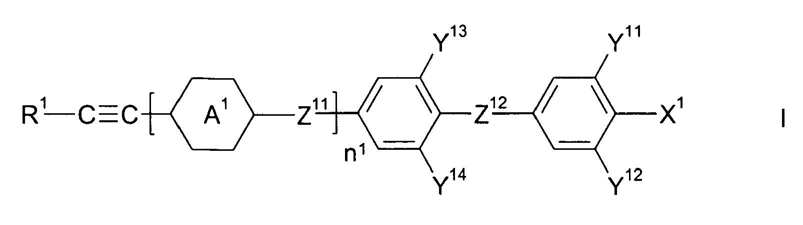 in which
R¹ denotes alkyl having 1 to 7 C atoms or oxaalkyl having 2 to 7 C atoms, 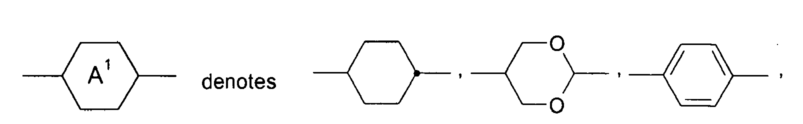 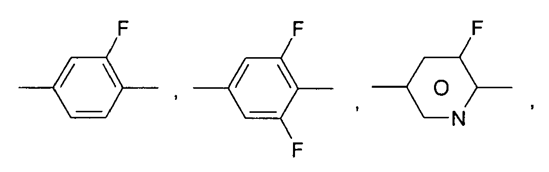 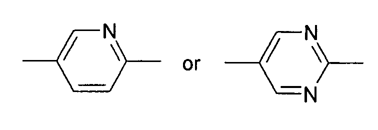
Z¹¹ and Z¹² each, independently of one another, denote a single bond, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, -CF₂-O-, -O-CF₂- or -C≡C- or a combination of two or more of these groups,
X¹ denotes F, Cl, NO₂, -OCF₃, -CF₃, -OCF₂H, Cl, CN, -C≡C-CN or NCS,
Y¹¹, Y¹², Y¹³ and Y¹⁴ each, independently of one another, denote H or F and
n¹ denotes 0 or 1.

8. Light modulation element according to at least one of Claims 1 to 7, **characterised in that** the mesogenic modulation medium comprises one or more compounds of the formula II 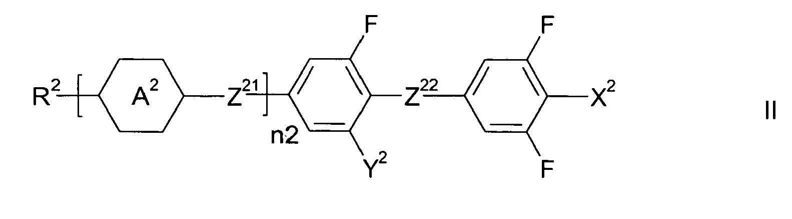 in which
R² denotes alkyl or alkoxy having 1 to 7 C atoms, alkenyl, alkenyloxy or oxaalkyl having 2 to 7 C atoms, 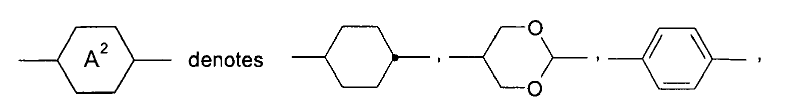 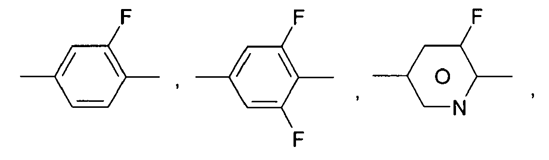 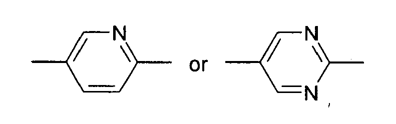
Z²¹ and Z²² each, independently of one another, denote a single bond, -CO-O-, trans -CH=CH-, -CH=CF-, -CF=CH-, -CF=CF-, -CH=CF-CO-O-, -CF₂-O-, -O-CF₂- or -C≡C- or a combination of two or more of these groups,
X² denotes F, Cl, NO₂ -OCF₃, -CF₃, -OCF₂H, Cl, CN, -C≡C-CN or NCS,
Y² denotes H or F and
n² denotes 0 or 1.

9. Light modulation element according to at least one of Claims 1 to 8, **characterised in that**, besides the compounds of the formulae I and/or II, the medium comprises one or more further mesogenic compounds.

10. Light modulation element according to at least one of Claims 1 to 9, **characterised in that** the mesogenic modulation medium comprises
- 5% to 80% of one or more compounds of the formula I and/or
- 5% to 95% of one or more compounds of the formula II and/or
- 0% to 30% of one or more further mesogenic compounds.

11. Electro-optical display containing one or more light modulation elements according to at least one of Claims 1 to 10.

12. Electro-optical display according to Claim 11, **characterised in that** the display is addressed by means of an active matrix.

13. Electro-optical display system containing one or more electro-optical displays according to at least one of Claims 11 and 12.

14. Electro-optical display system according to Claim 13, **characterised in that** it can be used as television screen, as computer monitor or as both.

15. Use of a light modulation element according to at least one of Claims 1 to 10 for the display of information.

16. Use of an electro-optical display according to at least one of Claims 11 and 12 in an electro-optical display system.

17. Use of an electro-optical display system according to at least one of Claims 13 and 14 for the display of video signals or digital signals.

18. Medium, **characterised in that** it satisfies the following condition (a) and at least one of the two further following conditions (b) and (c)
- (a) the medium has, with increasing temperature, a transition from the nematic phase or from the cholesteric phase into the isotropic phase (T(N,I) or T(N*,I)) and the enthalpy of clearing of the medium is 1.50 J/g or less, and
- (b) the dielectric susceptibility of the medium at a temperature of 4 degrees above the clearing point is 27 or more, with the proviso that media which comprise 8%, 10% or 12% of compound UVZG-3-N are excluded or
- (c) the dielectric susceptibility of the medium at a temperature of 4 degrees above the clearing point is 35.5 or more, with the proviso that media having one of the two following compositions 1 and 2
| Composition 1 | | | Composition 2 | | |
|---|---|---|---|---|---|
| Compound | | Conc. | Compound | | Conc. |
| # | Abbreviation | / % | # | Abbreviation | / % |
| 1 | UZU-3A-N | 12.0 | 1 | UM-3-N | 10.0 |
| 2 | UZU-5A-N | 12.0 | 2 | PYP-3N.F.F | 15.0 |
| 3 | GZU-3A-N | 12.0 | 3 | UZU-3A-N | 12.0 |
| 4 | GZU-4A-N | 11.0 | 4 | GZU-3A-N | 12.0 |
| 5 | GZU-40-N | 10.0 | 5 | GZU-4-N | 1.0 |
| 6 | UVZG-3-N | 10.0 | 6 | GZU-4O-N | 10.0 |
| 7 | CUZU-2-N | 10.0 | 7 | UVZG-3-N | 10.0 |
| 8 | CUZU-3-N | 10.0 | 8 | CUZU-2-N | 10.0 |
| 9 | CUZU-4-N | 10.0 | 9 | CUZU-3-N | 10.0 |
| 10 | HP-5N.F | 3.0 | 10 | HP-3N.F | 10.0 |
are excluded, where the abbreviations for the compounds have the meaning indicated in the application text
or **in that** the medium satisfies condition (d)
- (d) the modulation medium has, with increasing temperature, a transition from the cholesteric phase into a blue phase (BP) at a temperature T(N*,BP) and **in that** optionally the dielectric susceptibility of the modulation medium at a temperature of 4 degrees above this transition temperature is 25 or more.

19. Medium according to Claim 18, **characterised in that** it has an enthalpy of clearing of 1.00 J/g or less.

20. Medium according to Claim 19, **characterised in that** it has an enthalpy of clearing of 0.80 J/g or less.

21. Medium according to at least one of Claims 18 to 20, **characterised in that** the dielectric susceptibility of the medium at a temperature of 4 degrees above the clearing point or conversion temperature is 40 or more.

22. Medium according to Claim 21, **characterised in that** the dielectric susceptibility of the medium at a temperature of 4 degrees above the clearing point or conversion temperature is 55 or more.

23. Medium according to at least one of Claims 18 to 22, **characterised in that** it has a clearing point or conversion temperature in the range from -30°C to 80°C.

24. Medium according to Claim 23, **characterised in that** it has a clearing point or conversion temperature in the range from 0°C to 45°C.

25. Medium according to at least one of Claims 18 to 24, **characterised in that** the optical anisotropy of the medium at a temperature of 4 degrees below the clearing point or conversion temperature is 0.080 or more.

26. Medium according to at least one of Claims 18 to 25, **characterised in that** it comprises one or more compounds of the formula I as indicated in Claim 7.

27. Medium according to at least one of Claims 18 to 26, **characterised in that** it comprises one or more compounds of the formula II as indicated in Claim 7.

28. Medium according to at least one of Claims 18 to 27, **characterised in that**, besides the compounds of the formulae I and/or II, it comprises one or more further mesogenic compounds.

29. Medium according to at least one of Claims 18 to 28, **characterised in that** the medium comprises
- 5% to 80% of one or more compounds of the formula I and/or
- 5% to 95% of one or more compounds of the formula II and/or
- 0% to 30% of one or more further mesogenic compounds.

## Revendications

1. Elément de modulation de lumière électro-optique comprenant
- un substrat ou une pluralité de substrats,
- un agencement d'électrodes,
- au moins un élément ou une pluralité d'éléments pour la polarisation de la lumière, et
- un milieu de modulation,
**caractérisé en ce que**
- l'élément de modulation de lumière est actionné à une température à laquelle le milieu de modulation est dans une phase isotrope optiquement dans l'état non adressé et **en ce que**
- l'agencement d'électrodes peut générer un champ électrique qui présente une composante significative parallèle à la surface du milieu de modulation mésogène et **en ce que**
- le milieu de modulation mésogène satisfait au moins l'une des conditions qui suivent (a) et (f) et, dans le cas où il satisfait seulement la condition (a) de ces deux conditions (a) et (f), il satisfait de façon additionnelle au moins l'une des conditions qui suivent (b) et (c) et dans le cas où il satisfait seulement la condition (c) des conditions (b) et (c), il satisfait au moins l'une des deux autres conditions qui suivent (d) et (f) et dans le cas où il satisfait la condition (f), il satisfait de façon additionnelle en option la condition (g),
- (a) le milieu de modulation présente, avec une température croissante, une transition depuis la phase nématique ou depuis la phase cholestérique selon la phase isotrope (T(N,I) ou T(N*,I)), et la susceptibilité diélectrique du milieu de modulation à une température de 4 degrés au-delà du point de clarification est de 25 ou plus,
- (b) l'enthalpie de clarification du milieu de modulation est de 0,78 J/g ou moins ou
- (c) l'enthalpie de clarification du milieu de modulation est de 1,50 J/g ou moins et
- (d) la susceptibilité diélectrique du milieu de modulation à une température de 4 degrés au-delà du point de clarification est de 27 ou plus, étant entendu que des éléments de modulation de lumière contenant des milieux de modulation qui comprennent 8%, 10%
ou 12% d'un composé UVZG-3-N sont exclus, ou
- (e) la susceptibilité diélectrique du milieu de modulation à une température de 4 degrés au-delà du point de clarification est de 35,5 ou plus, étant entendu que des éléments de modulation de lumière contenant des milieux de modulation présentant l'une des deux compositions qui suivent 1 et 2
| Composition 1 | | | Composition 2 | | |
|---|---|---|---|---|---|
| Composé | | Conc. | Composé | | Conc. |
| # | Abréviation | / % | # | Abréviation | / % |
| 1 | UZU-3A-N | 12,0 | 1 | UM-3-N | 10,0 |
| 2 | UZU-5A-N | 12,0 | 2 | PYP-3N.F.F | 15,0 |
| 3 | GZU-3A-N | 12,0 | 3 | UZU-3A-N | 12,0 |
| 4 | GZU-4A-N | 11,0 | 4 | GZU-3A-N | 12,0 |
| 5 | GZU-4O-N | 10,0 | 5 | GZU-4-N | 1,0 |
| 6 | UVZG-3-N | 10,0 | 6 | GZU-4O-N | 10,0 |
| 7 | CUZU-2-N | 10,0 | 7 | UVZG-3-N | 10,0 |
| 8 | CUZU-3-N | 10,0 | 8 | CUZU-2-N | 10,0 |
| 9 | CUZU-4-N | 10,0 | 9 | CUZU-3-N | 10,0 |
| 10 | HP-5N.F | 3,0 | 10 | HP-3N.F | 10,0 |
sont exclus, où les abréviations pour les composés présentent la signification indiquée dans le texte de demande de brevet,
- (f) le milieu de modulation présente, avec une température croissante, une transition depuis la phase cholestérique (Ch, ici appelée phase nématique chirale N*) selon une phase bleue (BP) à une température T(N*,BP) et
- (g) la susceptibilité diélectrique du milieu de modulation à une température de 4 degrés au-delà de cette température de transition (T(N*,BP)) est de 25 ou plus.

2. Elément de modulation de lumière selon la revendication 1, **caractérisé en ce que**
- l'enthalpie de clarification du milieu de modulation mésogène est de 1,10 J/g ou moins.

3. Elément de modulation de lumière selon la revendication 2, **caractérisé en ce que**
- l'enthalpie de clarification du milieu de modulation mésogène est de 0,70 J/g ou moins.

4. Elément de modulation selon au moins l'une des revendications 1 à 3, **caractérisé en ce que**
- la susceptibilité diélectrique du milieu de modulation à une température de 4 degrés au-delà du point de clarification ou à la température de transition T(N*,BP) est de 40 ou plus.

5. Elément de modulation de lumière selon la revendication 4, **caractérisé en ce que**
- la susceptibilité diélectrique du milieu de modulation à une température de 4 degrés au-delà du point de clarification ou à la température de transition T(N*,BP) est de 55 ou plus.

6. Elément de modulation de lumière selon au moins l'une des revendications 1 à 5, **caractérisé en ce que**
- l'anisotropie optique à une température de 4 degrés au-dessous du point de clarification ou à la température de transition T(N*,BP) est 0,080 ou plus.

7. Elément de modulation de lumière selon au moins l'une des revendications 1 à 6, **caractérisé en ce que** le milieu de modulation mésogène comprend un ou plusieurs composés de la formule I 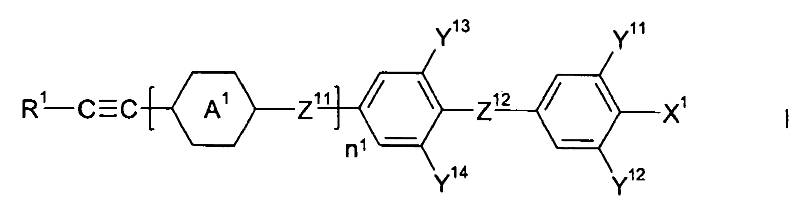 dans laquelle
R¹ représente alkyle comportant de 1 à 7 atomes de C ou oxaalkyle comportant de 2 à 7 atomes de C, 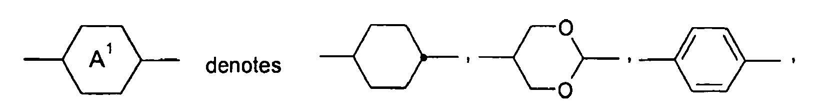 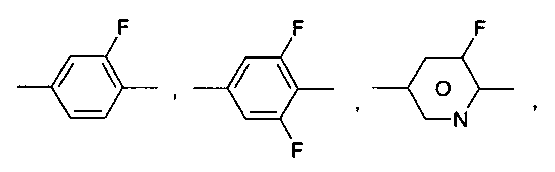 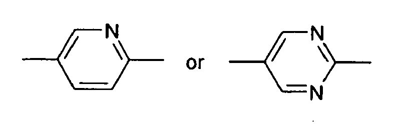
Z¹¹ et Z¹² chacun indépendamment l'un de l'autre, représentent une liaison simple, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, -CF₂-O-, -O-CF₂- ou -C=C- ou une combinaison de deux ou plus de ces groupes,
X¹ représente F, Cl, NO₂, -OCF₃, -CF₃, -OCF₂H, Cl, CN, -C≡C-CN ou NCS,
Y¹¹, Y¹², Y¹³ et Y¹⁴ chacun indépendamment les uns des autres, représentent H ou F et
n¹ représente 0 ou 1.

8. Elément de modulation de lumière selon au moins l'une des revendications 1 à 7, **caractérisé en ce que** le milieu de modulation mésogène comprend un ou plusieurs composés de la formule II 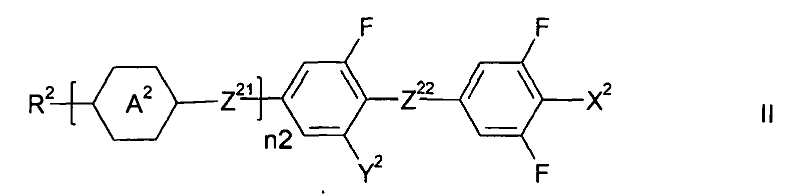 dans laquelle
R² représente alkyle ou alkoxy comportant de 1 à 7 atomes de C, alkényle, alkényloxy ou oxaalkyle comportant de 2 à 7 atomes de C, 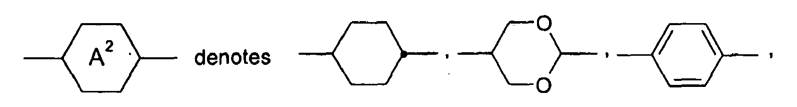 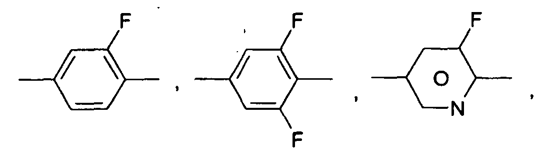 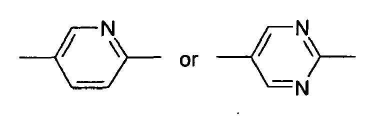
Z²¹ et Z²² chacun indépendamment l'un de l'autre, représentent une liaison simple, -CO-O-, trans -CH=CH-, -CH=CF-, -CF=CH-, -CF=CF-, -CH=CF-CO-O-, -CF₂-O-, -O-CF₂- ou -C≡C- ou une combinaison de deux ou plus de ces groupes,
X² représente F, Cl, NO₂, -OCF₃, -CF₃, -OCF₂H, Cl, CN, -C≡C-CN ou NCS,
Y² représente H ou F et
n² représente 0 ou 1.

9. Elément de modulation de lumière selon au moins l'une des revendications 1 à 8, **caractérisé en ce que**, en plus des composés des formules I et/ou II, le milieu comprend un ou plusieurs composés mésogènes supplémentaires.

10. Elément de modulation de lumière selon au moins l'une des revendications 1 à 9, **caractérisé en ce que** le milieu de modulation mésogène comprend
- de 5% à 80% d'un ou de plusieurs composés de la formule I et/ou
- de 5% à 95% d'un ou de plusieurs composés de la formule II et/ou
- de 0% à 30% d'un ou de plusieurs composés mésogènes supplémentaires.

11. Affichage électro-optique contenant un ou plusieurs éléments de modulation de lumière selon au moins l'une des revendications 1 à 10.

12. Affichage électro-optique selon la revendication 11, **caractérisé en ce que** l'affichage est adressé au moyen d'une matrice active.

13. Système d'affichage électro-optique contenant un ou plusieurs affichages électro-optiques selon au moins l'une des revendications 11 et 12.

14. Système d'affichage électro-optique selon la revendication 13, **caractérisé en ce qu'**il peut être utilisé en tant qu'écran de télévision, en tant que moniteur d'ordinateur ou en tant que les deux.

15. Utilisation d'un élément de modulation de lumière selon au moins l'une des revendications 1 à 10 pour l'affichage d'une information.

16. Utilisation d'un affichage électro-optique selon au moins l'une des revendications 11 et 12 dans un système d'affichage électro-optique.

17. Utilisation d'un système d'affichage électro-optique selon au moins l'une des revendications 13 et 14 pour l'affichage de signaux vidéo ou de signaux numériques.

18. Milieu, **caractérisé en ce qu'**il satisfait la condition qui suit (a) et au moins l'une des deux conditions qui suivent supplémentaires (b) et (c)
- (a) le milieu présente, avec une température croissante, une transition depuis la phase nématique ou depuis la phase cholestérique selon la phase isotrope (T(N,I) ou T(N*,I)) et l'enthalpie de clarification du milieu est de 1,50 J/g ou moins, et
- (b) la susceptibilité diélectrique du milieu à une température de 4 degrés au-delà du point de clarification est de 27
ou plus, étant entendu que des milieux qui comprennent 8%, 10% ou 12% du composé UVZG-3-N sont exclus ou
- (c) la susceptibilité diélectrique du milieu à une température de 4 degrés au-delà du point de clarification est de 35,5 ou plus, étant entendu que des milieux présentant l'une des deux compositions qui suivent 1 et 2
| Composition 1 | | | Composition 2 | | |
|---|---|---|---|---|---|
| Composé | | Conc. | Composé | | Conc. |
| # | Abréviation | / % | # | Abréviation | / % |
| 1 | UZU-3A-N | 12,0 | 1 | UM-3-N | 10,0 |
| 2 | UZU-5A-N | 12,0 | 2 | PYP-3N.F.F | 15,0 |
| 3 | GZU-3A-N | 12,0 | 3 | UZU-3A-N | 12,0 |
| 4 | GZU-4A-N | 11,0 | 4 | GZU-3A-N | 12,0 |
| 5 | GZU-4O-N | 10,0 | 5 | GZU-4-N | 1,0 |
| 6 | UVZG-3-N | 10,0 | 6 | GZU-4O-N | 10,0 |
| 7 | CUZU-2-N | 10,0 | 7 | UVZG-3-N | 10,0 |
| 8 | CUZU-3-N | 10,0 | 8 | CUZU-2-N | 10,0 |
| 9 | CUZU-4-N | 10,0 | 9 | CUZU-3-N | 10,0 |
| 10 | HP-5N.F | 3,0 | 10 | HP-3N.F | 10,0 |
sont exclus, où les abréviations pour les composés présentent la signification indiquée dans le texte de la demande de brevet ou **en ce que** le milieu satisfait la condition (d)
- (d) le milieu de modulation présente, avec une température croissante, une transition depuis la phase cholestérique selon une phase bleue (BP) à une température T(N*,BP) et **en ce que**, en option, la susceptibilité diélectrique du milieu de modulation à une température de 4 degrés au-delà de cette température de transition est de 25 ou plus.

19. Milieu selon la revendication 18, **caractérisé en ce qu'**il présente une enthalpie de clarification de 1,00 J/g ou moins.

20. Milieu selon la revendication 19, **caractérisé en ce qu'**il présente une enthalpie de clarification de 0,80 J/g ou moins.

21. Milieu selon au moins l'une des revendications 18 à 20, **caractérisé en ce que** la susceptibilité diélectrique du milieu à une température de 4 degrés au-delà du point de clarification ou à la température de conversion est de 40 ou plus.

22. Milieu selon la revendication 21, **caractérisé en ce que** la susceptibilité diélectrique du milieu à une température de 4 degrés au-delà du point de clarification ou à la température de conversion est de 55 ou plus.

23. Milieu selon au moins l'une des revendications 18 à 22, **caractérisé en ce qu'**il présente un point de clarification ou une température de conversion dans la plage qui va de -30°C à 80°C.

24. Milieu selon la revendication 23, **caractérisé en ce qu'**il présente un point de clarification ou une température de conversion dans la plage qui va de 0°C à 45°C.

25. Milieu selon au moins l'une des revendications 18 à 24, **caractérisé en ce que** l'anisotropie optique du milieu à une température de 4 degrés au-dessous du point de clarification ou de la température de conversion est de 0,080 ou plus.

26. Milieu selon au moins l'une des revendications 18 à 25, **caractérisé en ce qu'**il comprend un ou plusieurs composés de la formule I comme indiqué selon la revendication 7.

27. Milieu selon au moins l'une des revendications 18 à 26, **caractérisé en ce qu'**il comprend un ou plusieurs composés de la formule II comme indiqué selon la revendication 7.

28. Milieu selon au moins l'une des revendications 18 à 27, **caractérisé en ce que**, en plus des composés des formules I et/ou II, il comprend un ou plusieurs composés mésogènes supplémentaires.

29. Milieu selon au moins l'une des revendication 18 à 28, **caractérisé en ce que** le milieu comprend
- de 5 % à 80% d'un ou de plusieurs composés de la formule 1 et/ou
- de 5% à 95% d'un ou de plusieurs composés de la formule II et/ou
- de 0% à 30% d'un ou de plusieurs composés mésogènes supplémentaires.
